# EUROPEAN PATENT SPECIFICATION

(11) **EP 4 231 458 B1**
(45) Date of publication and mention of the grant of the patent: **12.08.2026**
(21) Application number: 21890998.4
(22) Date of filing: 01.11.2021
(51) Int. Cl.: H04B 7/04, H01Q 1/24, H01Q 3/46, H01Q 15/14, H01Q 19/10

(54) **REFLECTIVE SURFACE ADJUSTMENT METHOD AND RELATED APPARATUS**
VERFAHREN ZUR EINSTELLUNG EINER REFLEKTIERENDEN OBERFLÄCHE UND ZUGEHÖRIGE VORRICHTUNG
PROCÉDÉ DE RÉGLAGE DE SURFACE RÉFLÉCHISSANTE ET APPAREIL ASSOCIÉ

(30) Priority: 13.11.2020 CN 202011273386
(43) Date of publication of application: 23.08.2023
(73) Proprietor: Huawei Technologies Co., Ltd., Shenzhen, Guangdong 518129 (CN)
(72) Inventor: HUANGFU, Yourui, Shenzhen, Guangdong 518129 (CN); WANG, Jian, Shenzhen, Guangdong 518129 (CN); LI, Rong, Shenzhen, Guangdong 518129 (CN); WANG, Jun, Shenzhen, Guangdong 518129 (CN)
(74) Representative: Goddar, Heinz J.
(86) International application number: PCT/CN2021/127921
(87) International publication number: WO 2022/100471

(56) References cited:
- CN-A- 110 278 017
- CN-A- 111 181 662
- CN-A- 111 211 824
- CN-A- 111 245 494
- CN-A- 111 641 955
- CN-A- 111 818 533
- HUANG CHONGWEN ET AL: "Indoor Signal Focusing with Deep Learning Designed Reconfigurable Intelligent Surfaces", 2019 IEEE 20TH INTERNATIONAL WORKSHOP ON SIGNAL PROCESSING ADVANCES IN WIRELESS COMMUNICATIONS (SPAWC), IEEE, 2 July 2019 (2019-07-02), pages 1 - 5, XP033605734, DOI: 10.1109/SPAWC.2019.8815412
- TUAN VAN PHU; HONG IC PYO: "Secrecy Performance Analysis and Optimization of Intelligent Reflecting Surface-Aided Indoor Wireless Communications", IEEE ACCESS, IEEE, USA, vol. 8, 13 June 2020 (2020-06-13), USA , pages 109440 - 109452, XP011795308, DOI: 10.1109/ACCESS.2020.3002382

## Description

### TECHNICAL FIELD

This application relates to the field of communication technologies, and in particular, to a reflective surface adjustment method and a related apparatus.

### BACKGROUND

In today's society, an increasingly high requirement is imposed on a data transmission rate. To meet a user requirement, in addition to changing a transmission mechanism of a wireless device to adapt to an environment, a radio environment may be further changed to increase a data transmission rate and change a condition of a radio channel, so as to meet network requirements of an ultra-high rate and an ultra-low delay.

Currently, the following technical solution is mainly used to reconstruct a radio environment: A smart reflective surface perceives a current channel environment, obtains channel information through channel estimation, determines, based on the channel information and a neural network, a codebook for adjusting the smart reflective surface, and adjusts the smart reflective surface by using the codebook, to reconstruct a radio environment within a coverage area of a reflected signal of the smart reflective surface.

It can be learned from the foregoing solution that the smart reflective surface obtains the channel information through channel estimation, and then determines, based on the channel information and the neural network, the codebook for adjusting the smart reflective surface. However, the smart reflective surface needs to be connected to a baseband to estimate a channel to obtain channel information. That is, the foregoing solution for adjusting the smart reflective surface is complex. In addition, from a perspective of hardware implementation, the smart reflective surface needs to have a channel estimation function, leading to high hardware complexity of the smart reflective surface.
HUANG CHONGWEN ET AL: "Indoor Signal Focusing with Deep Learning Designed Reconfigurable Intelligent Surfaces", 2019 IEEE 20TH INTERNATIONAL WORKSHOP ON SIGNAL PROCESSING ADVANCES IN WIRELESS COMMUNICATIONS (SPAWC), IEEE, 2 July 2019, pages 1-5, discloses a Deep Neural Network (DNN)-based method for online wireless configuration of Reconfigurable Intelligent Surfaces (RISs) in indoor communication environments. Leveraging a properly designed fingerprinting database, the DNN is trained during an offline phase to estimate the mapping between a user's position and the configuration of the RIS's unit cells that maximizes this user's received signal strength. The designed DNN is fed during the online phase with the estimation of the coordinate information at a user location to output the desired RIS configuration. Our simulation results on a 3D office environment showcased that deep learning configured intelligent surfaces can effectively focus signal transmissions to intended user locations yielding good MSE performance for the RIS phase matrix.

### SUMMARY

Embodiments of this application provide a reflective surface adjustment method and a related apparatus, so that a first reflection apparatus determines a first reflective surface adjustment parameter based on first location gravity center information, and adjusts a first reflective surface included in the first reflection apparatus based on the first reflective surface adjustment parameter, to reconstruct a radio environment within a coverage area of a reflected signal of the first reflective surface.

A first aspect of embodiments of this application provides a reflective surface adjustment method of claim 1. The method is applied to a first reflection apparatus. The first reflection apparatus includes a first reflective surface. The reflective surface adjustment method includes:

The first reflection apparatus obtains first location gravity center information, where the first location gravity center information includes a weighted location of a terminal device within a coverage area of a reflected signal of the first reflective surface. Then the first reflection apparatus determines a first input parameter based on the first location gravity center information, and inputs the first input parameter to a first neural network model to obtain a first reflective surface adjustment parameter. The first reflection apparatus adjusts the first reflective surface based on the first reflective surface adjustment parameter.

In this embodiment, the first reflection apparatus uses the first location gravity center information to represent a radio environment within the coverage area of the reflected signal of the first reflective surface. The first reflection apparatus adjusts the first reflective surface based on the first location gravity center information to reconstruct the radio environment within the coverage area of the reflected signal of the first reflective surface, so as to increase a network throughput and improve channel transmission quality. In addition, compared with a conventional solution, in this embodiment of this application, channel estimation does not need to be performed to obtain channel information. From a perspective of hardware, hardware complexity of the first reflection apparatus is low.

In a possible implementation, that the first reflection apparatus obtains first location gravity center information includes: The first reflection apparatus obtains the first location gravity center information from an access network device; or the first reflection apparatus determines the first location gravity center information based on a location of the terminal device within the coverage area of the reflected signal of the first reflective surface, where the location of the terminal device within the coverage area of the reflected signal of the first reflective surface is fed back by the terminal device, fed back by a location detector, or obtained from a photo of the coverage area of the reflected signal of the first reflective surface.

In this possible implementation, a plurality of implementations of obtaining the first location gravity center information by the first reflection apparatus are described. This provides a basis for implementing the solution.

In another possible implementation, the location of the terminal device within the coverage area of the reflected signal of the first reflective surface includes: a sequence number of a sub-grid corresponding to each terminal device within the coverage area of the reflected signal of the first reflective surface, where each sub-grid corresponds to one coordinate location range; or a coordinate location corresponding to each terminal device.

In this possible implementation, a specific representation of the location of the terminal device is provided, and the location may be represented by a sub-grid or a coordinate location. To reduce signaling transmission overheads, a sub-grid may be set as location change precision of the terminal device, to avoid frequent changes of location gravity center information of the terminal device, reduce overheads of signaling used by the terminal device and the first reflection apparatus to transmit the location of the terminal device, reduce frequency of adjusting the first reflective surface by the first reflection apparatus, and reduce energy consumption. However, when a coordinate location is used as location change precision of the terminal device, the precision is high. In this way, for a location change of the terminal device within a small range, the first reflection apparatus can adjust the first reflective surface, so that the radio environment within the coverage area of the reflected signal of the first reflective surface is optimized.

In another possible implementation, the method further includes: The first reflection apparatus sends a reconstruction weight of the first reflective surface to the access network device.

In this possible implementation, the first reflection apparatus feeds back the reconstruction weight to the access network device, so that the access network device can calculate, based on the reconstruction weight, the weighted location of the terminal device within the coverage area of the reflected signal of the first reflective surface, and then report the weighted location to the first reflection apparatus. In this way, the first reflection apparatus does not need to calculate the weighted location. In addition, the access network device reports the weighted location to the first reflection apparatus only when determining, through calculation, that the weighted location of the terminal device within the coverage area of the reflected signal of the first reflective surface changes. This prevents the access network device from reporting the location of the terminal device to the first reflection apparatus each time the location of the terminal device changes, and therefore reduces signaling overheads and energy consumption.

In another possible implementation, the first reflective surface includes a reflection unit, the first reflective surface adjustment parameter includes an adjustment parameter for adjusting the reflection unit, and that the first reflection apparatus adjusts the first reflective surface based on the first reflective surface adjustment parameter includes: The first reflection apparatus adjusts the reflection unit based on the adjustment parameter for adjusting the reflection unit.

In this possible implementation, the first reflection apparatus adjusts the reflection unit of the first reflective surface to reconstruct the radio environment of the terminal device within the coverage area of the reflected signal of the first reflective surface, so as to optimize the radio environment.

In another possible implementation, that the first reflection apparatus adjusts the reflection unit based on the adjustment parameter for adjusting the reflection unit includes: The first reflection apparatus adjusts any one or more of the following items of the reflection unit based on the adjustment parameter for adjusting the reflection unit: a voltage of the reflection unit, or a resistance of the reflection unit.

In this possible implementation, the reflection unit is a passive device, and the first reflection apparatus adjusts the voltage or the resistance of the reflection unit to adjust a phase and an amplitude of a reflected signal of the reflection unit, so as to reconstruct the radio environment within the coverage area of the reflected signal of the first reflective surface.

In another possible implementation, the first reflective surface adjustment parameter further includes an adjustment parameter for adjusting a mounting location of the first reflective surface, and that the first reflection apparatus adjusts the first reflective surface based on the first reflective surface adjustment parameter includes:
the first reflection apparatus adjusts the mounting location of the first reflective surface based on the adjustment parameter for adjusting the mounting location of the first reflective surface.

In this possible implementation, the first reflection apparatus may further adjust the mounting location of the first reflective surface, to further optimize the radio environment within the coverage area of the reflected signal of the first reflective surface, and further increase a network throughput and improve network communication performance.

In another possible implementation, the mounting location of the first reflective surface includes any one or more of the following: a height, a latitude and a longitude, a downtilt angle, an azimuth angle, or a pitch angle of the first reflective surface.

In this possible implementation, specific content of the mounting location of the first reflective surface is described.

In another possible implementation, the first reflective surface includes a plurality of reflection units, the first reflective surface adjustment parameter includes an adjustment parameter of a first reflection unit set, the first reflection unit set includes some of the plurality of reflection units, and the method further includes: The first reflection apparatus determines a second input parameter based on the first location gravity center information and the first reflective surface adjustment parameter. Then the first reflection apparatus inputs the second input parameter to the first neural network model to obtain a second reflective surface adjustment parameter, where the second reflective surface adjustment parameter includes an adjustment parameter for adjusting a second reflection unit set, and the second reflection unit set includes some or all of reflection units of the first reflective surface other than the some reflection units included in the first reflection unit set. The first reflection apparatus adjusts the reflection units in the second reflection unit set of the first reflective surface based on the second reflective surface adjustment parameter.

In this possible implementation, the first reflection apparatus adjusts the first reflective surface in one round, and the one round may include a plurality of time steps. The first reflective surface is adjusted through the plurality of time steps to more effectively reconstruct the radio environment within the coverage area of the reflected signal of the first reflective surface, so as to increase a network throughput and improve network communication performance.

In another possible implementation, the method further includes: The first reflection apparatus receives weighted performance indicator feedback information from the access network device, where the weighted performance indicator feedback information includes a performance indicator of a terminal device within a coverage area of a reflected signal of the first reflective surface after the first reflective surface is adjusted based on the first reflective surface adjustment parameter.

In this possible implementation, the access network device may feed back the weighted performance indicator feedback information to the first reflection apparatus, so that the first reflection apparatus determines the performance indicator of the terminal device within the coverage area of the reflected signal of the first reflective surface after the first reflective surface is adjusted based on the first reflective surface adjustment parameter.

In another possible implementation, the weighted performance indicator feedback information includes at least one of the following: a weighted average transmission rate, a weighted packet error rate, a weighted signal to interference plus noise ratio, weighted reference signal received power (reference signal received power, RSRP), or weighted reference signal received quality (reference signal received quality, RSRQ).

In this possible implementation, some parameters that can reflect some specific performance indicators of current transmission performance of the terminal device are described, to facilitate implementation of the solution.

In another possible implementation, the method further includes: The first reflection apparatus sends an adjustment time point of the first reflective surface to the access network device; and the first reflection apparatus determines, based on the adjustment time point, to perform the step of adjusting the first reflective surface based on the first reflective surface adjustment parameter.

In this possible implementation, a specific manner of negotiating, by the first reflection apparatus and the access network device, upon a time point at which the first reflective surface is to be adjusted is provided, so that the first reflection apparatus adjusts the first reflective surface based on an adjustment time point determined through negotiation.

In another possible implementation, the method further includes: The first reflection apparatus receives, from the access network device, information for indicating the first reflection apparatus to adjust the first reflective surface; and the first reflection apparatus determines, based on the information for indicating the first reflection apparatus to adjust the first reflective surface, to perform the step of adjusting the first reflective surface based on the first reflective surface adjustment parameter.

In this possible implementation, another specific manner of negotiating, by the first reflection apparatus and the access network device, upon a time point at which the first reflective surface is to be adjusted is provided, so that the first reflection apparatus adjusts the first reflective surface based on an adjustment time point determined through negotiation.

In another possible implementation, the coverage area of the reflected signal of the first reflective surface includes a part or all of a signal coverage area of each of a plurality of access network devices, and that the first reflection apparatus obtains first location gravity center information includes: The first reflection apparatus receives location gravity center information sent by each access network device; and the first reflection apparatus determines the first location gravity center information based on the location gravity center information sent by each access network device.

In this possible implementation, if the coverage area of the reflected signal of the first reflective surface includes a part or all of a signal coverage area of each of the plurality of access network devices, the first reflection apparatus receives location gravity center information reported by the plurality of access network devices, and then determines the first location gravity center information.

In another possible implementation, the method further includes: The first reflection apparatus obtains historical location gravity center information, a historical reflective surface adjustment parameter, and historical weighted performance indicator feedback information, where the historical location gravity center information includes N pieces of location gravity center information, the historical reflective surface adjustment parameter includes N reflective surface adjustment parameters, the historical weighted performance indicator feedback information includes N pieces of weighted performance indicator feedback information, and N is an integer greater than or equal to 1; the N pieces of location gravity center information, the N historical reflective surface adjustment parameters, and the N pieces of weighted performance indicator feedback information are in a one-to-one correspondence; the N pieces of location gravity center information include weighted locations, reported by the access network device at different time, of the terminal device within the coverage area of the reflected signal of the first reflective surface; each of the N reflective surface adjustment parameters includes an adjustment parameter that is used to adjust the first reflective surface and that is obtained by the first reflection apparatus through decision-making based on location gravity center information corresponding to the reflective surface adjustment parameter; and each of the N pieces of weighted performance indicator feedback information includes a performance indicator of a terminal device within a coverage area of a reflected signal of the first reflective surface after the first reflective surface is adjusted based on a reflective surface adjustment parameter corresponding to each piece of weighted performance indicator feedback information. The first reflection apparatus updates a second neural network model based on the historical location gravity center information, the historical reflective surface adjustment parameter, and the historical weighted performance indicator feedback information, to obtain the first neural network model.

In this possible implementation, a specific implementation of updating the second neural network model by the first reflection apparatus is provided. In this way, after the first reflective surface is subsequently adjusted based on a reflective surface adjustment parameter obtained through inference by using the first neural network model obtained through the update, the radio environment within the coverage area of the reflected signal of the first reflective surface is optimized, to improve network communication performance.

In another possible implementation, that the first reflection apparatus updates a second neural network model based on the historical location gravity center information, the historical reflective surface adjustment parameter, and the historical weighted performance indicator feedback information, to obtain the first neural network model includes: The first reflection apparatus estimates a weighted performance indicator expectation based on a third neural network model, an i^{th} piece of location gravity center information of the historical location gravity center information, and an i^{th} reflective surface adjustment parameter of the historical reflective surface adjustment parameter. The first reflection apparatus updates the second neural network model based on the weighted performance indicator expectation, the i^{th} piece of location gravity center information, and the i^{th} reflective surface adjustment parameter, to obtain the first neural network model, where i is an integer greater than or equal to 1 and less than or equal to N.

In this possible implementation, a specific update process of updating the second neural network model by the first reflection apparatus is provided, and the weighted performance indicator expectation is estimated to update the second neural network model. In this way, after the first reflective surface is subsequently adjusted based on a reflective surface adjustment parameter obtained through inference by using the first neural network model obtained through the update, a radio environment within a coverage area of a reflected signal of the first reflective surface is optimized, to improve network communication performance.

In another possible implementation, the method further includes: The first reflection apparatus updates the third neural network model based on the historical location gravity center information, the historical reflective surface adjustment parameter, and the historical weighted performance indicator feedback information.

In this possible implementation, the first reflection apparatus may update the third neural network model based on historical training data, so that the first reflection apparatus can accurately estimate the weighted performance indicator expectation by using the third neural network model, and the first reflection apparatus updates the second neural network model.

In another possible implementation, each of the N reflective surface adjustment parameters further includes an adjustment parameter for adjusting the mounting location of the first reflective surface.

In this possible implementation, during training, the reflective surface adjustment parameter further includes the adjustment parameter for adjusting the mounting location of the first reflective surface. In this way, the mounting location of the first reflective surface can be more effectively adjusted based on the reflective surface adjustment parameter obtained by the first reflection apparatus through inference by using the first neural network model, to further optimize the radio environment within the coverage area of the reflected signal of the first reflective surface, and improve network communication performance.

In another possible implementation, the method further includes: The first reflection apparatus obtains second location gravity center information and a third reflective surface adjustment parameter, where the second location gravity center information includes a weighted location of a terminal device within a coverage area of a reflected signal of a second reflective surface included in a second reflection apparatus, the third reflective surface adjustment parameter is a reflective surface adjustment parameter that is used to adjust the second reflective surface and that is determined by the second reflection apparatus based on the second location gravity center information, and there is an intersection between the coverage area of the reflected signal of the second reflective surface and the coverage area of the reflected signal of the first reflective surface. That the first reflection apparatus updates a second neural network model based on the historical location gravity center information, the historical reflective surface adjustment parameter, and the historical weighted performance indicator feedback information, to obtain the first neural network model includes: The first reflection apparatus updates the second neural network model based on the historical location gravity center information, the historical reflective surface adjustment parameter, the historical weighted performance indicator feedback information, the second location gravity center information, and the third reflective surface adjustment parameter, to obtain the first neural network model.

In this possible implementation, in a scenario in which there are a plurality of reflection apparatuses, there is an intersection between the coverage area of the reflected signal of the first reflective surface and the coverage area of the reflected signal of the second reflective surface. The first reflection apparatus and the second reflection apparatus may exchange location gravity center information and a reflective surface adjustment parameter. The first reflection apparatus may update the second neural network model based on the second location gravity center information and the third reflective surface adjustment parameter of the second reflection apparatus, to obtain the first neural network model. Then the first reflection apparatus obtains the first reflective surface adjustment parameter through inference by using the first neural network model and the first location gravity center information, and then the first reflective surface adjusts the first reflective surface, so that a plurality of reflective surfaces jointly optimize a radio environment to increase a signal-to-noise ratio or an average throughput and improve network communication performance.

In another possible implementation, the method further includes: The first reflection apparatus obtains second location gravity center information and a third reflective surface adjustment parameter, where the second location gravity center information includes a weighted location of a terminal device within a coverage area of a reflected signal of a second reflective surface included in a second reflection apparatus, the third reflective surface adjustment parameter is a reflective surface adjustment parameter that is used to adjust the second reflective surface and that is determined by the second reflection apparatus based on the second location gravity center information, and there is an intersection between the coverage area of the reflected signal of the second reflective surface and the coverage area of the reflected signal of the first reflective surface. That the first reflection apparatus updates the third neural network model based on the historical location gravity center information, the historical reflective surface adjustment parameter, and the historical weighted performance indicator feedback information includes: The first reflection apparatus updates the third neural network model based on the historical location gravity center information, the historical reflective surface adjustment parameter, the historical weighted performance indicator feedback information, the second location gravity center information, and the third reflective surface adjustment parameter.

In this possible implementation, in a scenario in which there are a plurality of reflection apparatuses, there is an intersection between the coverage area of the reflected signal of the first reflective surface and the coverage area of the reflected signal of the second reflective surface. The first reflection apparatus and the second reflection apparatus may exchange location gravity center information and a reflective surface adjustment parameter. The first reflection apparatus may update the third neural network model based on the second location gravity center information and the third reflective surface adjustment parameter of the second reflection apparatus. In this way, the first reflection apparatus can accurately estimate the weighted performance indicator by using the third neural network model, the i^{th} piece of location gravity center information, and an i^{th} piece of weighted performance indicator feedback information.

In another possible implementation, that the first reflection apparatus obtains second location gravity center information and a third reflective surface adjustment parameter includes: The first reflection apparatus receives the second location gravity center information and the third reflective surface adjustment parameter that are sent by the second reflection apparatus or the access network device.

In this possible implementation, two possible manners of obtaining, by the first reflection apparatus, location gravity center information and a reflective surface adjustment parameter of another reflection apparatus are described.

In another possible implementation, the method further includes: The first reflection apparatus sends configuration information of the first reflection apparatus to the access network device. The configuration information includes at least one of the following:
an adjustment cycle of the first reflective surface, whether adjustment of the first reflective surface is controlled by the access network device, precision of location gravity center information, a performance indicator feedback type definition, a reconstruction weight of the first reflective surface, an identifier of a reflective surface adjustment parameter used by the first reflection apparatus in an adjustment parameter set, and a type of the first reflective surface, where the adjustment cycle is used to indicate an adjustment cycle of adjusting the first reflective surface by the first reflection apparatus, the precision of location gravity center information is used to indicate a degree of sensitivity of the first reflection apparatus to a location change of the terminal device within the coverage area of the reflected signal of the first reflective surface, the performance indicator feedback type definition is used to indicate a type of a performance indicator that the first reflection apparatus requires to be fed back, and the reconstruction weight is used to indicate a specified reconstruction weight of the first reflection apparatus.

In this possible implementation, the first reflection apparatus may feed back the configuration information to the access network device, so that the access network device better schedules the first reflection apparatus or indicates the first reflection apparatus to adjust the first reflective surface.

In another possible implementation, the method further includes: The first reflection apparatus receives, from the access network device, information for indicating the first reflection apparatus to adjust the first reflective surface; and the first reflection apparatus sends third location gravity center information and a fourth reflective surface adjustment parameter to the second reflection apparatus or the access network device. The third location gravity center information includes a weighted location, stored in the first reflection apparatus, of the terminal device within the coverage area of the reflected signal of the first reflective surface at a first sending moment. The first sending moment is a sending moment at which the first reflection apparatus sends the third location gravity center information and the fourth reflective surface adjustment parameter. The fourth reflective surface adjustment parameter is a reflective surface adjustment parameter that is used to adjust the first reflective surface and that is determined by the first reflection apparatus based on the third location gravity center information.

In this possible implementation, a specific scenario in which the first reflection apparatus and the second reflection apparatus exchange location gravity center information and a weighted location are described. The exchange may be performed in a process in which the access network device schedules the first reflection apparatus and the second reflection apparatus.

In another possible implementation, the method further includes: The first reflection apparatus sends, to the access network device, information for indicating that the first reflection apparatus ends adjustment of the first reflective surface.

A second aspect of embodiments of this application provides a reflective surface adjustment method of claim 13. The reflective surface adjustment method includes:

An access network device sends first location gravity center information to a first reflection apparatus, where the first location gravity center information includes a weighted location of a terminal device within a coverage area of a reflected signal of a first reflective surface of the first reflection apparatus. Then the access network device sends weighted performance indicator feedback information to the first reflection apparatus, where the weighted performance indicator feedback information is used to indicate a performance indicator of a terminal device within a coverage area of a reflected signal of the first reflective surface after the first reflection apparatus adjusts the first reflective surface based on a first reflective surface adjustment parameter, and the first reflective surface adjustment parameter is determined by the first reflection apparatus based on the first location gravity center information.

In this embodiment, the access network device reports the first location gravity center information to the first reflection apparatus, where the first location gravity center information can reflect a radio environment within the coverage area of the reflected signal of the first reflective surface. In this case, the first reflection apparatus determines a first input parameter of a first neural network model based on the first location gravity center information, inputs the first input parameter to the first neural network model to obtain the first reflective surface adjustment parameter, and adjusts the first reflective surface based on the first reflective surface adjustment parameter. The access network device reports the weighted performance indicator feedback information, so that the first reflection apparatus determines the performance indicator of the terminal device within the coverage area of the reflected signal of the first reflective surface after the first reflective surface is adjusted based on the first reflective surface adjustment parameter. In the technical solution of this embodiment of this application, the solution for adjusting the first reflective surface is simple. The first reflective surface is adjusted to reconstruct the radio environment within the coverage area of the reflected signal of the first reflective surface, so as to increase a network throughput and improve channel transmission quality. In addition, compared with a conventional solution, in this embodiment of this application, channel estimation does not need to be performed to obtain channel information. From a perspective of hardware, hardware complexity of the first reflection apparatus is low.

In a possible implementation, the method further includes: The access network device receives a reconstruction weight sent by the first reflection apparatus; and the access network device determines the first location gravity center information based on the reconstruction weight and a location of the terminal device within the coverage area of the reflected signal of the first reflective surface.

In this possible implementation, the first reflection apparatus feeds back the reconstruction weight to the access network device, so that the access network device can calculate, based on the reconstruction weight, the weighted location of the terminal device within the coverage area of the reflected signal of the first reflective surface, and then report the weighted location to the first reflection apparatus. In this way, the first reflection apparatus does not need to calculate the weighted location. In addition, the access network device reports the weighted location to the first reflection apparatus only when determining, through calculation, that the weighted location of the terminal device within the coverage area of the reflected signal of the first reflective surface changes. This prevents the access network device from reporting the location of the terminal device to the first reflection apparatus each time the location of the terminal device changes, and therefore reduces signaling overheads and energy consumption.

In another possible implementation, the location of the terminal device within the coverage area of the reflected signal of the first reflective surface includes: a sequence number of a sub-grid corresponding to each of terminal devices within the coverage area of the reflected signal of the first reflective surface, where each sub-grid corresponds to one coordinate location range; or a coordinate location corresponding to each terminal device.

In this possible implementation, a specific representation of the location of the terminal device is provided, and the location may be represented by a sub-grid or a coordinate location. To reduce signaling transmission overheads, a sub-grid may be set as location change precision of the terminal device, to avoid frequent changes of location gravity center information of the terminal device, reduce overheads of signaling used by the terminal device and the first reflection apparatus to transmit the location of the terminal device, reduce frequency of adjusting the first reflective surface by the first reflection apparatus, and reduce energy consumption. However, when a coordinate location is used as location change precision of the terminal device, the precision is high. In this way, for a location change of the terminal device within a small range, the first reflection apparatus can adjust the first reflective surface, so that the radio environment within the coverage area of the reflected signal of the first reflective surface is optimized.

In another possible implementation, the method further includes: The access network device receives an adjustment time point, sent by the first reflection apparatus, of the first reflective surface. That the access network device sends weighted performance indicator feedback information to the first reflection apparatus includes: The access network device sends the weighted performance indicator feedback information to the first reflection apparatus based on the adjustment time point.

In this possible implementation, a specific manner of negotiating, by the first reflection apparatus and the access network device, upon a time point at which the first reflective surface is to be adjusted is provided, so that the first reflection apparatus adjusts the first reflective surface based on an adjustment time point determined through negotiation.

In another possible implementation, the method further includes: The access network device sends, to the first reflection apparatus, information for indicating the first reflection apparatus to adjust the first reflective surface; and the access network device determines, based on a second sending moment, an adjustment time point at which the first reflection apparatus is to adjust the first reflective surface, where the second sending moment is a sending moment at which the access network device sends, to the first reflection apparatus, the information for indicating the first reflection apparatus to adjust the first reflective surface. That the access network device sends weighted performance indicator feedback information to the first reflection apparatus includes: The access network device sends the weighted performance indicator feedback information to the first reflection apparatus based on the adjustment time point.

In this possible implementation, another specific manner of negotiating, by the first reflection apparatus and the access network device, upon a time point at which the first reflective surface is to be adjusted is provided, so that the first reflection apparatus adjusts the first reflective surface based on an adjustment time point determined through negotiation.

In another possible implementation, the method further includes: The access network device sends, to the first reflection apparatus at a third sending moment, information for indicating the first reflection apparatus to adjust the first reflective surface, and sends, to a second reflection apparatus at a fourth sending moment, information for indicating the second reflection apparatus to adjust a second reflective surface of the second reflection apparatus. The access network device receives second location gravity center information and a third reflective surface adjustment parameter that are sent by the second reflection apparatus, where the second location gravity center information is a weighted location, stored in the second reflection apparatus, of a terminal device within a coverage area of a reflected signal of the second reflective surface at a fifth sending moment, the fifth sending moment is a sending moment at which the second reflection apparatus sends the second location gravity center information, and the third reflective surface adjustment parameter is a reflective surface adjustment parameter that is used to adjust the second reflective surface and that is determined by the second reflection apparatus based on the second location gravity center information. The access network device sends the second location gravity center information and the third reflective surface adjustment parameter to the first reflection apparatus. The access network device receives third location gravity center information and a fourth reflective surface adjustment parameter that are sent by the first reflection apparatus, where the third location gravity center information includes a weighted location, stored in the first reflection apparatus, of the terminal device within the coverage area of the reflected signal of the first reflective surface at a first sending moment, the first sending moment is a sending moment at which the first reflection apparatus sends the third location gravity center information and the fourth reflective surface adjustment parameter, and the fourth reflective surface adjustment parameter is a reflective surface adjustment parameter that is used to adjust the first reflective surface and that is determined by the first reflection apparatus based on the third location gravity center information.

In this possible implementation, information is exchanged between a plurality of reflection apparatuses through the access network device. This provides a basis for jointly optimizing a radio environment by the plurality of reflection apparatuses.

In another possible implementation, the method further includes: The access network device receives, at a first receiving moment, information that is sent by the first reflection apparatus and that is used to indicate that the first reflection apparatus ends adjustment of the first reflective surface; and the access network device receives, at a second receiving moment, information that is sent by the second reflection apparatus and that is used to indicate that the second reflection apparatus ends adjustment of the second reflective surface. There is an intersection between a first time period and a second time period. The first time period is a time period between the third sending moment and the first receiving moment. The second time period is a time period between the fourth sending moment and the second receiving moment.

In this possible implementation, a manner of scheduling, by the access network device, the first reflection apparatus to schedule a reflective surface and the second reflection apparatus to schedule a reflective surface is described. The first reflection apparatus and the second reflection apparatus simultaneously adjust reflective surfaces in an intersection part of the first time period and the second time period, so that a plurality of reflection apparatuses jointly optimize a radio environment.

In another possible implementation, the method further includes: The access network device sends, to the first reflection apparatus, information for indicating the first reflection apparatus to adjust the first reflective surface. When a preset condition is met, the access network device sends, to the second reflection apparatus, information for indicating the second reflection apparatus to adjust the second reflective surface of the second reflection apparatus.

The preset condition includes any one of the following:
the access network device sends, to the first reflection apparatus, information for indicating the first reflection apparatus to end adjustment of the first reflective surface; or
the access network device receives information that is sent by the first reflection apparatus and that is used to indicate that the first reflection apparatus ends adjustment of the first reflective surface.

In this possible implementation, another manner of scheduling, by the access network device, the first reflection apparatus to schedule a reflective surface and the second reflection apparatus to schedule a reflective surface is described.

In another possible implementation, the method further includes: The access network device receives configuration information of the first reflection apparatus that is sent by the first reflection apparatus. The configuration information includes at least one of the following: an adjustment cycle of the first reflective surface, whether adjustment of the first reflective surface is controlled by the access network device, precision of location gravity center information, a performance indicator feedback type definition, a reconstruction weight of the first reflective surface, an identifier of a reflective surface adjustment parameter used by the first reflection apparatus in an adjustment parameter set, and a type of the first reflective surface. The adjustment cycle is used to indicate an adjustment cycle of adjusting the first reflective surface by the first reflection apparatus. The precision of location gravity center information is used to indicate a degree of sensitivity of the first reflection apparatus to a location change of the terminal device within the coverage area of the reflected signal of the first reflective surface. The performance indicator feedback type definition is used to indicate a type of a performance indicator that the first reflection apparatus requires to be fed back.

In this possible implementation, the first reflection apparatus may feed back the configuration information to the access network device, so that the access network device better schedules the first reflection apparatus or indicates the first reflection apparatus to adjust the first reflective surface.

A third aspect of embodiments of this application provides a first reflection apparatus of claim 14. The first reflection apparatus includes a first reflective surface. The first reflection apparatus includes:
an obtaining unit, configured to obtain first location gravity center information, where the first location gravity center information includes a weighted location of a terminal device within a coverage area of a reflected signal of the first reflective surface; and
a decision unit, configured to determine a first input parameter based on the first location gravity center information, input the first input parameter to a first neural network model to obtain a first reflective surface adjustment parameter, and adjust the first reflective surface based on the first reflective surface adjustment parameter.

In a possible implementation, the obtaining unit is specifically configured to:
obtain the first location gravity center information from an access network device, or determine the first location gravity center information based on a location of the terminal device within the coverage area of the reflected signal of the first reflective surface, where
the location of the terminal device within the coverage area of the reflected signal of the first reflective surface is fed back by the terminal device, fed back by a location detector, or obtained from a photo of the coverage area of the reflected signal of the first reflective surface.

In another possible implementation, the location of the terminal device within the coverage area of the reflected signal of the first reflective surface includes: a sequence number of a sub-grid corresponding to each terminal device within the coverage area of the reflected signal of the first reflective surface, where each sub-grid corresponds to one coordinate location range; or a coordinate location corresponding to each terminal device.

In another possible implementation, the first reflection apparatus further includes a sending unit, and the sending unit is configured to:
send a reconstruction weight of the first reflective surface to the access network device.

In another possible implementation, the first reflective surface includes a reflection unit, the first reflective surface adjustment parameter includes an adjustment parameter for adjusting the reflection unit, and the decision unit is specifically configured to adjust the reflection unit based on the adjustment parameter for adjusting the reflection unit.

In another possible implementation, the decision unit is specifically configured to:
adjust any one or more of the following items of the reflection unit based on the adjustment parameter for adjusting the reflection unit: a voltage of the reflection unit, or a resistance of the reflection unit.

In another possible implementation, the first reflective surface adjustment parameter further includes an adjustment parameter for adjusting a mounting location of the first reflective surface, and the decision unit is specifically configured to:
adjust the mounting location of the first reflective surface based on the adjustment parameter for adjusting the mounting location of the first reflective surface.

In another possible implementation, the mounting location of the first reflective surface includes any one or more of the following: a height, a latitude and a longitude, a downtilt angle, an azimuth angle, or a pitch angle of the first reflective surface.

In another possible implementation, the first reflective surface includes a plurality of reflection units, the first reflective surface adjustment parameter includes an adjustment parameter of a first reflection unit set, and the first reflection unit set includes some of the plurality of reflection units;
the decision unit is further configured to determine a second input parameter based on the first location gravity center information and the first reflective surface adjustment parameter, and input the second input parameter to the first neural network model to obtain a second reflective surface adjustment parameter, where
the second reflective surface adjustment parameter includes an adjustment parameter for adjusting a second reflection unit set, and the second reflection unit set includes some or all of reflection units of the first reflective surface other than the some reflection units included in the first reflection unit set; and
the decision unit is further configured to adjust the reflection units in the second reflection unit set of the first reflective surface based on the second reflective surface adjustment parameter.

In another possible implementation, the obtaining unit is further configured to:
receive weighted performance indicator feedback information from the access network device, where the weighted performance indicator feedback information includes a performance indicator of a terminal device within a coverage area of a reflected signal of the first reflective surface after the first reflective surface is adjusted based on the first reflective surface adjustment parameter.

In another possible implementation, the weighted performance indicator feedback information includes at least one of the following: a weighted average transmission rate, a weighted packet error rate, a weighted signal to interference plus noise ratio, weighted RSRP, or weighted RSRQ.

In another possible implementation, the sending unit is further configured to:
send an adjustment time point of the first reflective surface to the access network device; and
the decision unit is specifically configured to:
   determine, based on the adjustment time point, to perform the step of adjusting the first reflective surface based on the first reflective surface adjustment parameter.

In another possible implementation, the obtaining unit is further configured to:
receive, from the access network device, information for indicating the first reflection apparatus to adjust the first reflective surface; and
the decision unit is specifically configured to:

determine, based on the information for indicating the first reflection apparatus to adjust the first reflective surface, to perform the step of adjusting the first reflective surface based on the first reflective surface adjustment parameter.

In another possible implementation, the coverage area of the reflected signal of the first reflective surface includes a part or all of a signal coverage area of each of a plurality of access network devices; and
the obtaining unit is specifically configured to:
receive location gravity center information sent by each access network device; and
determine the first location gravity center information based on the location gravity center information sent by each access network device.

In another possible implementation, the obtaining unit is further configured to:
obtain historical location gravity center information, a historical reflective surface adjustment parameter, and historical weighted performance indicator feedback information, where the historical location gravity center information includes N pieces of location gravity center information, the historical reflective surface adjustment parameter includes N reflective surface adjustment parameters, the historical weighted performance indicator feedback information includes N pieces of weighted performance indicator feedback information, and N is an integer greater than or equal to 1; the N pieces of location gravity center information, the N historical reflective surface adjustment parameters, and the N pieces of weighted performance indicator feedback information are in a one-to-one correspondence; the N pieces of location gravity center information include weighted locations, reported by the access network device at different time, of the terminal device within the coverage area of the reflected signal of the first reflective surface; each of the N reflective surface adjustment parameters includes an adjustment parameter that is used to adjust the first reflective surface and that is obtained by the first reflection apparatus through decision-making based on location gravity center information corresponding to the reflective surface adjustment parameter; and each of the N pieces of weighted performance indicator feedback information includes a performance indicator of a terminal device within a coverage area of a reflected signal of the first reflective surface after the first reflective surface is adjusted based on a reflective surface adjustment parameter corresponding to each piece of weighted performance indicator feedback information; and
the decision unit is further configured to update a second neural network model based on the historical location gravity center information, the historical reflective surface adjustment parameter, and the historical weighted performance indicator feedback information, to obtain the first neural network model.

In another possible implementation, the decision unit is specifically configured to:
estimate a weighted performance indicator expectation based on a third neural network model, an i^{th} piece of location gravity center information of the historical location gravity center information, and an i^{th} reflective surface adjustment parameter of the historical reflective surface adjustment parameter; and
update the second neural network model based on the weighted performance indicator expectation, the i^{th} piece of location gravity center information, and the i^{th} reflective surface adjustment parameter, to obtain the first neural network model, where i is an integer greater than or equal to 1 and less than or equal to N.

In another possible implementation, the decision unit is further configured to:
update the third neural network model based on the historical location gravity center information, the historical reflective surface adjustment parameter, and the historical weighted performance indicator feedback information.

In another possible implementation, each of the N reflective surface adjustment parameters further includes an adjustment parameter for adjusting the mounting location of the first reflective surface.

In another possible implementation, the obtaining unit is further configured to:
obtain second location gravity center information and a third reflective surface adjustment parameter, where the second location gravity center information includes a weighted location of a terminal device within a coverage area of a reflected signal of a second reflective surface included in a second reflection apparatus, the third reflective surface adjustment parameter is a reflective surface adjustment parameter that is used to adjust the second reflective surface and that is determined by the second reflection apparatus based on the second location gravity center information, and there is an intersection between the coverage area of the reflected signal of the second reflective surface and the coverage area of the reflected signal of the first reflective surface; and
the decision unit is specifically configured to:
   update the second neural network model based on the historical location gravity center information, the historical reflective surface adjustment parameter, the historical weighted performance indicator feedback information, the second location gravity center information, and the third reflective surface adjustment parameter, to obtain the first neural network model.

In another possible implementation, the obtaining unit is further configured to:
obtain second location gravity center information and a third reflective surface adjustment parameter, where the second location gravity center information includes a weighted location of a terminal device within a coverage area of a reflected signal of a second reflective surface included in a second reflection apparatus, the third reflective surface adjustment parameter is a reflective surface adjustment parameter that is used to adjust the second reflective surface and that is determined by the second reflection apparatus based on the second location gravity center information, and there is an intersection between the coverage area of the reflected signal of the second reflective surface and the coverage area of the reflected signal of the first reflective surface; and
the decision unit is specifically configured to:
   update the third neural network model based on the historical location gravity center information, the historical reflective surface adjustment parameter, the historical weighted performance indicator feedback information, the second location gravity center information, and the third reflective surface adjustment parameter.

In another possible implementation, the obtaining unit is specifically configured to:
receive the second location gravity center information and the third reflective surface adjustment parameter that are sent by the second reflection apparatus or the access network device.

In another possible implementation, the sending unit is further configured to:
send configuration information of the first reflection apparatus to the access network device, where the configuration information includes at least one of the following:
an adjustment cycle of the first reflective surface, whether adjustment of the first reflective surface is controlled by the access network device, precision of location gravity center information, a performance indicator feedback type definition, a reconstruction weight of the first reflective surface, an identifier of a reflective surface adjustment parameter used by the first reflection apparatus in an adjustment parameter set, and a type of the first reflective surface, where the adjustment cycle is used to indicate an adjustment cycle of adjusting the first reflective surface by the first reflection apparatus, the precision of location gravity center information is used to indicate a degree of sensitivity of the first reflection apparatus to a location change of the terminal device within the coverage area of the reflected signal of the first reflective surface, and the performance indicator feedback type definition is used to indicate a type of a performance indicator that the first reflection apparatus requires to be fed back.

In another possible implementation, the obtaining unit is further configured to:
receive information that is used to indicate the first reflection apparatus to adjust the first reflective surface that is sent by the access network device; and
the sending unit is further configured to:
   send third location gravity center information and a fourth reflective surface adjustment parameter to the second reflection apparatus or the access network device, where the third location gravity center information includes a weighted location, stored in the first reflection apparatus, of the terminal device within the coverage area of the reflected signal of the first reflective surface at a first sending moment, the first sending moment is a sending moment at which the first reflection apparatus sends the third location gravity center information and the fourth reflective surface adjustment parameter, and the fourth reflective surface adjustment parameter is a reflective surface adjustment parameter that is used to adjust the first reflective surface and that is determined by the first reflection apparatus based on the third location gravity center information.

In another possible implementation, the sending unit is further configured to:
send, to the access network device, information for indicating that the first reflection apparatus ends adjustment of the first reflective surface.

A fourth aspect of embodiments of this application provides an access network device of claim 15. The access network device includes:
a sending unit, configured to send first location gravity center information to a first reflection apparatus, where the first location gravity center information includes a weighted location of a terminal device within a coverage area of a reflected signal of a first reflective surface of the first reflection apparatus; and send weighted performance indicator feedback information to the first reflection apparatus, where the weighted performance indicator feedback information is used to indicate a performance indicator of a terminal device within a coverage area of a reflected signal of the first reflective surface after the first reflection apparatus adjusts the first reflective surface based on a first reflective surface adjustment parameter, and the first reflective surface adjustment parameter is determined by the first reflection apparatus based on the first location gravity center information.

In a possible implementation, the access network device further includes a receiving unit and a processing unit.

The receiving unit is configured to receive a reconstruction weight sent by the first reflection apparatus.

The processing unit is configured to determine the first location gravity center information based on the reconstruction weight and a location of the terminal device within the coverage area of the reflected signal of the first reflective surface.

In another possible implementation, the location of the terminal device within the coverage area of the reflected signal of the first reflective surface includes: a sequence number of a sub-grid corresponding to each of terminal devices within the coverage area of the reflected signal of the first reflective surface, where each sub-grid corresponds to one coordinate location range; or a coordinate location corresponding to each terminal device.

In another possible implementation, the receiving unit is further configured to:
receive an adjustment time point, sent by the first reflection apparatus, of the first reflective surface; and
the sending unit is specifically configured to:
   send the weighted performance indicator feedback information to the first reflection apparatus based on the adjustment time point.

In another possible implementation, the sending unit is further configured to:
send, to the first reflection apparatus, information for indicating the first reflection apparatus to adjust the first reflective surface;
the processing unit is further configured to:
   determine, based on a second sending moment, an adjustment time point at which the first reflection apparatus is to adjust the first reflective surface, where the second sending moment is a sending moment at which the access network device sends, to the first reflection apparatus, the information for indicating the first reflection apparatus to adjust the first reflective surface; and
   the sending unit is specifically configured to:
      send the weighted performance indicator feedback information to the first reflection apparatus based on the adjustment time point.

In another possible implementation, the sending unit is further configured to:
send, to the first reflection apparatus at a third sending moment, information for indicating the first reflection apparatus to adjust the first reflective surface, and send, to a second reflection apparatus at a fourth sending moment, information for indicating the second reflection apparatus to adjust a second reflective surface of the second reflection apparatus;
the receiving unit is further configured to:
   receive second location gravity center information and a third reflective surface adjustment parameter that are sent by the second reflection apparatus, where the second location gravity center information is a weighted location, stored in the second reflection apparatus, of a terminal device within a coverage area of a reflected signal of the second reflective surface at a fifth sending moment, the fifth sending moment is a sending moment at which the second reflection apparatus sends the second location gravity center information, and the third reflective surface adjustment parameter is a reflective surface adjustment parameter that is used to adjust the second reflective surface and that is determined by the second reflection apparatus based on the second location gravity center information;
   the sending unit is further configured to:
      send the second location gravity center information and the third reflective surface adjustment parameter to the first reflection apparatus; and
      the receiving unit is further configured to:
         receive third location gravity center information and a fourth reflective surface adjustment parameter that are sent by the first reflection apparatus, where the third location gravity center information includes a weighted location, stored in the first reflection apparatus, of the terminal device within the coverage area of the reflected signal of the first reflective surface at a first sending moment, the first sending moment is a sending moment at which the first reflection apparatus sends the third location gravity center information and the fourth reflective surface adjustment parameter, and the fourth reflective surface adjustment parameter is a reflective surface adjustment parameter that is used to adjust the first reflective surface and that is determined by the first reflection apparatus based on the third location gravity center information.

In another possible implementation, the receiving unit is further configured to:
receive, at a first receiving moment, information that is sent by the first reflection apparatus and that is used to indicate that the first reflection apparatus ends adjustment of the first reflective surface, and receive, at a second receiving moment, information that is sent by the second reflection apparatus and that is used to indicate that the second reflection apparatus ends adjustment of the second reflective surface, where there is an intersection between a first time period and a second time period, the first time period is a time period between the third sending moment and the first receiving moment, and the second time period is a time period between the fourth sending moment and the second receiving moment.

In another possible implementation, the sending unit is further configured to:
send, to the first reflection apparatus, information for indicating the first reflection apparatus to adjust the first reflective surface; and
when a preset condition is met, send, to the second reflection apparatus, information for indicating the second reflection apparatus to adjust the second reflective surface of the second reflection apparatus, where
the preset condition includes any one of the following:
   the access network device sends, to the first reflection apparatus, information for indicating the first reflection apparatus to end adjustment of the first reflective surface; or
   the access network device receives information that is sent by the first reflection apparatus and that is used to indicate that the first reflection apparatus ends adjustment of the first reflective surface.

In another possible implementation, the receiving unit is further configured to:
receive configuration information of the first reflection apparatus that is sent by the first reflection apparatus, where the configuration information includes at least one of the following: an adjustment cycle of the first reflective surface, whether adjustment of the first reflective surface is controlled by the access network device, precision of location gravity center information, a performance indicator feedback type definition, a reconstruction weight of the first reflective surface, an identifier of a reflective surface adjustment parameter used by the first reflection apparatus in an adjustment parameter set, and a type of the first reflective surface, the adjustment cycle is used to indicate an adjustment cycle of adjusting the first reflective surface by the first reflection apparatus, the precision of location gravity center information is used to indicate a degree of sensitivity of the first reflection apparatus to a location change of the terminal device within the coverage area of the reflected signal of the first reflective surface, and the performance indicator feedback type definition is used to indicate a type of a performance indicator that the first reflection apparatus requires to be fed back.

A fifth aspect of embodiments of this application provides a first reflection apparatus of claim 14, and the first reflection apparatus includes a processor, a first reflective surface, and a memory. The memory stores a computer program. The processor is configured to invoke and run the computer program stored in the memory, so that the processor implements any one of the implementations of the first aspect.

Optionally, the first reflection apparatus further includes a transceiver, and the processor is further configured to control the transceiver to send or receive a signal.

A sixth aspect of embodiments of this application provides an access network device of claim 15. The access network device includes a processor and a memory. The memory stores a computer program. The processor is configured to invoke and run the computer program stored in the memory, so that the processor implements any one of the implementations of the second aspect.

Optionally, the access network device further includes a transceiver, and the processor is further configured to control the transceiver to send or receive a signal.

A seventh aspect of embodiments of this application provides a computer program product including instructions. When the computer program product runs on a computer, the computer is enabled to perform any one of the implementations of the first aspect or the second aspect.

An eighth aspect of embodiments of this application provides a computer-readable storage medium, including computer instructions. When the computer instructions run on a computer, the computer is enabled to perform any one of the implementations of the first aspect or the second aspect.

A ninth aspect of embodiments of this application provides a chip apparatus, including a processor, connected to a memory and configured to invoke a program stored in the memory, so that the processor performs any one of the implementations of the first aspect or the second aspect.

A tenth aspect of embodiments of this application provides a reflection system. The reflection system includes the first reflection apparatus according to the third aspect and the access network device according to the fourth aspect.

It can be learned from the foregoing technical solutions that embodiments of this application have the following advantages:

It can be learned from the foregoing technical solutions that, the first reflection apparatus obtains the first location gravity center information, where the first location gravity center information includes the weighted location of the terminal device within the coverage area of the reflected signal of the first reflective surface; the first reflection apparatus determines the first input parameter based on the first location gravity center information, and inputs the first input parameter to the first neural network model to obtain a first reflective surface adjustment parameter; and then the first reflection apparatus adjusts the first reflective surface based on the first reflective surface adjustment parameter. Therefore, it can be learned that, in embodiments of this application, the first location gravity center information is used to represent the radio environment within the coverage area of the reflected signal of the first reflective surface. The first reflection apparatus determines the first input parameter of the first neural network model based on the first location gravity center information, inputs the first input parameter to the first neural network model to obtain the first reflective surface adjustment parameter, and adjusts the first reflective surface based on the first reflective surface adjustment parameter. In the technical solutions of embodiments of this application, the solution for adjusting the first reflective surface is simple. The first reflective surface is adjusted to reconstruct the radio environment within the coverage area of the reflected signal of the first reflective surface, so as to increase a network throughput and improve channel transmission quality. In addition, compared with a conventional solution, in embodiments of this application, channel estimation does not need to be performed to obtain channel information. From a perspective of hardware, hardware complexity of the first reflection apparatus is low.

### BRIEF DESCRIPTION OF DRAWINGS

FIG. 1A is a schematic diagram of a communication system according to an embodiment of this application;
FIG. 1B is a schematic diagram of an application scenario of a reflection apparatus according to an embodiment of this application;
FIG. 1C is a schematic diagram of another application scenario of a reflection apparatus according to an embodiment of this application;
FIG. 2A is a schematic diagram of a structure of a reflection apparatus according to an embodiment of this application;
FIG. 2B is a schematic diagram of another structure of a reflection apparatus according to an embodiment of this application;
FIG. 2C is a schematic diagram of another structure of a reflection apparatus according to an embodiment of this application;
FIG. 2D is a schematic diagram of another structure of a reflection apparatus according to an embodiment of this application;
FIG. 2E is a schematic diagram of another structure of a reflection apparatus according to an embodiment of this application;
FIG. 3A is a schematic diagram of an embodiment of a reflective surface adjustment method according to an embodiment of this application;
FIG. 3B is a schematic diagram of another embodiment of a reflective surface adjustment method according to an embodiment of this application;
FIG. 3C is a schematic diagram of an application scenario of a reflective surface adjustment method according to an embodiment of this application;
FIG. 3D is a schematic diagram of another embodiment of a reflective surface adjustment method according to an embodiment of this application;
FIG. 3E is a schematic diagram of another application scenario of a reflective surface adjustment method according to an embodiment of this application;
FIG. 3F is a schematic diagram of another embodiment of a reflective surface adjustment method according to an embodiment of this application;
FIG. 3G is a schematic diagram of another embodiment of a reflective surface adjustment method according to an embodiment of this application;
FIG. 4A and FIG. 4B are a schematic diagram of another embodiment of a reflective surface adjustment method according to an embodiment of this application;
FIG. 5A is a schematic diagram of another embodiment of a reflective surface adjustment method according to an embodiment of this application;
FIG. 5B is a schematic diagram of another application scenario of a reflection apparatus according to an embodiment of this application;
FIG. 6 is a schematic diagram of another embodiment of a reflective surface adjustment method according to an embodiment of this application;
FIG. 7 is a schematic diagram of another embodiment of a reflective surface adjustment method according to an embodiment of this application;
FIG. 8 is a schematic diagram of another embodiment of a reflective surface adjustment method according to an embodiment of this application;
FIG. 9 is a schematic diagram of another embodiment of a reflective surface adjustment method according to an embodiment of this application;
FIG. 10A is a schematic diagram of another application scenario of a reflection apparatus according to an embodiment of this application;
FIG. 10B is a schematic diagram of another embodiment of a reflective surface adjustment method according to an embodiment of this application;
FIG. 11 is a schematic diagram of another structure of a first reflection apparatus according to an embodiment of this application;
FIG. 12 is a schematic diagram of a structure of an access network device according to an embodiment of this application;
FIG. 13 is a schematic diagram of another structure of a first reflection apparatus according to an embodiment of this application;
FIG. 14 is a schematic diagram of another structure of an access network device according to an embodiment of this application; and
FIG. 15 is a schematic diagram of a reflection system according to an embodiment of this application.

### DESCRIPTION OF EMBODIMENTS

Embodiments of this application provide a reflective surface adjustment method and a related apparatus, so that a first reflection apparatus determines a first reflective surface adjustment parameter based on first location gravity center information, and adjusts a first reflective surface included in the first reflection apparatus based on the first reflective surface adjustment parameter, to reconstruct a radio environment within a coverage area of a reflected signal of the first reflective surface.

A communication system to which embodiments of this application are applicable includes but is not limited to a long term evolution (Long Term Evolution, LTE) system, a fifth-generation communication (the fifth generation, 5G) mobile communication system, a satellite communication system, or a mobile communication system (for example, a 6G mobile communication system) later than a 5G network.

The communication system includes a terminal device, an access network device, and a reflection apparatus. The reflection apparatus may be understood as a special terminal device with a reflection function. The reflection function is mainly embodied in that the reflection apparatus includes a reflective surface, and the reflection apparatus reflects, by using the reflective surface, an incident signal on the reflective surface.

In embodiments of this application, the access network device is a device that provides a radio communication function for the terminal device, and may also be referred to as an access device, an (R)AN device, a network device, or the like. For example, the access device includes but is not limited to a next-generation base station (next generation node base station, gNB) in a 5G communication system, an evolved NodeB (evolved NodeB, eNB) in an LTE system, a radio network controller (radio network controller, RNC), a NodeB (NodeB, NB), a base station controller (base station controller, BSC), a base transceiver station (base transceiver station, BTS), a home NodeB (home evolved NodeB, or home NodeB, HNB), a baseband unit (baseband unit, BBU), a transmitting and receiving point (transmitting and receiving point, TRP), a transmitting point (transmitting point, TP), a pico (pico) base station device, a mobile switching center, a network device in a future network, or the like. A specific type of a radio access network device is not limited in this application. In systems using different radio access technologies, devices with a function of a radio access network device may have different names.

In embodiments of this application, the terminal device may be referred to as user equipment (user equipment, UE), an access terminal, a subscriber unit, a subscriber station, a mobile station (Mobile Station, MS), a mobile console, a remote terminal, a mobile device, a user terminal, a terminal, a radio communication device, a user apparatus, or the like. The terminal device may be a cellular phone (cellular phone), a smartphone (smartphone), a wireless data card, a personal digital assistant (Personal Digital Assistant, PDAfor short) computer, a tablet computer, a wireless modem (modem), a laptop computer (laptop computer), machine type communication (Machine Type Communication, MTC), various devices with a radio communication function, such as a handheld device (handset), a computer device, a vehicle-mounted device, a wearable device, a computing device, or another processing device connected to a wireless modem, a terminal device in a 5G communication system, a terminal device in an NR system, or a terminal device in a communication system later than a 5G network, for example, a terminal device in a future evolved public land mobile network (public land mobile network, PLMN).

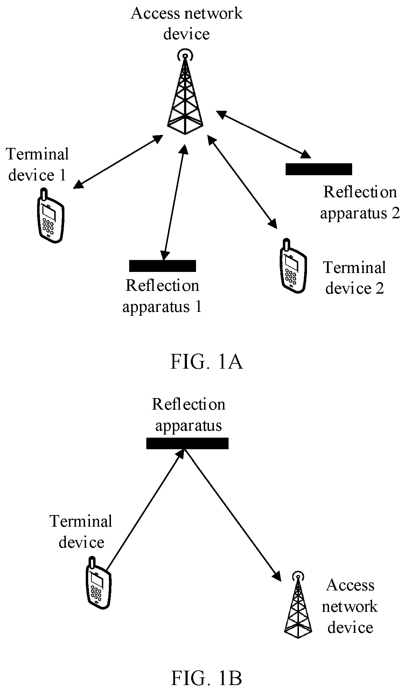

The following describes the communication system in embodiments of this application with reference to FIG. 1A.

FIG. 1A is a schematic diagram of a communication system according to an embodiment of this application. As shown in FIG. 1A, the communication system includes an access network device, a terminal device **1,** a terminal device 2, a reflection apparatus 1, and a reflection apparatus 2.

The terminal device 1, the terminal device 2, the reflection apparatus 1, and the reflection apparatus 2 each may access a network, to implement communication connection to and perform data transmission with the access network device.

The communication system shown in FIG. 1A is merely an example. In actual application, the communication system includes at least one access network device, at least one terminal device, and at least one reflection apparatus.

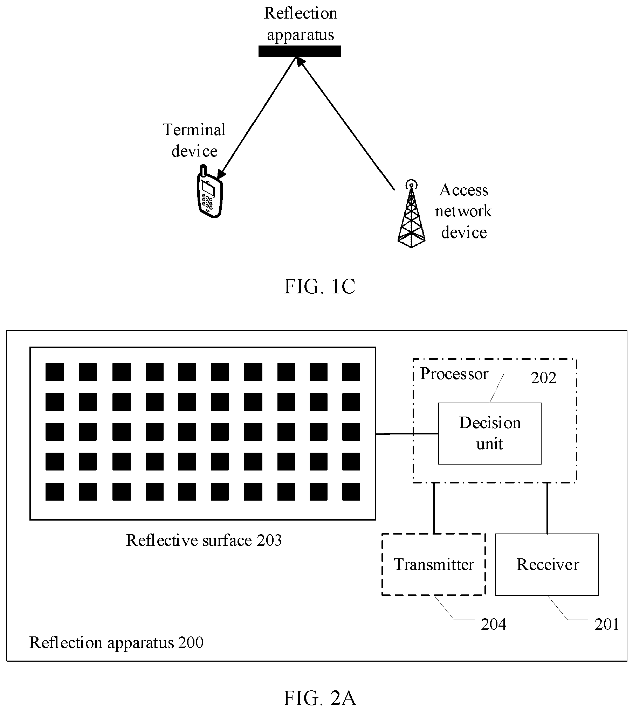

With reference to FIG. 1B and FIG. 1C, the following describes two possible application scenarios in which the reflection apparatus reflects an incident signal on a reflective surface in the communication system.

FIG. 1B is a schematic diagram of an application scenario of a reflection apparatus according to an embodiment of this application.

In FIG. 1B, the reflection apparatus includes a reflective surface, and a signal transmitted by the terminal device reaches the reflective surface of the reflection apparatus. The reflective surface of the reflection apparatus reflects the signal transmitted by the terminal device. In a possible implementation, as shown in FIG. 1B, the reflection apparatus reflects, to the access network device, the signal transmitted by the terminal device.

FIG. 1C is a schematic diagram of another application scenario of a reflection apparatus according to an embodiment of this application.

In FIG. 1C, the reflection apparatus includes a reflective surface, and a signal transmitted by the access network device reaches the reflective surface of the reflection apparatus. The reflective surface of the reflection apparatus reflects the signal transmitted by the access network device. In a possible implementation, as shown in FIG. 1C, the reflection apparatus reflects, to the terminal device, the signal transmitted by the access network device.

The following describes a structure of a reflection apparatus provided in embodiments of this application.

FIG. 2A is a schematic diagram of a structure of a reflection apparatus 200 according to an embodiment of this application. The reflection apparatus 200 includes a receiver 201, a decision unit 202, and a reflective surface 203. The decision unit 202 is software running on a processor of the reflection apparatus 200.

The receiver 201 is configured to obtain location gravity center information of a terminal device within a coverage area of a reflected signal of the reflective surface 203, and input the location gravity center information to the processor of the reflection apparatus 200. The location gravity center information includes a weighted location of the terminal device within the coverage area of the reflected signal of the reflective surface 203.

The decision unit 202 is configured to determine an input parameter based on the location gravity center information, input the input parameter to a neural network model of the decision unit 202 to obtain a reflective surface adjustment parameter, and adjust the reflective surface 203 based on the reflective surface adjustment parameter.

The reflective surface 203 is configured to reflect a signal reaching the reflective surface 203 from an external environment (including a signal reflected or transmitted by the terminal device or an access network device), and reflect the signal.

Optionally, the reflection apparatus 200 further includes a transmitter 204. The transmitter 204 is used by the reflection apparatus 200 to send configuration information to the access network device, and/or send information such as a reflective surface adjustment time point to the access network device, the terminal device, or the like. For related descriptions of the configuration information and the reflective surface adjustment time point, refer to the following descriptions. Details are not described herein.

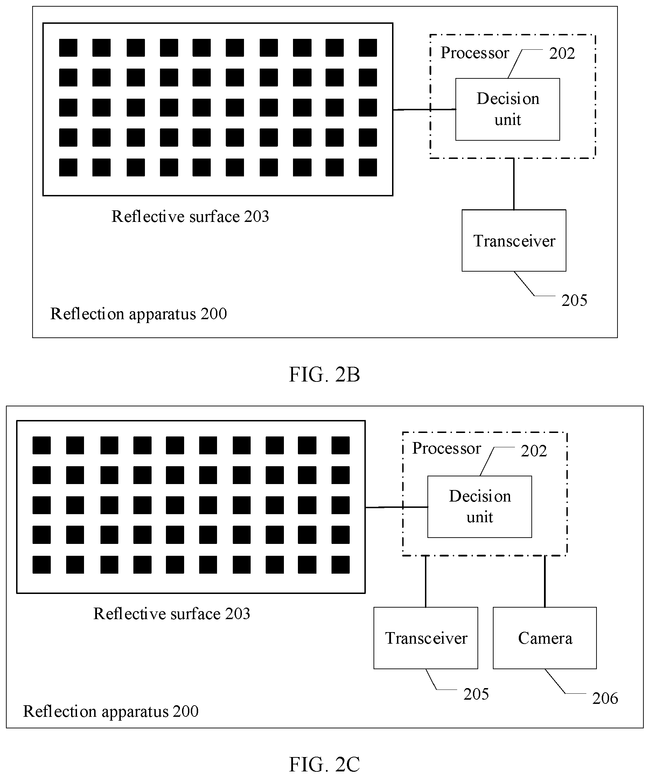

In this embodiment of this application, in a possible implementation, the receiver 201 and the transmitter 204 in FIG. 2A may be integrated into one component. FIG. 2B is a schematic diagram of another structure of a reflection apparatus according to an embodiment of this application. As shown in FIG. 2B, the receiver 201 and the transmitter 204 in FIG. 2A are integrated into one component, namely, a transceiver 205. The transceiver 205 is connected to a processor of the reflection apparatus.

In the following descriptions, an example in which the receiver 201 and the transmitter 204 may be integrated into one component, namely, the transceiver 205, is used for description. The transceiver 205 may also be referred to as a connector. This is not specifically limited in this application.

In this embodiment of this application, the location gravity center information of the terminal device within the coverage area of the reflected signal of the reflective surface 203 may alternatively be represented by using a photo of the coverage area of the reflected signal of the reflective surface 203. Optionally, in the structure shown in FIG. 2B, the reflection apparatus 200 further includes a camera 206. FIG. 2C is a schematic diagram of another structure of a reflection apparatus according to an embodiment of this application. As shown in FIG. 2C, the reflection apparatus 200 further includes a camera 206, and the camera 206 is connected to the processor of the reflection apparatus 200.

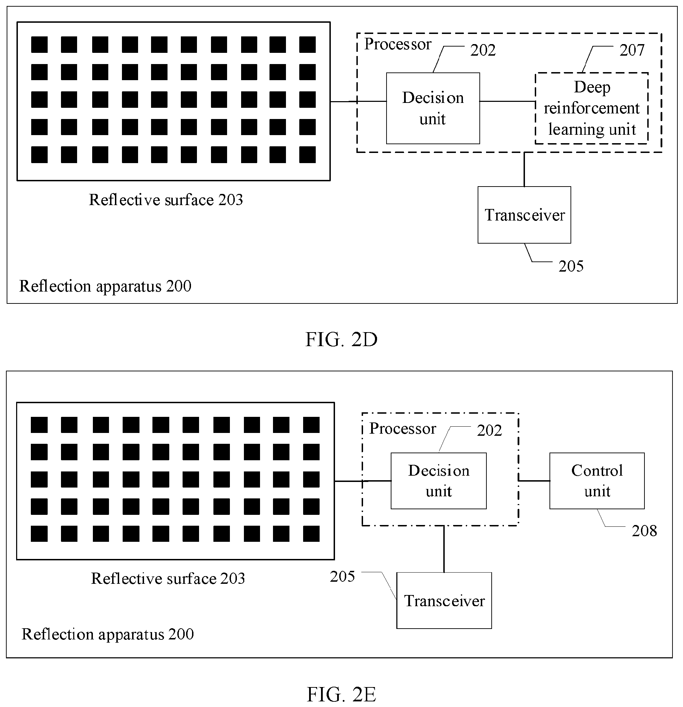

In this embodiment of this application, the reflection apparatus 200 may further include a deep reinforcement learning unit 207 configured to update the neural network model in the decision unit 202. FIG. 2D is a schematic diagram of another structure of a reflection apparatus according to an embodiment of this application. The deep reinforcement learning unit 207 is connected to the decision unit 202. The decision unit 202 and the deep reinforcement learning unit 207 are software running on the processor of the reflection apparatus 200.

The deep reinforcement learning unit 207 is configured to update the neural network model in the decision unit 202 based on historical training data. For details about the historical training data, refer to the following related descriptions. Details are not described herein again.

In this embodiment of this application, to further improve network communication performance in a radio environment within the coverage area of the reflected signal of the reflective surface 203 included in the reflection apparatus 200, a mounting location of the reflective surface 203 may be adjusted to further optimize a channel condition in the radio environment within the coverage area of the reflected signal of the reflective surface 203.

As shown in FIG. 2E, the reflection apparatus 200 further includes a control unit 208, and the decision unit 202 is software running on the processor of the reflection apparatus 200. The control unit 208 may be a controller, or a control module with a function of controlling the mounting location of the reflective surface 208. The control unit 208 adjusts the mounting location of the reflective surface 203 based on the reflective surface adjustment parameter output by the decision unit 208.

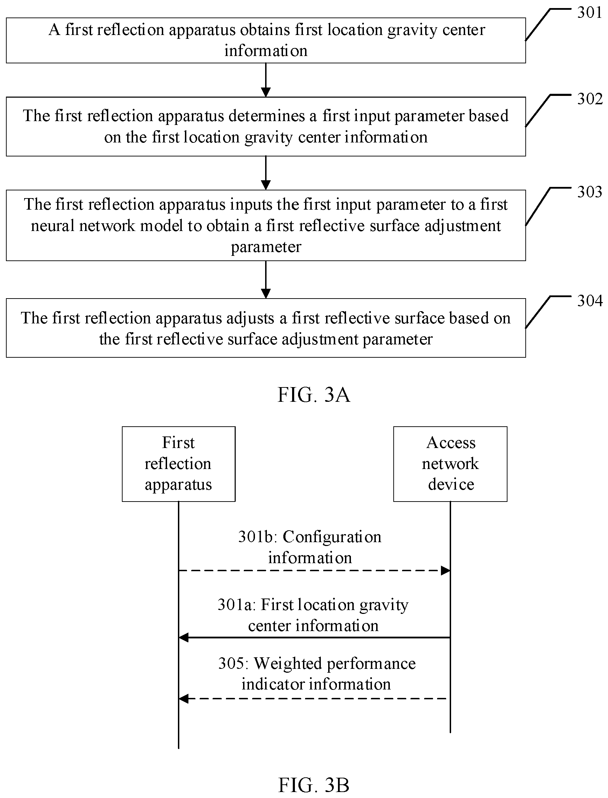

Embodiments of this application provide a reflective surface adjustment method. A first reflection apparatus uses a weighted location (namely, first location gravity center information) of a terminal device within a coverage area of a reflected signal of a first reflective surface to represent a radio environment within the coverage area of the reflected signal of the first reflective surface. The first reflection apparatus performs an inference process based on the first location gravity center information to obtain a first reflective surface adjustment parameter. Then the first reflection apparatus adjusts, based on the first reflective surface adjustment parameter, the first reflective surface included in the first reflection apparatus, to optimize the radio environment within the coverage area of the reflected signal of the first reflective surface. For a specific inference process, refer to related descriptions in the embodiment shown in FIG. 3A.

FIG. 3A is a schematic diagram of an embodiment of a reflective surface adjustment method according to an embodiment of this application. The reflective surface adjustment method in FIG. 3A includes the following steps.

301: A first reflection apparatus obtains first location gravity center information.

The first reflection apparatus includes a first reflective surface, and the first location gravity center information includes a weighted location of a terminal device within a coverage area of a reflected signal of the first reflective surface.

According to the invention, the weighted location of the terminal device within the coverage area of the reflected signal of the first reflective surface is determined based on a reconstruction weight of the terminal device within the coverage area of the reflected signal of the first reflective surface. That is, the weighted location is expressed as the following formula 1: $wp = \left(\frac{1}{Q}{\sum }_{n = 1}^{Q} \left({w}_{n}{p}_{n}\right)\right)$

In the formula 1, *wₙ* indicates a reconstruction weight calculated by an n^{th} terminal device within the coverage area of the reflected signal of the first reflective surface, and *wₙ* is greater than 0 and less than or equal to 1. Q is a quantity of terminal devices within the coverage area of the reflected signal of the first reflective surface. *pₙ* is a location of the n^{th} terminal device within the coverage area of the reflected signal of the first reflective surface. n is an integer greater than or equal to 1 and less than or equal to Q, and Q is an integer greater than 1. ${\sum }_{n = 1}^{Q} \left({w}_{n}{p}_{n}\right)$ indicates a sum of weighted locations of the terminal devices within the coverage area of the reflected signal of the first reflective surface. ( $\frac{1}{Q} {\sum }_{n = 1}^{Q} \left({w}_{n}{p}_{n}\right)$) indicates an average value of the weighted locations of the terminal devices within the coverage area of the reflected signal of the first reflective surface.

A reconstruction weight of the first reflective surface indicates a tendency of the first reflection apparatus to reconstruct a radio environment within the coverage area of the reflected signal of the first reflective surface included in the first reflection apparatus. The reconstruction weight of the first reflective surface is used to indicate the reconstruction weight of the terminal device within the coverage area of the reflected signal of the first reflective surface.

The following describes two possible aspects for setting a reconstruction weight of the first reflection apparatus. It should be noted that the following examples are not construed as a limitation on the reconstruction weight. In actual application, the reconstruction weight may alternatively be set based on factors in other aspects.
1. The reconstruction weight of the first reflective surface includes reconstruction weights corresponding to a plurality of frequency bands within the coverage area of the reflected signal of the first reflective surface. In this case, the reconstruction weight of the terminal device within the coverage area of the reflected signal of the first reflective surface may be determined based on a frequency band used by the terminal device within the coverage area of the reflected signal of the first reflective surface and the reconstruction weights corresponding to the plurality of frequency bands.

The coverage area of the reflected signal of the first reflective surface includes a plurality of frequency bands. The reconstruction weight includes reconstruction weights of users on the plurality of frequency bands. Reconstruction weights of different frequency bands are the same or different. For example, the first reflection apparatus mainly reconstructs, or focuses on reconstruction of, radio environments corresponding to a frequency band 73 GHz, a frequency band 28 GHz, and a frequency band less than or equal to 6 GHz, and a reconstruction ratio of the frequency band 73 GHz, the frequency band 28 GHz, and the frequency band less than or equal to 6 GHz is 6:3:1. Details are shown in Table 1.

**Table 1**

| Reconstruction frequency band of the first reflective surface | 73 GHz (gigahertz) | 28 GHz | Less than or equal to 6 GHz |
|---|---|---|---|
| Reconstruction weight w | 0.6 | 0.3 | 0.1 |

For example, with reference to the example in Table 1, the reconstruction frequency bands of the first reflective surface and the reconstruction weight corresponding to each reconstruction frequency band are shown in Table 1. In this case, it can be learned that a reconstruction weight of a terminal device using a frequency band 73 GHz is 0.6, a reconstruction weight of a terminal device using a frequency band 28 GHz is 0.3, and a reconstruction weight of a terminal device using a frequency band less than or equal to 6 GHz is 0.1. Then a weighted location of each terminal device is calculated based on a reconstruction weight of each terminal device, weighted locations of all terminal devices are added up to obtain a sum of the weighted locations, and then an average value of sums of weighted locations is obtained. The average value is an average value of weighted locations of all terminal devices within the coverage area of the reflected signal of the first reflective surface.

A high-frequency signal is more likely to be blocked (a high-frequency signal has a short wavelength, a small amplitude, and poor penetrating power). Therefore, reconstruction performed by the first reflective surface for a user in a high-frequency channel can achieve higher gain. Therefore, reconstruction performed by the first reflective surface for a high frequency band may account for a higher proportion than reconstruction for another lower frequency band, to further optimize the radio environment within the coverage area of the reflected signal of the first reflective surface. For example, in the example of Table 1, the reconstruction weight of the terminal device using the frequency band 73 GHz is set to 0.6, the reconstruction weight of the terminal device using the frequency band 28 GHz is set to 0.3, and the reconstruction weight of the terminal device using the frequency band less than or equal to 6 GHz is set to 0.1. The first reflection apparatus tends to reconstruct a channel condition for the frequency band 73 GHz, to expect to achieve higher gain, and more effectively optimize the radio environment within the coverage area of the reflected signal of the first reflective surface.

2. The reconstruction weight of the first reflective surface includes reconstruction weights of users at a plurality of levels within the coverage area of the reflected signal of the first reflective surface. In this case, the reconstruction weight of the terminal device within the coverage area of the reflected signal of the first reflective surface may be determined based on a level of the terminal device within the coverage area of the reflected signal of the first reflective surface and a reconstruction weight of a user at each level.

The coverage area of the reflected signal of the first reflective surface includes a plurality of levels. A user at each level corresponds to one reconstruction weight. Reconstruction weights of users at different levels are different. For example, a reconstruction ratio of a VIP user to a common user is 6:4.

For example, a reconstruction weight of the VIP user is 0.6, and a reconstruction weight of the common subscribers is 0.4. In this case, a weighted location of each terminal device is calculated based on a weight of each terminal device, weighted locations of all terminal devices are added up to obtain a sum of the weighted locations, and then an average value of sums of weighted locations is obtained. The average value is an average value of weighted locations of all terminal devices within the coverage area of the reflected signal of the first reflective surface.

A level of the VIP user is higher than that of the common user. Therefore, a better radio environment should be preferentially provided for the VIP user. Therefore, reconstruction for the VIP user may account for a higher proportion than reconstruction for the common user. This can better optimize a radio environment in a region in which the VIP user is located, to improve network communication performance in the radio environment in the region in which the VIP user is located.

It should be noted that the foregoing examples describe the reconstruction weight of the first reflective surface only from one aspect. In actual application, the reconstruction weight of the first reflective surface may alternatively be set from a plurality of aspects. For example, the reconstruction weight of the first reflective surface includes reconstruction weights of different frequency bands and reconstruction weights of users at different levels.

The following describes several possible implementations of obtaining, by the first reflection apparatus, the first location gravity center information in step 301.

Implementation 1: The first reflection apparatus obtains the first location gravity center information from an access network device.

In a scenario of the implementation 1, refer to FIG. 3B. Step 301 in FIG. 3A specifically includes step 301a.

301a: The first reflection apparatus receives the first location gravity center information sent by the access network device. Correspondingly, the access network device sends the first location gravity center information to the first reflection apparatus.

The access network device determines the coverage area of the reflected signal of the first reflective surface, and determines a location of the terminal device within the coverage area of the reflected signal of the first reflective surface. Then the access network device determines the first location gravity center information based on the reconstruction weight of the first reflection apparatus and the location of the terminal device within the coverage area of the reflected signal of the first reflective surface, and then sends the first location gravity center information to the first reflection apparatus.

Optionally, the reconstruction weight is preconfigured on the access network device, or is received by the access network device from the first reflection apparatus.

The access network device may determine the coverage area of the reflected signal of the first reflective surface based on parameters such as a location of the first reflection apparatus and/or reflection performance of the first reflection apparatus. The location of the first reflection apparatus and/or the reflection performance of the first reflection apparatus may be carried in configuration information of the first reflection apparatus.

In this embodiment, optionally, the embodiment shown in FIG. 3A further includes step 301b, which is specifically shown in FIG. 3B in combination with step 301a. Step 301b is performed before step 301a.

301b: The first reflection apparatus sends the configuration information of the first reflection apparatus to the access network device. Correspondingly, the access network device receives the configuration information of the first reflection apparatus that is sent by the first reflection apparatus.

The configuration information includes at least one of the following:

### 1. The location of the first reflection apparatus

For example, the location of the first reflection apparatus includes a coordinate location of the first reflection apparatus, or the location of the first reflection apparatus includes a relative coordinate location relative to a reference object.

### 2. The reflection performance

The reflection performance is a capability of the first reflective surface to reflect a signal.

For example, the reflection performance is a quantity of reflection units included in the first reflective surface, a size of the reflection units, an arrangement manner of the reflection units on the reflective surface, absolute values of reflection coefficients of the reflection units on different frequency bands, a signal phase adjustment range and a signal power adjustment range of the reflection units, or a beam width range of a signal reflected by the reflection units.

The access network device may estimate the coverage area of the reflected signal of the first reflective surface based on the location and/or the reflection performance of the first reflection apparatus.

### 3. An adjustment cycle of the first reflective surface

The adjustment cycle is used to indicate an adjustment cycle of adjusting the first reflective surface by the first reflection apparatus.

The first reflection apparatus and the access network device may agree upon an adjustment cycle. In this case, the access network device reports, based on the adjustment cycle, weighted performance indicator feedback information of a terminal device within a signal coverage area of the first reflective surface after the first reflection apparatus adjusts the first reflective surface. In this way, the first reflection apparatus can learn of effects of adjusting the first reflective surface and obtain the weighted performance indicator feedback information, to update a neural network model of the first reflection apparatus. For details, refer to the following related descriptions.

4. The reconstruction weight of the first reflective surface: For related descriptions of the reconstruction weight, refer to the foregoing related descriptions.

### 5. An identifier of a reflective surface adjustment parameter used by the first reflection apparatus in an adjustment parameter set

The access network device and the first reflection apparatus store a common adjustment parameter set, and the adjustment parameter set includes a plurality of different reflective surface adjustment parameters. The first reflection apparatus notifies, by using the identifier of the reflective surface adjustment parameter, the access network device of the reflective surface adjustment parameter used by the first reflection apparatus, to avoid excessively high signaling transmission overheads. The reflective surface adjustment parameter may be referred to as a reflective surface adjustment codebook.

### 6. Whether adjustment of the first reflective surface is controlled by the access network device

The first reflection apparatus notifies the access network device of whether adjustment of the first reflective surface is controlled by the access network device. In this way, when autonomous adjustment of the first reflective surface fails and the first reflection apparatus cannot perform a proper adjustment action, the access network device delivers a temporary adjustment action, that is, the access network device schedules the first reflection apparatus to adjust the first reflective surface. For example, that autonomous adjustment of the first reflective surface fails includes: A reflective surface adjustment parameter used by the first reflection apparatus cannot accurately cope with a change of an external environment; or the first reflective surface needs to re-enter a training stage (that is, the first neural network model of the first reflection apparatus is updated, where specifically, this is similar to a process of updating a second neural network model by the first reflection apparatus in the following descriptions).

### 7. Precision of location gravity center information

The precision of location gravity center information is used to indicate a degree of sensitivity of the first reflection apparatus to a location change of the terminal device within the coverage area of the reflected signal of the first reflective surface, for example, precision of a coordinate location. To be specific, the weighted location of the terminal device within the coverage area of the reflected signal of the first reflective surface changes due to a change of the coordinate location of the terminal device. The first reflection apparatus may adjust the first reflective surface based on a changed weighted location.

The precision of location gravity center information mainly depends on a hardware capability of the first reflection apparatus. Higher precision of location gravity center information indicates that the first reflection apparatus can adjust the first reflective surface in response to a smaller change of a location gravity center, to reconstruct the radio environment within the coverage area of the reflected signal of the first reflective surface.

The access network device obtains the precision of location gravity center information. In this case, the access network device may determine, based on the precision of location gravity center information, precision of obtaining the location of the terminal device within the coverage area of the reflected signal of the first reflective surface, to collect the location of the terminal device, and determine, based on the location of the terminal device, the weighted location of the terminal device within the coverage area of the reflected signal of the first reflective surface.

The following describes two possible implementations of the access network device with reference to the precision of location gravity center information.
1. The precision of location gravity center information of the first reflection apparatus is high. In this case, the access network device may collect the coordinate location of the terminal device based on precision of a coordinate location. When the coordinate location of the terminal device within the coverage area of the reflected signal of the first reflective surface changes, the terminal device reports a coordinate location of the terminal device to the access network device. Then the access network device determines, based on the collected coordinate location of the terminal device, a weighted location of the terminal device within the coverage area of the reflected signal of the first reflective surface.
   For example, the access network device is used as an origin of coordinates, a horizontal plane is a plane on which an x-axis and a y-axis are located, and each terminal device reports a coordinate location corresponding to the terminal device. The access network device determines, based on the coordinate location of each terminal device, that coordinates of a weighted location within the coverage area of the reflected signal of the first reflective surface are (5.2, 10.1), and sends the weighted location (5.2, 10.1) to the first reflection apparatus. When the coordinate location of the terminal device changes, the terminal device reports a coordinate location of the terminal device to the access network device again. In this case, the access network device may calculate a weighted location within the coverage area of the reflected signal of the first reflective surface based on the coordinate location reported by the terminal device again. If an obtained weighted location is different from the weighted location (5.2, 10.1), the access network device sends the changed weighted location to the first reflection apparatus.
2. The precision of location gravity center of the first reflection apparatus is low. In this case, the access network device may collect the location of the terminal device based on precision of a sub-grid, and each sub-grid corresponds to one coordinate location range. When a sub-grid corresponding to the terminal device within the coverage area of the reflected signal of the first reflective surface changes, the terminal device reports, to the access network device again, a sequence number of a sub-grid corresponding to the terminal device. Then the access network device determines, based on the collected sequence number of the sub-grid of the terminal device, a weighted location of the terminal device within the coverage area of the reflected signal of the first reflective surface.

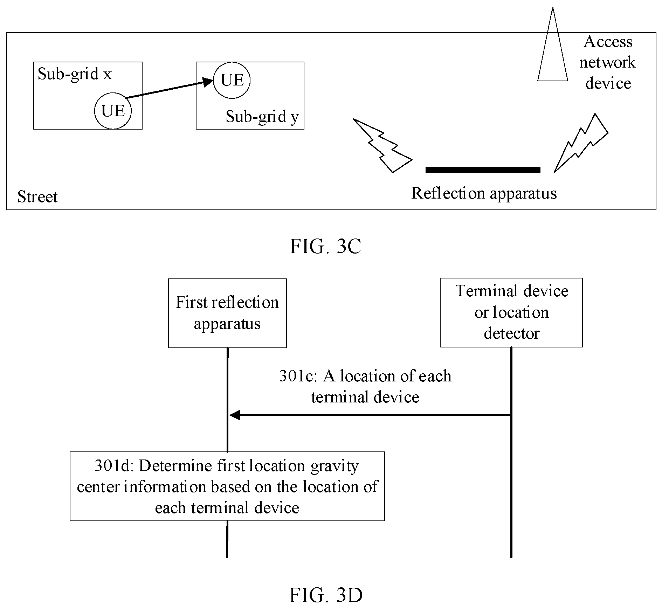

For example, as shown in FIG. 3C, UE in FIG. 3C is in a sub-grid x. When the UE moves to a sub-grid y, it indicates that a location of the UE changes. The UE sends, to the access network device, a sequence number of the sub-grid y to which the UE moves. The access network device determines, based on the sequence number of the sub-grid that is reported by the terminal device, a weighted location of the terminal device within the coverage area of the reflected signal of the first reflective surface.

It should be noted that there are a plurality of manners of dividing sub-grids. For example, sub-grids are divided based on a spacing of meters, or are divided based on UE density, or are divided based on geographical location features, or are divided based on cells.

### 8. Weighted performance indicator feedback type definition

The weighted performance indicator feedback type definition is used to indicate a type of a weighted performance indicator that the first reflection apparatus requires to be fed back.

For example, the weighted performance indicator includes any one or more of the following: The first reflection apparatus requires feedback of a weighted average transmission rate, weighted average RSRP, a weighted signal to interference plus noise ratio, weighted RSRP, a weighted bit error rate, or the like of the terminal device. For related descriptions of the weighted performance indicator, refer to the following related descriptions of step 305. Details are not described herein.

### 9. A type of the first reflective surface

The type of the first reflective surface includes a material of a reflection unit (also referred to as an antenna unit) included in the first reflective surface, an electro-adjustment attribute, adjustment precision, and the like. The first reflection apparatus feeds back the type of the first reflective surface to the access network device, so that the access network device can subsequently adjust or schedule the first reflection apparatus.

The reflection performance of the first reflective surface, whether adjustment of the first reflective surface is controlled by the access network device, the precision of location gravity center information, the performance indicator feedback type definition, and the type of the first reflective surface are static attribute parameters of the first reflection apparatus. The first reflection apparatus may send the static attribute parameters to the access network device when accessing a network.

The location of the first reflection apparatus, the adjustment cycle of the first reflective surface, the reconstruction weight of the first reflective surface, and the identifier of the reflective surface adjustment parameter used by the first reflection apparatus in the adjustment parameter set are dynamic attribute parameters, that is, dynamically changing attribute parameters, of the first reflection apparatus. The first reflection apparatus may send the dynamic attribute parameters to the access network device when accessing a network. When a dynamic attribute parameter changes, the first reflection apparatus should send the dynamic attribute parameter to the access network device again.

It should be noted that the configuration information may be sent by the first reflection apparatus to the access network device in a random access process. The parameters included in the configuration information may be carried in corresponding information elements. For example, the parameters included in the configuration information may be carried in information elements in Table 2.

**Table 2**

| Information element (information element, IE)/Group name (group name) | Semantics description (semantics description) |
|---|---|
| ReflectionSy stemRelated Parameters | Parameter set related to a reflective surface |
| >PolicyPeriod | Adjustment cycle |
| >BSControlFlag | Whether adjustment is controlled by a base station (base station, BS) |
| >LocationPrecision | Precision of location gravity center information |
| >FeedbackType | Performance feedback type definition |
| >PreferedParam | Reconstruction preference |
| >CodebookID | Identifier of a used codebook in a codebook set |
| >ReflectType | Type of a reflective surface |
| ... | ... |

In this embodiment, if the coverage area of the reflected signal of the first reflective surface includes a part or all of signal coverage areas of a plurality of access network devices, the first reflection apparatus may obtain the first location gravity center information in any one of the following manners.
1. The first reflection apparatus receives location gravity center information sent by the plurality of access network devices. Then the first reflection apparatus determines the first location gravity center information based on the location gravity center information sent by the plurality of access network devices.
   Specifically, each of the plurality of access network devices sends, to the first reflection apparatus, a weighted location of a terminal device within a part or all of a signal coverage area of the access network device. Then the first reflection apparatus performs averaging on weighted locations sent by the plurality of access network devices, to obtain an average weighted location of the terminal device within the coverage area of the reflected signal of the first reflective surface.
2. Each of the plurality of access network devices sends, to a core network device, a weighted location of a terminal device within a part or all of a signal coverage area of the access network device. Then the core network device performs averaging on weighted locations sent by the plurality of access network devices, to obtain an average weighted location of the terminal device within the coverage area of the reflected signal of the first reflective surface; and then sends the average weighted location to the first reflection apparatus.

Implementation 2: The first reflection apparatus determines the first location gravity center information based on a location of the terminal device within the coverage area of the reflected signal of the first reflective surface.

The location of the terminal device within the coverage area of the reflected signal of the first reflective surface is fed back by the terminal device, fed back by a location detector, or obtained from a photo of the coverage area of the reflected signal of the first reflective surface.

With reference to FIG. 3D, step 301 shown in FIG. 3A specifically includes step 301c and step 301d.

Step 301c: The first reflection apparatus receives a location, sent by a terminal device or a location detector, of each terminal device within the coverage area of the reflected signal of the first reflective surface.

The location of each terminal device includes a sequence number of a sub-grid corresponding to each terminal device. Each sub-grid corresponds to one coordinate location range. For a related example of the sub-grid, refer to the foregoing related descriptions of FIG. 3C.

Alternatively, the location of each terminal device includes a coordinate location of each terminal device. For the coordinate location of each terminal device, refer to the foregoing related descriptions.

To reduce signaling transmission overheads, a sub-grid is set as location change precision of a terminal device, to avoid frequent changes of location gravity center information of the terminal device, and reduce overheads of signaling for transmitting location gravity center information between the terminal device and the access network device. That is, the access network device does not report corresponding location gravity center information to the first reflection apparatus based on a location change status within the sub-grid, to avoid high energy consumption caused by frequent adjustment of the first reflective surface by the first reflection apparatus. The access network device does not need to frequently report location gravity center information to the first reflection apparatus based on a location change within the sub-grid, so that overheads of signaling between the access network device and the first reflection apparatus are also reduced.

It should be noted that, when a location of a terminal device within the coverage area of the reflected signal of the first reflective surface changes, the terminal device or the location detector sends a changed location of the terminal device within the coverage area of the reflected signal of the first reflective surface to the first reflection apparatus.

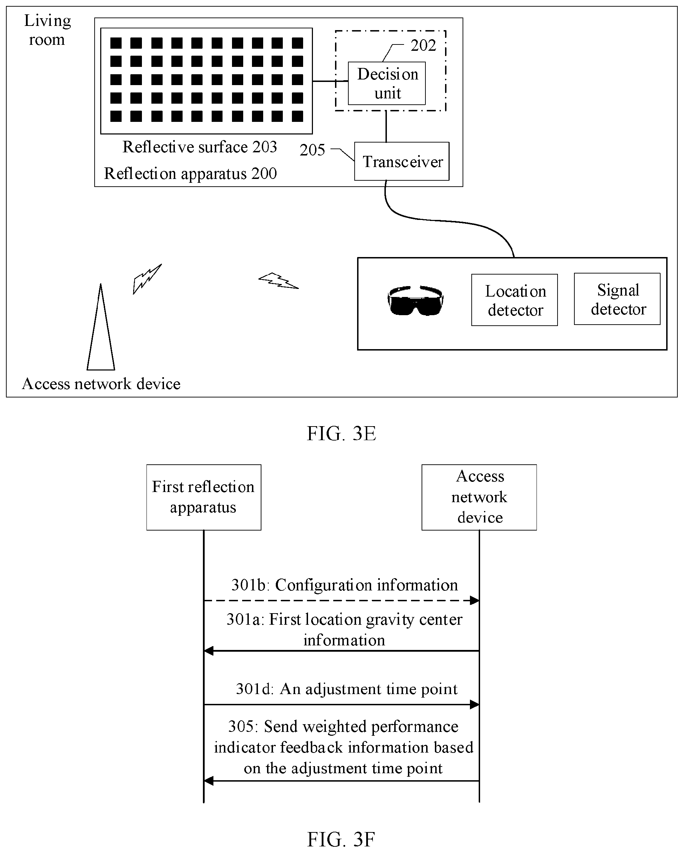

A reconstruction scenario of an indoor radio environment is described below. The indoor scenario is simple, and there are a few factors affecting a channel environment. Therefore, usually, no training is required again after one training stage. To reduce costs of a first reflection apparatus applicable to an indoor environment, as shown in FIG. 3E, the transceiver 205 of the first reflection apparatus 200 does not need to be connected to a live network to obtain location gravity center information of virtual reality (virtual reality, VR) glasses. The first reflection apparatus may be connected to the location detector through a short-range communication technology such as wired connection, Bluetooth, or wireless fidelity (wireless fidelity, Wi-Fi). Then the location detector obtains location information of the VR glasses, and sends the location of the VR glasses to the first reflection apparatus.

The location of the terminal device within the coverage area of the reflected signal of the first reflective surface is obtained from a photo of the coverage area of the reflected signal of the first reflective surface. For example, as shown in FIG. 2C, the camera 206 takes a photo of the coverage area of the reflected signal of the first reflective surface, and uses the photo as an input of the decision unit 202. This reduces signaling interaction for transmitting the location of the terminal device between the transceiver 205 and the access network device or the terminal device.

The photo includes information, such as a street view, a pedestrian volume, and weather, of the coverage area of the reflected signal of the first reflective surface. In an indoor scenario, the photo may further include information, such as an action, a posture, and a location, of a processing target (the terminal device). In this embodiment of this application, only an example in which location gravity center information of the terminal device represents the radio environment within the coverage area of the reflected signal of the first reflective surface is used for description. Other information of the photo may also represent the radio environment within the coverage area of the reflected signal of the first reflective surface to some extent. This is not limited in this application.

It should be noted that the photo taken by the camera may alternatively be sent by the transceiver 205 to the access network device, and the access network device obtains the photo of the coverage area of the reflected signal of the first reflective surface, to better instruct the first reflection apparatus to adjust the first reflective surface.

Step 301d: The first reflection apparatus determines the first location gravity center information based on the location of each terminal device.

The first location gravity center information includes a weighted location of the terminal device within the coverage area of the reflected signal of the first reflective surface.

For example, the location of each terminal device is a coordinate location of each terminal device, and the first reflection apparatus calculates, based on the coordinate location of each terminal device, the weighted location of the terminal device within the coverage area of the reflected signal of the first reflective surface.

For example, the location of each terminal device includes a sequence number of a sub-grid corresponding to each terminal device, and the first reflection apparatus calculates, based on the sequence number of the sub-grid corresponding to each terminal device, a sequence number of a sub-grid corresponding to the weighted location of the terminal device within the coverage area of the reflected signal of the first reflective surface.

302: The first reflection apparatus determines a first input parameter based on the first location gravity center information.

Specifically, the first reflection apparatus preprocesses the first location gravity center information to obtain the first input parameter. In this way, the first input parameter meets an input dimension and an input preference of the first neural network model of the first reflection apparatus.

The following describes step 302 with reference to a specific form of the first location gravity center information.

1. The first location gravity center information includes the weighted location of the terminal device within the coverage area of the reflected signal of the first reflective surface. The weighted location is represented by using longitude and latitude coordinates, and the first reflection apparatus performs any one or more of the following preprocessing on the longitude and latitude coordinates of the weighted location:
A. obtaining relative longitude and latitude coordinates of the weighted location by subtracting longitude and latitude coordinates of a specific point (a reference object) from the longitude and latitude coordinates of the weighted location, that is, converting an absolute coordinate representation form of the weighted location into a relative coordinate representation form of the weighted location;
B. normalizing the longitude and latitude coordinates of the weighted location;
C. performing a fixed-point operation on the longitude and latitude coordinates of the weighted location, to adjust numerical precision of coordinate values of the longitude and latitude coordinates of the weighted location; and
D. searching a preset table for integer values corresponding to the longitude and latitude coordinates of the weighted location, and replacing the coordinate values of the longitude and latitude coordinates with the integer values.

2. The first location gravity center information includes the photo of the coverage area of the reflected signal of the first reflective surface, and the first reflection apparatus performs any one or more of the following preprocessing on the photo:
A. changing a size of the photo;
B. reducing or increasing a quantity of channels of the photo;
C. converting the photo into a grayscale image;
D. rotating the photo; and
E. cropping the photo.

303: The first reflection apparatus inputs the first input parameter to the first neural network model to obtain a first reflective surface adjustment parameter.

For example, the first neural network model includes a neuron a and a neuron b, and the first input parameter passes through the neuron a and the neuron b. In this case, the following calculation is performed: The first input parameter is multiplied by a weight of a connection between the neuron a and the neuron b, and then a bias of the connection between the neuron a and the neuron b is added to a product. After the first input parameter passes through all connections in the first neural network model, the first neural network model provides a calculation result for forward propagation, and calculates a reflective surface adjustment parameter based on the calculation result. The foregoing example describes only a calculation process in the case that the first input parameter passes through the neuron a and the neuron b. A calculation process in a case that the first input parameter passes through other two connected neurons is similar, and a specific calculation process may be specifically determined based on an actual structure of the first neural network model. The specific calculation process is similar to a calculation process of the conventional technology, and details are not described herein.

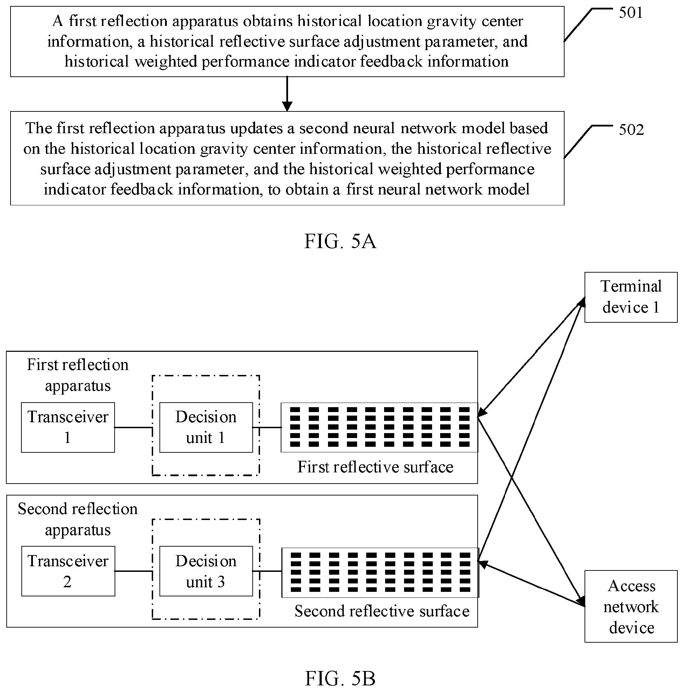

The first neural network model is a neural network model preset in the first reflection apparatus. The first neural network model is obtained through an update based on historical training data. For a specific update process, refer to related descriptions in the following embodiment shown in FIG. 5A.

304: The first reflection apparatus adjusts the first reflective surface based on the first reflective surface adjustment parameter.

In this embodiment, the first reflective surface includes a reflection unit, and the first reflective surface adjustment parameter includes an adjustment parameter for adjusting the reflection unit. In this case, step 304 specifically includes:
The first reflection apparatus adjusts the reflection unit based on the adjustment parameter for adjusting the reflection unit.

Optionally, the first reflection apparatus mainly adjusts any one or more of the following items of the reflection unit based on the adjustment parameter for adjusting the reflection unit: a voltage of the reflection unit, or a resistance of the reflection unit.

For example, the first reflective surface is integrated with a large quantity of passive reflection units, each reflection unit may independently reflect an incident signal, and the first reflection apparatus adjusts the reflection units to control amplitudes and/or phases of reflected signals of the reflection units. Interaction between the reflected signals can implement beamforming with strong directionality, to reconfigure or reconstruct the radio environment within the coverage area of the reflected signal of the first reflective surface, so as to improve performance of a radio communication network.

If the first reflective surface includes M reflection units, a reflected signal of a p^{th} reflection unit is *yₚ*, an incident signal is *xₚ,* and a reflection coefficient is a complex number *zₚ.* A phase of the complex number *zₚ* ranges from 0 degrees to 360 degrees. The reflection unit is a passive device. Therefore, an amplitude of the complex number zₚ ranges from 0 to 1. That is, *yₚ = zₚ* × *xₚ.* Adjusting the p^{th} reflection unit is changing the amplitude and the phase of the reflection coefficient *zₚ*. M is an integer greater than or equal to 1, and p is an integer less than or equal to M.

The reflection coefficient may be adjusted by using an electrical device integrated on the reflection unit, for example, a PIN diode, a field effect transistor (field effect transistor, FET), or a micro-electro-mechanical system (micro-electro-mechanical systems, MEMS) switch. For example, the PIN diode is used as a reflection unit. By controlling a bias voltage between two ends of the PIN diode, the PIN diode includes two states: an on state and an off state. With reference to a circuit design, it can be learned that the on state and the off state cause a phase change of 180 degrees. Therefore, a phase offset of the reflection unit may be controlled by adjusting the bias voltage of the PIN diode. To control an amplitude of a reflection system, a device with a variable resistance may be added to the reflection unit, and a resistance of the reflection unit is changed to change an amplitude of a reflected signal.

For example, with reference to the structure shown in FIG. 2B, the decision unit 202 of the first reflection apparatus determines the first input parameter based on the first location gravity center information, and inputs the first input parameter to the first neural network model in the decision unit 202, to obtain the first reflective surface adjustment parameter. Then the decision unit 202 adjusts the reflective surface 203 based on the first reflective surface adjustment parameter.

In this embodiment, to further optimize communication performance in the radio environment within the coverage area of the reflected signal of the first reflective surface, the first reflection apparatus may adjust a mounting location of the first reflective surface.

In this case, optionally, the first reflective surface adjustment parameter further includes an adjustment parameter for adjusting the mounting location of the first reflective surface. Step 304 shown in FIG. 3A specifically includes: The first reflection apparatus adjusts the mounting location of the first reflective surface based on the adjustment parameter for adjusting the mounting location of the first reflective surface.

Optionally, the mounting location of the first reflective surface includes any one or more of the following: a height, a latitude and a longitude, a downtilt angle, an azimuth angle, or a pitch angle of the first reflective surface.

For example, as shown in FIG. 2E, the control unit 208 adjusts, based on the first reflective surface adjustment parameter output by the decision unit 202, the first reflective surface to rise by 1 meter, and set a tilt angle of the first reflective surface to 5 degrees.

In this embodiment of this application, the first reflection apparatus obtains the first location gravity center information, where the first location gravity center information includes the weighted location of the terminal device within the coverage area of the reflected signal of the first reflective surface. Then the first reflection apparatus determines the first input parameter based on the first location gravity center information, and inputs the first input parameter to the first neural network model to obtain the first reflective surface adjustment parameter. The first reflection apparatus adjusts the first reflective surface based on the first reflective surface adjustment parameter. Therefore, it can be learned that, in this embodiment of this application, the first location gravity center information is used to represent the radio environment within the coverage area of the reflected signal of the first reflective surface. The first reflection apparatus determines the first input parameter of the first neural network model based on the first location gravity center information, inputs the first input parameter to the first neural network model to obtain the first reflective surface adjustment parameter, and adjusts the first reflective surface based on the first reflective surface adjustment parameter. In the technical solution of this embodiment of this application, the solution for adjusting the first reflective surface is simple. The first reflective surface is adjusted to reconstruct the radio environment within the coverage area of the reflected signal of the first reflective surface, so as to increase a network throughput and improve channel transmission quality. In addition, compared with a conventional solution, in this embodiment of this application, channel estimation does not need to be performed to obtain channel information. From a perspective of hardware, hardware complexity of the first reflection apparatus is low.

In this embodiment of this application, optionally, the embodiment shown in FIG. 3B further includes step 305, and step 305 is performed after step 304.

305: The first reflection apparatus receives weighted performance indicator feedback information sent by the access network device. Correspondingly, the access network device sends the weighted performance indicator feedback information to the first reflection apparatus.

The weighted performance indicator feedback information includes a weighted performance indicator of a terminal device within a coverage area of a reflected signal of the first reflective surface after the first reflective surface is adjusted based on the first reflective surface adjustment parameter.

Specifically, as shown in FIG. 3B, after the first reflection apparatus receives the first location gravity center information sent by the access network device, the first reflection apparatus may adjust the first reflective surface based on the first location gravity center information, that is, specifically perform step 302 to step 304 in the embodiment shown in FIG. 3A. The access network device may obtain a performance indicator of a terminal device within a coverage area of a reflected signal of the first reflective surface after the first reflection apparatus adjusts the first reflective surface, and then calculate the weighted performance indicator feedback information based on a performance indicator of each terminal device.

Optionally, the weighted performance indicator feedback information includes at least one of the following: a weighted average transmission rate, a weighted packet error rate, a weighted signal to interference plus noise ratio, weighted reference signal received power RSRP, weighted reference signal received quality RSRQ, or a weighted throughput.

For example, the performance indicator of each terminal device is an average transmission rate. The access network device determines a reconstruction weight of each terminal device based on the reconstruction weight of the first reflection apparatus, and calculates a weighted average transmission rate within the coverage area of the reflected signal of the first reflective surface based on the average transmission rate of each terminal device and the reconstruction weight of each terminal device. Calculation manners for the weighted bit error rate, the weighted signal to interference plus noise ratio, the weighted reference signal received power RSRP, and the weighted reference signal received quality RSRQ are similar. Details are not described herein again.

It should be noted that the foregoing describes only an implementation in which the access network device reports the weighted performance indicator feedback information to the first reflection apparatus. In actual application, alternatively, the terminal device or a signal detector may report a performance indicator of the terminal device, and then the first reflection apparatus calculates a weighted performance indicator of the terminal device within the coverage area of the reflected signal of the first reflective surface.

For example, as shown in FIG. 3E, the signal detector establishes a connection to the reflection apparatus 200 through a short-range communication technology such as wired connection, Wi-Fi, or Bluetooth. The signal detector detects a performance indicator of the VR glasses, and reports the performance indicator of the VR glasses to the first reflection apparatus. Then the first reflection apparatus calculates a weighted performance indicator of the terminal device within the coverage area of the reflected signal of the first reflective surface.

For example, as shown in FIG. 3E, the VR glasses establish a connection to the reflection apparatus 200 through a short-range communication technology such as wired connection, Wi-Fi, or Bluetooth. The VR glasses report a performance indicator of the VR glasses. Then the first reflection apparatus calculates a weighted performance indicator of the terminal device (including the VR glasses or another terminal device) within the coverage area of the reflected signal of the first reflective surface.

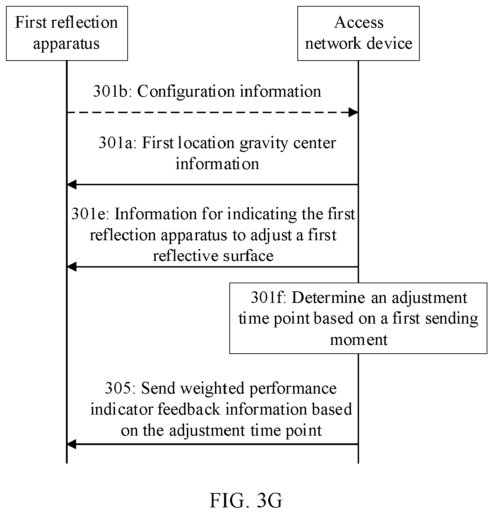

Optionally, in step 305, there are a plurality of manners of negotiating upon reporting time at which the access network device sends the weighted performance indicator feedback information to the first reflection apparatus. The following describes two possible implementations with reference to FIG. 3F and FIG. 3G.

As shown in FIG. 3F, step 301d is added based on the embodiment shown in FIG. 3B, and step 301d is performed after step 301a.

301d: The first reflection apparatus sends an adjustment time point of the first reflective surface to the access network device.

Specifically, after the first reflection apparatus receives the first location gravity center information sent by the access network device in step 301a, the first reflection apparatus determines the adjustment time point of the first reflective surface, and delivers the adjustment time point to the access network device.

Therefore, based on step 301d, step 305 specifically includes: The access network device sends the weighted performance indicator feedback information to the first reflection apparatus based on the adjustment time point.

For example, the first reflection apparatus indicates, to the access network device, that the first reflection apparatus is to start to adjust the first reflective surface at 10 o'clock, and the access network device determines that adjustment duration of the first reflection apparatus is 1 hour. In this case, the access network device may obtain, at 11 o'clock, a performance indicator of the terminal device within the coverage area of the reflected signal of the first reflective surface, determine weighted performance indicator feedback information based on a performance indicator of each terminal device, and then send the weighted performance indicator feedback information to the first reflection apparatus.

It should be noted that the adjustment time point may be a parameter included in the first reflective surface adjustment parameter in step 303 in the embodiment shown in FIG. 3A, or may be determined by the first reflection apparatus after step 301a. This is not specifically limited in this application.

To enable the access network device to feed back a performance indicator of a terminal device after the first reflection apparatus adjusts the first reflective surface so that the first reflection apparatus learns of adjustment effects, a manner of negotiating upon an adjustment time point by the first reflection apparatus and the access network device is provided, so that the access network device can correctly feed back a performance indicator of a terminal device after the first reflection apparatus adjusts the first reflective surface.

FIG. 3G shows another manner of negotiating upon an adjustment time point by the first reflection apparatus and the access network device. In FIG. 3G, step 301e and step 301f are added based on the embodiment shown in FIG. 3B. Step 301e and step 301a may be simultaneously performed, and step 301e is performed after step 301a. In addition, step 301f is performed after step 301e.

301e: The access network device sends, to the first reflection apparatus, information for indicating the first reflection apparatus to adjust the first reflective surface.

Specifically, the access network device sends the first location gravity center information to the first reflection apparatus, so that the access network device can indicate the first reflection apparatus to adjust the first reflective surface. To be specific, the access network device may send, to the first reflection apparatus, the first location gravity center information and the information for indicating the first reflection apparatus to adjust the first reflective surface; or the access network device first sends the first location gravity center information to the first reflection apparatus, and then sends, to the first reflection apparatus, the information for indicating the first reflection apparatus to adjust the first reflective surface.

Optionally, the information for indicating the first reflection apparatus to adjust the first reflective surface is indication information or another type of information. This is not specifically limited in this application.

301f: The access network device determines an adjustment time point based on a first sending moment.

The first sending moment is a moment at which the access network device sends, to the first reflection apparatus, the information for indicating the first reflection apparatus to adjust the first reflective surface.

The access network device estimates, based on the first sending moment, the adjustment time point at which the first reflection apparatus is to adjust the first reflective surface. For example, the access network device may estimate maximum time required for sending, to the first reflection apparatus, the information for indicating the first reflection apparatus to adjust the first reflective surface, and estimate the adjustment time point based on the maximum time.

In this case, step 305 in the embodiment shown in FIG. 3B specifically includes: The access network device sends the weighted performance indicator feedback information to the first reflection apparatus based on the adjustment time point. For specific descriptions of sending, by the access network device, the weighted performance indicator feedback information to the first reflection apparatus based on the adjustment time point, refer to related descriptions of this step in FIG. 3F. Details are not described herein again.

In this embodiment of this application, all reflection units of the first reflective surface are adjusted in one round of an inference process. The one round includes one or more time steps, and each time step refers to an input and an output corresponding to each input. Specifically, in the process of the embodiment shown in FIG. 3A, in step 303, the first reflection apparatus inputs the first input parameter to the first neural network model to obtain the first reflective surface adjustment parameter (step 302 may be understood as one input, and step 303 may be understood as one output), that is, the process of the embodiment shown in FIG. 3A may be understood as an execution process of one time step.

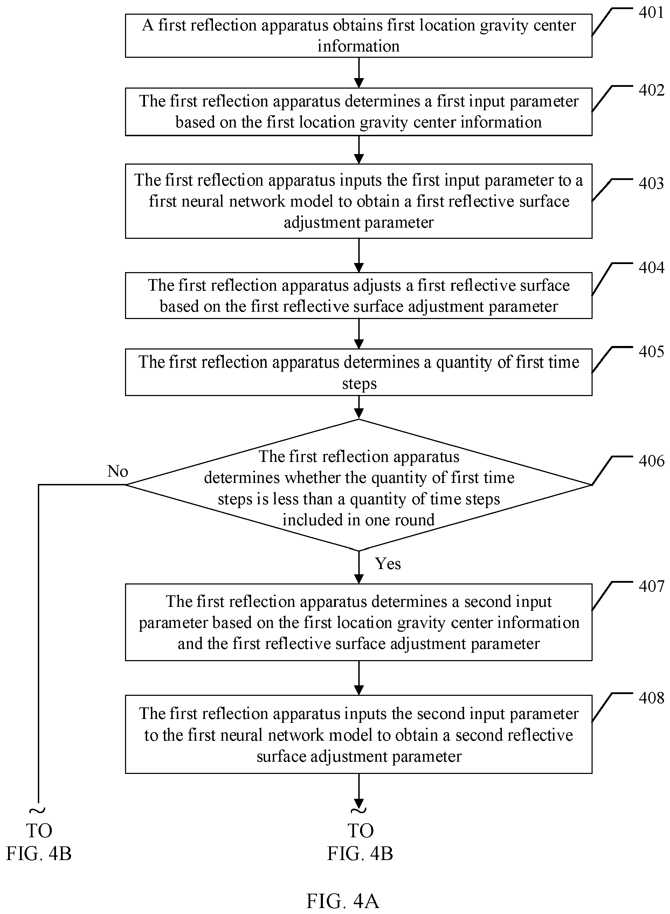

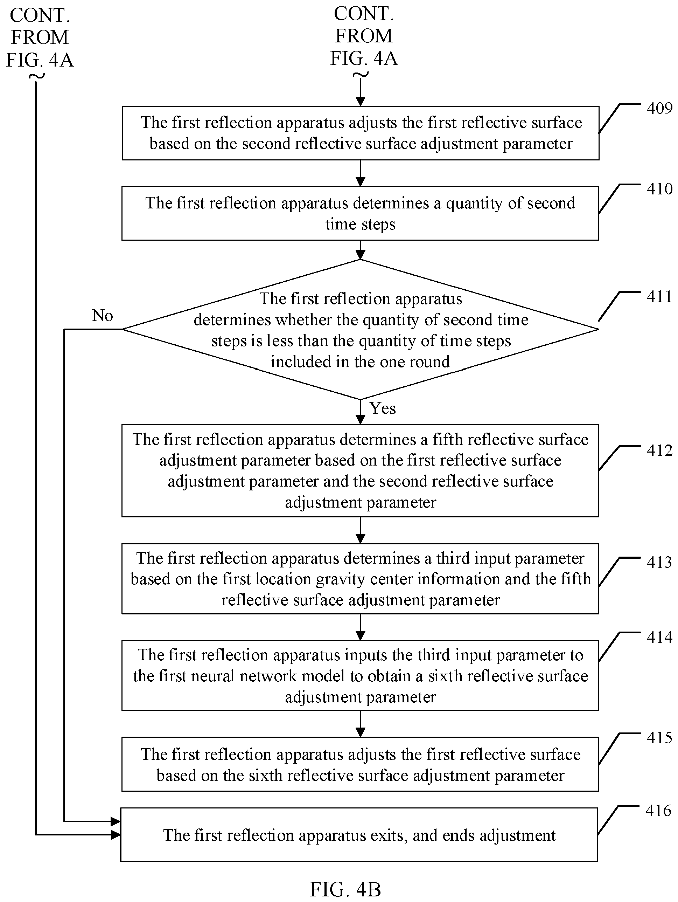

In the embodiment shown in FIG. 3A, if the first reflective surface adjustment parameter includes adjustment parameters of all the reflection units of the first reflective surface, the one round may be understood as including only one time step. In the embodiment shown in FIG. 3A, if the first reflective surface adjustment parameter includes adjustment parameters of only some reflection units of the first reflective surface, the one round may be understood as including a plurality of time steps. With reference to an embodiment shown in FIG. 4A and FIG. 4B, the following describes an execution process in which the one round includes a plurality of time steps.

FIG. 4A and FIG. 4B are a schematic diagram of another embodiment of a reflective surface adjustment method according to an embodiment of this application. The reflective surface adjustment method in FIG. 4A and FIG. 4B includes the following steps.

401: A first reflection apparatus obtains first location gravity center information.

402: The first reflection apparatus determines a first input parameter based on the first location gravity center information.

403: The first reflection apparatus inputs the first input parameter to a first neural network model to obtain a first reflective surface adjustment parameter.

404: The first reflection apparatus adjusts a first reflective surface based on the first reflective surface adjustment parameter.

Step 401 to step 404 are similar to step 301 to step 304 in the embodiment shown in FIG. 3A. For details, refer to related descriptions of step 301 to step 304.

A difference between this embodiment and the embodiment shown in FIG. 3A lies in that the first reflective surface adjustment parameter includes an adjustment parameter of a first reflection unit set, and the first reflection unit set includes some reflection units of the first reflective surface. That is, in step 404, the first reflection apparatus adjusts the some reflection units of the first reflective surface based on the adjustment parameter of the first reflecting unit set. For example, the first reflective surface includes 64 reflection units, and the 64 reflection units are arranged in order. The first reflective surface adjustment parameter includes adjustment parameters of a 1^{st} reflection unit to a 15^{th} reflection unit. The first reflection apparatus adjusts the 1^{st} reflection unit to the 15^{th} reflection unit based on the adjustment parameters of the 1^{st} reflection unit to the 15^{th} reflection unit.

405: The first reflection apparatus determines a quantity of first time steps.

Because step 401 to step 404 are a 1^{st} time step of one round of an inference process, the first reflection apparatus may determine that the quantity of first time steps is 1.

406: The first reflection apparatus determines whether the quantity of first time steps is less than a quantity of time steps included in the one round. If yes, step 407 is performed. If no, step 416 is performed.

The quantity of time steps included in the one round is determined, and may be specifically determined by the first reflection apparatus, or may be determined by an access network device and sent to the first reflection apparatus.

Specifically, the first reflection apparatus determines whether the quantity of first time steps is less than the quantity of time steps included in the one round. If yes, the first reflection apparatus performs a next time step. If no, the first reflection apparatus exits, that is, the first reflection apparatus ends adjustment of the first reflective surface.

407: The first reflection apparatus determines a second input parameter based on the first location gravity center information and the first reflective surface adjustment parameter.

Specifically, the first reflection apparatus separately preprocesses the first location gravity center information and the first reflective surface adjustment parameter. Then the first reflection apparatus splices preprocessed first location gravity center information and a preprocessed first reflective surface adjustment parameter to obtain the second input parameter, so that the second input parameter meets an input dimension and an input preference of the first neural network model.

For preprocessing of the first location gravity center information, refer to related descriptions of step 302 in the embodiment shown in FIG. 3A. The first reflection apparatus may perform the following preprocessing on the first reflective surface adjustment parameter: normalizing the first reflective surface adjustment parameter. Then the first reflection apparatus splices the first location gravity center information and the first reflective surface adjustment parameter. Specifically, the splicing may include any one or more of the following:
1. Data of the first reflective surface adjustment parameter is spliced with data of the first location gravity center information, and tensor of a specific dimension increases after the splicing.
2. The data of the first reflective surface adjustment parameter is spliced with data of a photo for representing the first location gravity center information, and tensor of a specific dimension increases after the splicing.
3. The data of the first reflective surface adjustment parameter is added to the data of the first location gravity center information, and data dimensions remain unchanged after the addition.
4. The data of the first reflective surface adjustment parameter is added to the data of the photo for representing the first location gravity center information, and data dimensions remain unchanged after the addition.

408: The first reflection apparatus inputs the second input parameter to the first neural network model to obtain a second reflective surface adjustment parameter.

The second reflective surface adjustment parameter includes adjustment parameters of some or all of reflection units in a second reflection unit set. The second reflection unit set includes a reflection unit of the first reflective surface other than the first reflection unit set.

409: The first reflection apparatus adjusts the first reflective surface based on the second reflective surface adjustment parameter.

Specifically, the first reflection apparatus adjusts, based on an adjustment parameter of the second reflection unit set, the reflection unit included in the second reflection unit set of the first reflective surface.

Step 408 and step 409 are similar to step 403 and step 404. For details, refer to related descriptions of step 403 and step 404. Details are not described herein again.

410: The first reflection apparatus determines a quantity of second time steps.

Because step 407 to step 410 are a process of a 2^{nd} time step of the one round of the inference process, the first reflection apparatus may determine that the quantity of second time steps is 2.

411: The first reflection apparatus determines whether the quantity of second time steps is less than the quantity of time steps included in the one round.

Step 410 and step 411 are similar to step 405 and step 406. For details, refer to related descriptions of step 405 and step 406. Details are not described herein again.

It should be noted that, if the quantity of second time steps is less than the quantity of time steps included in the one round, it can be learned that the second reflective surface adjustment parameter includes adjustment parameters of some reflection units in the second reflection unit set.

For example, the first reflective surface includes 64 reflection units, and the 64 reflection units are arranged in order. The first reflective surface adjustment parameter includes adjustment parameters of a 1^{st} reflection unit to a 15^{th} reflection unit. The second reflective surface adjustment parameter includes adjustment parameters of a 16^{th} reflection unit to a 30^{th} reflection unit.

412: The first reflection apparatus determines a fifth reflective surface adjustment parameter based on the first reflective surface adjustment parameter and the second reflective surface adjustment parameter.

Adjustment parameters of only some reflection units of the first reflective surface are obtained in a process of each time step. The first reflective surface adjustment parameter includes an adjustment parameter of a reflection unit included in the first reflection unit set, and the second reflective surface adjustment parameter includes adjustment parameters of some reflection units in the second reflection unit set. Therefore, the first reflection apparatus may combine the adjustment parameter of the first reflection unit set and the adjustment parameters of the some reflection units in the second reflection unit set to obtain the fifth reflective surface adjustment parameter.

For example, the first reflective surface adjustment parameter includes the adjustment parameters of the 1^{st} reflection unit to the 15^{th} reflection unit, and the second reflective surface adjustment parameter includes the adjustment parameters of the 16^{th} reflection unit to the 30^{th} reflection unit. In this case, the fifth reflective surface adjustment parameter includes adjustment parameters of the 1^{st} reflection unit to the 30^{th} reflection unit.

413: The first reflection apparatus determines a third input parameter based on the first location gravity center information and the fifth reflective surface adjustment parameter.

414: The first reflection apparatus inputs the third input parameter to the first neural network model to obtain a sixth reflective surface adjustment parameter.

415: The first reflection apparatus adjusts the first reflective surface based on the sixth reflective surface adjustment parameter.

Step 413 to step 415 are similar to step 407 to step 409. For details, refer to related descriptions of step 407 to step 409. Details are not described herein again.

After step 415 is completed, the first reflection apparatus may determine a quantity of third time steps, where the quantity of third time steps is a quantity of time steps included in step 401 to step 415. The first reflection apparatus determines whether the quantity of third time steps is less than the quantity of time steps included in the one round. If yes, a 4^{th} time step is further performed based on an execution process similar to that of step 412 to step 415. If no, step 416 is performed. Execution processes of a 5^{th} time step and a 6^{th} time step to an n^{th} time step are similar to the execution process of the third time step. Details are not described herein again.

416: The first reflection apparatus exits, and ends adjustment of the first reflective surface.

In this embodiment of this application, the first reflection apparatus may obtain historical training data, and update a second neural network model of the first reflection apparatus based on the historical training data, to obtain the first neural network model in the embodiment shown in FIG. 3A. A stage in which the first reflection apparatus updates the second neural network model may be referred to as a training stage. The first neural network model can adapt to an environment through exploration in a continuous trial and error manner. In this way, after the first reflection apparatus adjusts the first reflective surface based on the first location gravity center information output by the first neural network model, a radio environment within a signal coverage area of the first reflective surface is optimized, and network communication performance is improved. For a specific training process, refer to related descriptions of an embodiment shown in FIG. 5A.

FIG. 5A is a schematic diagram of another embodiment of a reflective surface adjustment method according to an embodiment of this application. The reflective surface adjustment method in FIG. 5A includes the following steps.

501: A first reflection apparatus obtains historical location gravity center information, a historical reflective surface adjustment parameter, and historical weighted performance indicator feedback information.

The historical location gravity center information includes N pieces of location gravity center information. The historical reflective surface adjustment parameter includes N reflective surface adjustment parameters. The historical weighted performance indicator feedback information includes N pieces of weighted performance indicator feedback information. N is an integer greater than or equal to 1.

The N pieces of location gravity center information, the N historical reflective surface adjustment parameters, and the N pieces of weighted performance indicator feedback information are in a one-to-one correspondence.

The N pieces of location gravity center information include weighted locations, reported by an access network device at different time, of a terminal device within a coverage area of a reflected signal of a first reflective surface.

Each of the N reflective surface adjustment parameters includes an adjustment parameter that is used to adjust the first reflective surface and that is obtained by the first reflection apparatus through decision-making based on location gravity center information corresponding to the reflective surface adjustment parameter.

Each of the N pieces of weighted performance indicator feedback information includes a weighted performance indicator of a terminal device within a coverage area of a reflected signal of the first reflective surface after the first reflective surface is adjusted based on a reflective surface adjustment parameter corresponding to each piece of weighted performance indicator feedback information.

Specifically, a second neural network model is preset in the first reflection apparatus. The first reflection apparatus may obtain N data groups through an inference process similar to that in the embodiment shown in FIG. 3A, and use the N data groups as training data to update the second neural network model.

Each data group includes one piece of location gravity center information, one reflective surface adjustment parameter, and one piece of weighted performance indicator feedback information. For example, a 1^{st} data group may be recorded as {location gravity center information 1, reflective surface adjustment parameter 1, weighted performance indicator feedback information 1}. The reflective surface adjustment parameter 1 is an adjustment parameter that is used to adjust the first reflective surface and that is determined by the first reflection apparatus based on the location gravity center information 1. The weighted performance indicator feedback information 1 includes a weighted performance indicator, obtained after the first reflection apparatus adjusts the first reflective surface based on the reflective surface adjustment parameter 1, of a terminal device within a coverage area of a reflected signal of the first reflective surface.

Optionally, each of the N reflective surface adjustment parameters further includes an adjustment parameter for adjusting a mounting location of the first reflective surface.

It can be learned from the embodiment shown in FIG. 3A that the first reflective surface adjustment parameter further includes the adjustment parameter for adjusting the mounting location of the first reflective surface. Therefore, the N reflective surface adjustment parameters include the adjustment parameter for adjusting the mounting location of the first reflective surface. In this way, in step 502, the second neural network model may be updated based on the N reflective surface adjustment parameters to obtain a first neural network model. Therefore, in the embodiment shown in FIG. 3A, the first reflection apparatus can more effectively adjust the mounting location of the first reflective surface based on the first reflective surface adjustment parameter that is output based on the first location gravity center information, to further optimize a radio environment within the coverage area of the reflected signal of the first reflective surface.

It should be noted that each of the N reflective surface adjustment parameters is represented by using a sequence number. That is, the first reflection apparatus stores a mapping relationship between a reflective surface adjustment parameter and a sequence number corresponding to the reflective surface adjustment parameter. For example, the mapping relationship between a reflective surface adjustment parameter and a sequence number corresponding to the reflective surface adjustment parameter may be specifically shown in Table 3.

**Table 3**

| Sequence number | Reflective surface adjustment codebook |
|---|---|
| 1 | Codebook A |
| 2 | Codebook B |
| 3 | Codebook C |

It can be learned from Table 1 that the codebook A corresponds to the sequence number 1, and the codebook B corresponds to the sequence number 2. A process of obtaining N reflective surface adjustment codebooks by the first reflection apparatus may be similar to the inference process shown in FIG. 3A. The decision unit 202 of the first reflection apparatus outputs a sequence number corresponding to a reflective surface adjustment codebook, to avoid a case that adjustment values corresponding to a plurality of reflection units included in the first reflective surface need to be output each time. The first reflection apparatus determines a corresponding reflective surface adjustment codebook based on the sequence number, and then adjusts the first reflective surface based on the reflective surface adjustment codebook.

502: The first reflection apparatus updates the second neural network model based on the historical location gravity center information, the historical reflective surface adjustment parameter, and the historical weighted performance indicator feedback information, to obtain the first neural network model.

A specific process of updating the second neural network model by the first reflection apparatus is described below with reference to step 502a to step 502c.

Step 502a: The first reflection apparatus estimates a weighted performance indicator expectation based on a third neural network model, an i^{th} piece of location gravity center information of the historical location gravity center information, and an i^{th} reflective surface adjustment parameter of the historical reflective surface adjustment parameter.

The weighted performance indicator expectation is used to indicate a weighted performance indicator of a terminal device within a coverage area of a reflected signal of the first reflective surface after the first reflective surface is adjusted based on the N reflective surface adjustment parameters in the future. For example, four data groups are obtained in step 501, and it is assumed that the 1^{st} data group is currently used in step 502a. The first reflection apparatus may preliminarily estimate, by using the third neural network model and the location gravity center information 1 and the reflective surface adjustment parameter 1 that are included in the 1^{st} data group, a performance indicator expectation that can be obtained by adjusting the first reflective surface by using the four data groups in the future.

The second neural network model may be updated by using a policy gradient-based reinforcement learning method. The policy gradient method is to maximize a weighted performance indicator expectation by continuously estimating a gradient of a future weighted performance indicator expectation.

The historical location gravity center information, the historical reflective surface adjustment parameter, and the historical weighted performance indicator feedback information may be data of one round, or may be data of a plurality of rounds. This is not specifically limited in this application. An example in which the historical location gravity center information, the historical reflective surface adjustment parameter, and the historical weighted performance indicator feedback information are data of a plurality of rounds is used below for description.

The weighted performance indicator expectation may be expressed as an average value of weighted performance indicators of a plurality of rounds, and a weighted performance indicator of each round may be expressed as follows: $Ex = E \left[{\sum }_{t = 0}^{T} {r}_{t}\right]$

*rₜ* is a weighted performance indicator corresponding to a t^{th} time step, and Ex indicates a sum of weighted performance indicators of T time steps of one round, that is, a sum of all performance indicators of the round in the future is obtained. t is an integer greater than or equal to 1 and less than T, and T is an integer greater than or equal to 1.

The third neural network model is a neural network model preset in the first reflection apparatus, and the third neural network model is used to estimate a performance indicator expectation based on location gravity center information and a reflective surface adjustment parameter.

Step 502b: The first reflection apparatus updates the second neural network model based on the weighted performance indicator expectation, the i^{th} piece of location gravity center information, and the i^{th} reflective surface adjustment parameter, to obtain the first neural network model, where i is an integer greater than or equal to 1 and less than or equal to N.

With reference to step 502a, it can be learned that the second neural network model may be updated by using the policy gradient-based reinforcement learning method. The first reflection apparatus updates the second neural network model by using an optimization method, for example, decreasing an average value of estimated gradients of a plurality of rounds, or increasing an average value of estimated gradients of a plurality of rounds. An estimated gradient of each round is calculated as follows: $g = {∇}_{θ} Ex = E \left[{\sum }_{t = 0}^{T} {r}_{t} {∇}_{θ} log {π}_{θ}\left(\left.{a}_{t}\right|{s}_{t}\right)\right]$

θ in the formula 3 includes parameter values such as a weight and a bias of a connection between neurons in the second neural network model. ∇_{θ} Ex indicates to perform a gradient operation on Ex with respect to θ. π_{θ} indicates the second neural network model. sₜ indicates an input parameter of a t^{th} time step of a round. aₜ indicates a reflective surface adjustment parameter output after the input parameter sₜ of the t^{th} time step of the round is input to the second neural network model. π_{θ} (aₜ|sₜ) is a probability of outputting at by the second neural network model. logπ_{θ}(aₜ|sₜ) indicates to calculate, by using e as a base, a logarithm of the probability of outputting at by the second neural network model. rₜ∇_{θ}logπ_{θ} (aₜ|sₜ) indicates to perform a gradient operation on logπ_{θ} (aₜ|sₜ) with respect to θ and then multiply an operation result by a weighted performance indicator rₜ obtained after the first reflective surface is adjusted based on aₜ, to obtain a gradient value of the t^{th} time step. g is equivalent to calculating an expectation based on the gradient value of the weighted performance indicator obtained after the first reflective surface is adjusted based on aₜ.

That the first reflection apparatus updates the second neural network model is a process of updating θ by using the optimization method, for example, decreasing an average value of estimated gradients of a plurality of rounds, or increasing an average value of estimated gradients of a plurality of rounds.

Step 502c: The first reflection apparatus updates the third neural network model based on the historical location gravity center information, the historical reflective surface adjustment parameter, and the historical weighted performance indicator feedback information.

A second neural network is an actor (actor) network. When a critic (critic) network (namely, the third neural network model) exists, rₜ in the formula 3 may be obtained through estimation by the third neural network model. The third neural network model may be updated by calculating a gradient of a temporal difference error of prediction of rₜ in each time step t and performing optimization.

For example, as shown in FIG. 2D, the transceiver 205 obtains N pieces of location gravity center information and N pieces of weighted performance indicator feedback information. The decision unit 203 respectively outputs corresponding N reflective surface adjustment parameters based on the N pieces of location gravity center information in an inference stage. The deep reinforcement learning unit 207 updates the second neural network model based on the N pieces of location gravity center information, the N reflective surface adjustment parameters, and the N pieces of weighted performance indicator feedback information, to obtain the first neural network model.

Step 502a to step 502c show a process of updating, by the first reflection apparatus, the second neural network model based on the i^{th} piece of location gravity center information and the i^{th} reflective surface adjustment parameter. A processing process for another piece of location gravity center information of the N pieces of location gravity center information and another reflective surface adjustment parameter of the N reflective surface adjustment parameters is similar.

The first neural network model is obtained through the training process (that is, updating the third neural network model) of step 501 and step 502. Therefore, in the embodiment shown in FIG. 3A, after the first reflective surface is adjusted based on the first reflective surface adjustment parameter, a radio environment of a terminal device within a coverage area of a reflected signal of the first reflective surface can be optimized. This may be specifically represented by a weighted performance indicator of the terminal device within the coverage area of the reflected signal of the first reflective surface. For example, a weighted signal-to-noise ratio of the terminal device within the coverage area of the reflected signal of the first reflective surface is maximized, and/or a weighted packet error rate of the terminal device within the coverage area of the reflected signal of the first reflective surface is minimized, and/or a weighted throughput of the terminal device within the coverage area of the reflected signal of the first reflective surface is maximized.

For example, the weighted signal-to-noise ratio and the weighted packet error rate jointly represent channel quality in a radio environment of a terminal device within a coverage area of a reflected signal of the first reflective surface after the first reflective surface is adjusted based on the first reflective surface adjustment parameter. The weighted signal to interference plus noise ratio is set as a positive item, and the weighted packet error rate is set as a negative item. That is, the weighted performance indicator includes two performance indicators: the weighted signal to interference plus noise ratio and the weighted packet error rate.

In this embodiment, in a scenario in which there are a plurality of reflection apparatuses, when there is an intersection between the coverage area of the reflected signal of the first reflective surface of the first reflection apparatus and a coverage area of a reflected signal of a second reflective surface of a second reflection apparatus, the first reflection apparatus and the second reflection apparatus may exchange information, so that a plurality of reflective surfaces jointly optimize a radio environment. Optionally, the embodiment shown in FIG. 5A further includes step 503, and step 503 is performed before step 502.

503: The first reflection apparatus obtains second location gravity center information and a third reflective surface adjustment parameter of the second reflection apparatus.

The second location gravity center information includes a weighted location, stored in the second reflection apparatus, of a terminal device within the coverage area of the reflected signal of the second reflective surface at a fifth sending moment. The fifth sending moment is a sending moment at which the second reflection apparatus sends the second location gravity center information. The third reflective surface adjustment parameter is a reflective surface adjustment parameter that is used to adjust the second reflective surface and that is determined by the second reflection apparatus based on the second location gravity center information.

In this case, step 502 specifically includes: The first reflection apparatus updates the second neural network model based on the historical location gravity center information, the historical reflective surface adjustment parameter, the historical weighted performance indicator feedback information, the second location gravity center information, and the third reflective surface adjustment parameter.

For example, as shown in FIG. 5B, there is an intersection between the coverage area of the reflected signal of the first reflective surface and the coverage area of the reflected signal of the second reflective surface. The first reflection apparatus and the second reflection apparatus may exchange location gravity center information and a reflective surface adjustment parameter. The first reflection apparatus may update the second neural network model based on the second location gravity center information and the third reflective surface adjustment parameter of the second reflection apparatus, to obtain the first neural network model. In this way, in the embodiment shown in FIG. 3A, the first reflective surface adjustment parameter is obtained through inference by using the first neural network model, and the radio environment within the coverage area of the reflected signal of the first reflective surface is adjusted based on the first reflective surface adjustment parameter, so that a plurality of reflective surfaces jointly optimize a radio environment to increase a signal-to-noise ratio or an average throughput and improve network communication performance.

In this case, optionally, step 502c specifically includes: The first reflection apparatus updates the third neural network model based on the historical location gravity center information, the historical reflective surface adjustment parameter, the historical weighted performance indicator feedback information, the second location gravity center information, and the third reflective surface adjustment parameter.

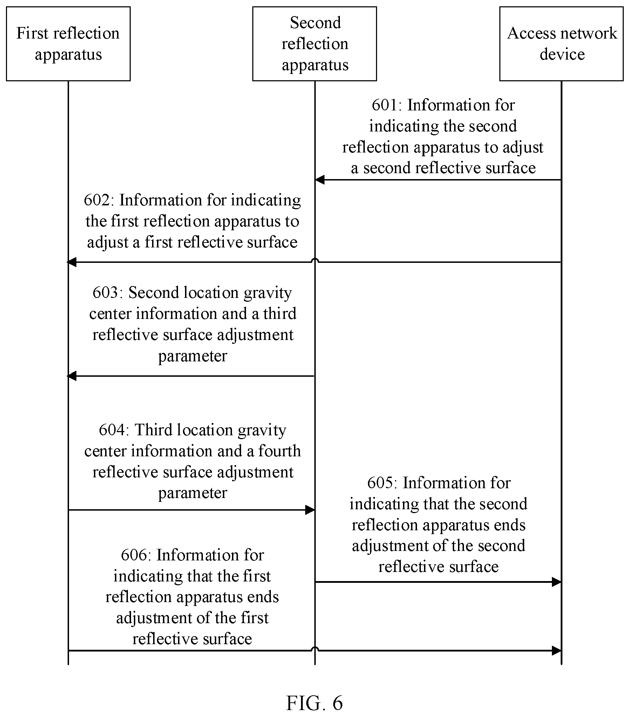

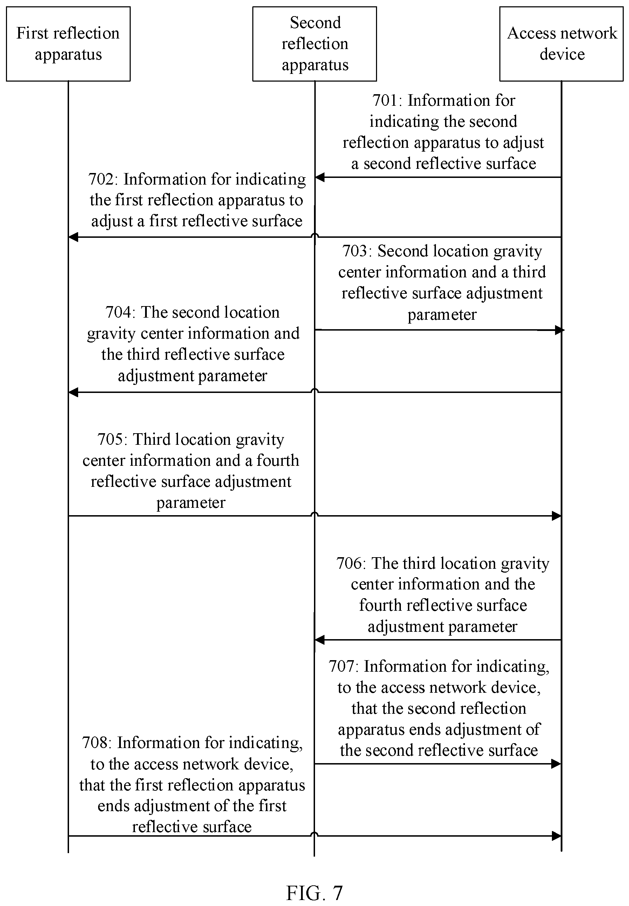

In this embodiment, in step 503, the first reflection apparatus may receive the second location gravity center information and the third reflective surface adjustment parameter from the second reflection apparatus or the access network device. With reference to specific obtaining scenarios in FIG. 6 and FIG. 7, the following describes how the first reflection apparatus obtains the second location gravity center information and the third reflective surface adjustment parameter.

FIG. 6 is a schematic diagram of another embodiment of a reflective surface adjustment method according to an embodiment of this application. The method in FIG. 6 includes the following steps.

601: An access network device sends, to a second reflection apparatus, information for indicating the second reflection apparatus to adjust a second reflective surface.

The information for indicating the second reflection apparatus to adjust the second reflective surface is indication information or another type of information. This is not specifically limited in this application.

602: The access network device sends, to a first reflection apparatus, information for indicating the first reflection apparatus to adjust a first reflective surface.

The information for indicating the first reflection apparatus to adjust the first reflective surface is indication information or another type of information. This is not specifically limited in this application.

603: The second reflection apparatus sends second location gravity center information and a third reflective surface adjustment parameter to the first reflection apparatus.

For the second location gravity center information and the third reflective surface adjustment parameter, refer to related descriptions of the embodiment shown in FIG. 5A. Details are not described herein again.

In step 603, the first reflection apparatus can obtain the second location gravity center information and the third reflective surface adjustment parameter.

604: The first reflection apparatus sends third location gravity center information and a fourth reflective surface adjustment parameter to the first reflection apparatus.

The third location gravity center information includes a weighted location, stored in the first reflection apparatus, of a terminal device within a coverage area of a reflected signal of the first reflective surface at a first sending moment. The third sending moment is a sending moment at which the first reflection apparatus sends the third location gravity center information and the fourth reflective surface adjustment parameter.

The fourth reflective surface adjustment parameter is a reflective surface adjustment parameter that is used to adjust the first reflective surface and that is determined by the first reflection apparatus based on the third location gravity center information.

Specifically, at an information exchange moment, the first reflection apparatus and the second reflection apparatus exchange location gravity center information and a corresponding reflective surface adjustment parameter that are stored by each other.

605: The second reflection apparatus sends, to the access network device, information for indicating, to the access network device, that the second reflection apparatus ends adjustment of the second reflective surface.

The information for indicating that the second reflection apparatus ends adjustment of the second reflective surface is indication information or another type of information. This is not specifically limited in this application.

606: The first reflection apparatus sends, to the access network device, information for indicating, to the access network device, that the first reflection apparatus ends adjustment of the first reflective surface.

The information for indicating that the first reflection apparatus ends adjustment of the first reflective surface is indication information or another type of information. This is not specifically limited in this application.

It can be learned from FIG. 6 that the first reflection apparatus and the second reflection apparatus exchange information in a process in which the access network device schedules the first reflection apparatus to adjust the first reflective surface and the access network device schedules the second reflection apparatus to adjust the second reflective surface, so that a plurality of reflective surfaces jointly optimize a radio environment.

FIG. 7 is a schematic diagram of another embodiment of a reflective surface adjustment method according to an embodiment of this application. The method in FIG. 7 includes the following steps.

701: An access network device sends, to a second reflection apparatus, information for indicating the second reflection apparatus to adjust a second reflective surface.

702: The access network device sends, to a first reflection apparatus, information for indicating the first reflection apparatus to adjust a first reflective surface.

Step 701 and step 702 are similar to step 601 and step 602 in the embodiment shown in FIG. 6. For details, refer to related descriptions of step 601 and step 602 in the embodiment shown in FIG. 6. Details are not described herein again.

703: The second reflection apparatus sends second location gravity center information and a third reflective surface adjustment parameter to the access network device.

704: The access network device sends the second location gravity center information and the third reflective surface adjustment parameter to the first reflection apparatus.

705: The access network device sends third location gravity center information and a fourth reflective surface adjustment parameter to the second reflection apparatus.

706: The access network device sends the third location gravity center information and the fourth reflective surface adjustment parameter to the second reflection apparatus.

For the first location gravity center information, the third reflective surface adjustment parameter, the third location gravity center information, and the fourth reflective surface adjustment parameter, refer to the foregoing related descriptions. Details are not described herein again.

707: The second reflection apparatus sends, to the access network device, information for indicating, to the access network device, that the second reflection apparatus ends adjustment of the second reflective surface.

708: The first reflection apparatus sends, to the access network device, information for indicating, to the access network device, that the first reflection apparatus ends adjustment of the second reflective surface.

Step 707 and step 708 are similar to step 605 and step 606 in the embodiment shown in FIG. 6. For details refer to related descriptions of step 605 and step 606 in the embodiment shown in FIG. 6.

It can be learned from the embodiment shown in FIG. 7 that the access network device collects the second location gravity center information and the third reflective surface adjustment parameter, and sends the second location gravity center information and the third reflective surface adjustment parameter to the first reflection apparatus. That is, in the embodiment shown in FIG. 7, information is exchanged between a plurality of reflection apparatuses through the access network device, so that a plurality of reflective surfaces jointly optimize a radio environment.

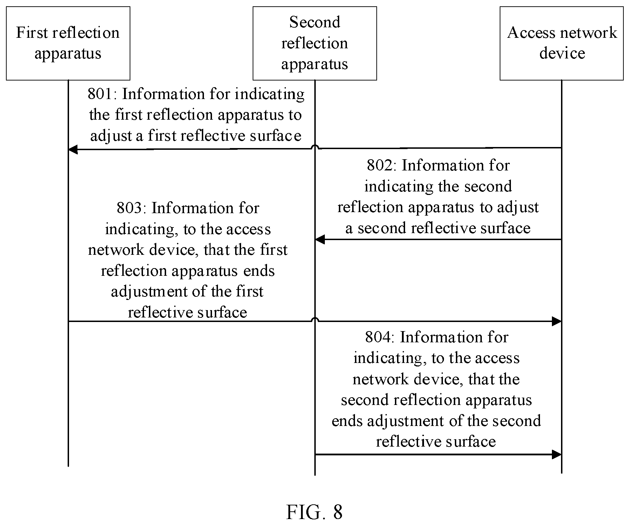

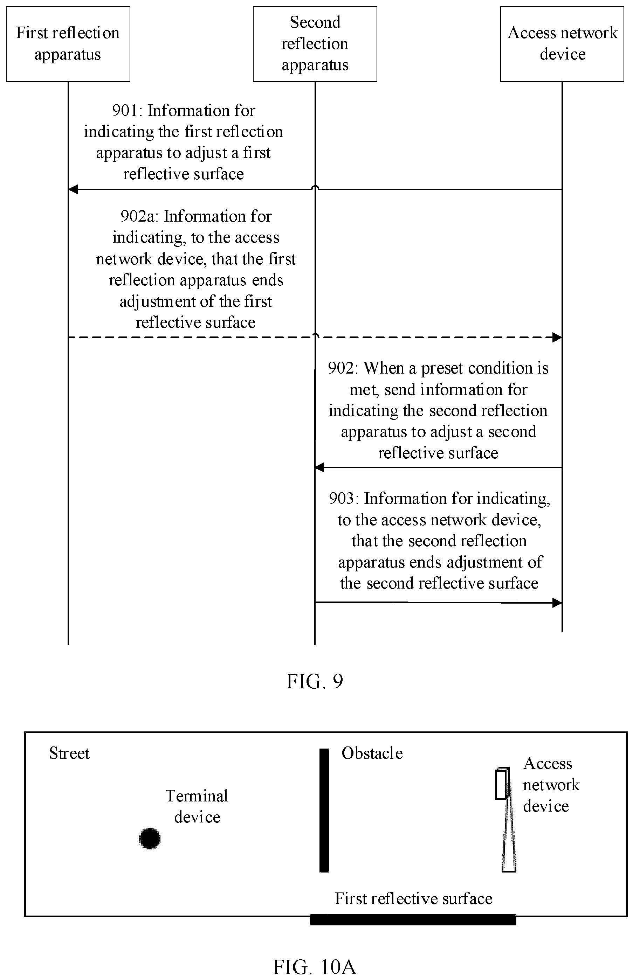

A process of updating the second neural network model by the first reflection apparatus is shown in the embodiment of FIG. 5A. In a scenario in which there are a plurality of reflection apparatuses, different reflection apparatuses may simultaneously update neural network models, so that a plurality of reflective surfaces jointly optimize a radio environment; or different reflection apparatuses may separately update neural network models. With reference to FIG. 8 and FIG. 9, the following separately describes two possible implementations of scheduling, by the access network device, the first reflection apparatus and the second reflection apparatus to separately update a neural network model.

FIG. 8 is a schematic diagram of another embodiment of a reflective surface adjustment method according to an embodiment of this application. The method in FIG. 8 includes the following steps.

801: An access network device sends, to a first reflection apparatus at a third sending moment, information for indicating the first reflection apparatus to adjust a second reflective surface.

802: The access network device sends, to a second reflection apparatus at a fourth sending moment, information for indicating the second reflection apparatus to adjust a first reflective surface.

803: The access network device receives, at a first receiving moment, information that is sent by the first reflection apparatus and that is used to indicate that the first reflection apparatus ends adjustment of the first reflective surface.

804: The access network device receives, at a second receiving moment, information that is sent by the second reflection apparatus and that is used to indicate that the second reflection apparatus ends adjustment of the second reflective surface.

A first time period is a time period between the third sending moment and the first receiving moment, and a second time period is a time period between the fourth sending moment and the second receiving moment. There is an intersection between the first time period and the second time period. That is, the access network device may schedule the first reflection apparatus and the second reflection apparatus, so that the first reflection apparatus and the second reflection apparatus can perform model training processes in a same time period.

It should be noted that the information exchange between the first reflection apparatus and the second reflection apparatus may alternatively be performed in the process of the embodiment in FIG. 8. For a specific exchange process, refer to related descriptions of FIG. 6 or FIG. 7.

In the embodiment shown in FIG. 8, if there is an intersection between a coverage area of a reflected signal of the first reflective surface of the first reflection apparatus and a coverage area of a reflected signal of the second reflection apparatus, the first reflection apparatus and the second reflection apparatus may simultaneously perform training, so that a plurality of reflection apparatuses can jointly optimize a radio environment subsequently.

FIG. 9 is a schematic diagram of another embodiment of a reflective surface adjustment method according to an embodiment of this application. The method in FIG. 9 includes the following steps.

901: An access network device sends, to a second reflection apparatus, information for indicating the second reflection apparatus to adjust a second reflective surface.

The information for indicating the second reflection apparatus to adjust the second reflective surface may be indication information or another type of information. This is not specifically limited in this application.

902: When a preset condition is met, the access network device sends, to a first reflection apparatus, information for indicating the first reflection apparatus to adjust a first reflective surface.

In this embodiment, the preset condition includes any one of the following:
1. The access network device receives information that is sent by the first reflection apparatus and that is used to indicate, to the access network device, that the second reflection apparatus ends adjustment of the second reflective surface. For example, as shown in FIG. 9, before step 902, this embodiment further includes step 902a.

Step 902a: The access network device receives information that is sent by the first reflection apparatus and that is used to indicate that the second reflection apparatus ends adjustment of the second reflective surface.

The information for indicating, to the access network device, that the second reflection apparatus ends adjustment of the second reflective surface is indication information or another type of information. This is not specifically limited in this application.

2. A time interval between a current moment and an eighth sending moment is greater than or equal to first preset duration. The eighth sending moment is a moment at which the access network device sends, to the second reflection apparatus, information for indicating the second reflection apparatus to adjust the second reflective surface. The current moment is a moment at which the access network device determines whether the preset condition is met.

903: The second reflection apparatus sends, to the access network device, information for indicating, to the access network device, that the first reflection apparatus ends adjustment of the first reflective surface.

The information for indicating that the first reflection apparatus ends adjustment of the first reflective surface is indication information or another type of information. This is not specifically limited in this application.

An implementation in which a plurality of reflection apparatuses separately perform training in different time periods is shown in the embodiment of FIG. 9. This avoids instability and long convergence time of a game process during simultaneous training, and improves efficiency of training a neural network model.

The following describes another application scenario of a first reflection apparatus in embodiments of this application.

In a non-line-of-sight (non-line-of-sight, NLOS) scenario or a blocked scenario, a terminal device, an access network device, and the first reflection apparatus cooperate to establish an optimal beam alignment path. In this way, a beam transmitted by the terminal device is aligned with a reflective surface of the reflection apparatus, and then the reflective surface reflects the beam to the access network device; or a beam transmitted by the access network device is aligned with a reflective surface of the reflection apparatus, and then the reflective surface reflects the beam to the terminal device.

For example, as shown in FIG. 10A, an obstacle appears on a transmission path between the terminal device and a base station. When detecting NLOS or the obstacle, the terminal device and the access network device may actively switch a beam, to align the beam with a first reflective surface, and the first reflective surface reflects the beam to the access network device.

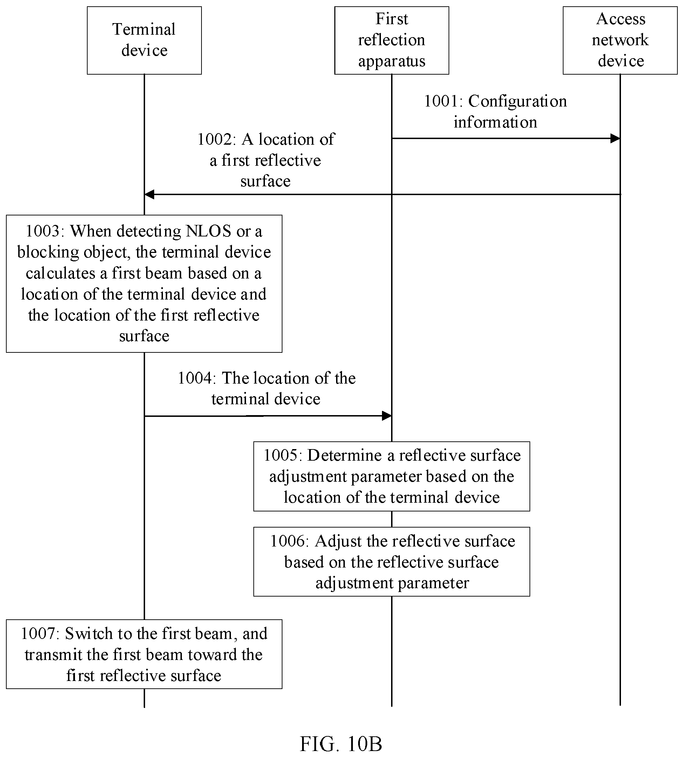

The following describes a specific implementation process with reference to an embodiment shown in FIG. 10B.

FIG. 10B is a schematic diagram of another embodiment of a reflective surface adjustment method according to an embodiment of this application. The reflective surface adjustment method in FIG. 10B includes the following steps.

1001: A first reflection apparatus sends configuration information of the first reflection apparatus to an access network device.

1002: The access network device sends a location of a first reflective surface to a terminal device.

For the configuration information and the location of the first reflective surface, refer to related descriptions of step 301b in FIG. 3B. Details are not described herein again.

1003: When the terminal device detects NLOS or a blocking object, the terminal device calculates a first beam based on a location of the terminal device and the location of the first reflective surface.

For example, as shown in FIG. 10A, the terminal device detects the obstacle, and the terminal device calculates the first beam based on the location of the terminal device and the location of the first reflective surface, so that the first beam is aligned with the first reflective surface.

1004: The terminal device sends a location of the terminal device to the first reflection apparatus.

For related descriptions of the location of the terminal device, refer to related descriptions in the embodiment shown in FIG. 3A. Details are not described herein again.

1005: The first reflection apparatus determines a reflective surface adjustment parameter based on the location of the terminal device.

1006: The first reflection apparatus adjusts the reflective surface based on the reflective surface adjustment parameter.

1007: The terminal device switches to the first beam, and transmits the first beam toward the first reflective surface.

Specifically, the terminal device switches to the first beam, and reflects the first beam toward the first reflective surface. In this case, the first reflective surface of the first reflection apparatus receives the first beam, and the first reflective surface reflects the first beam to the access network device, to provide an alternative beam transmission path for the terminal device and the access network device, and improve network transmission performance.

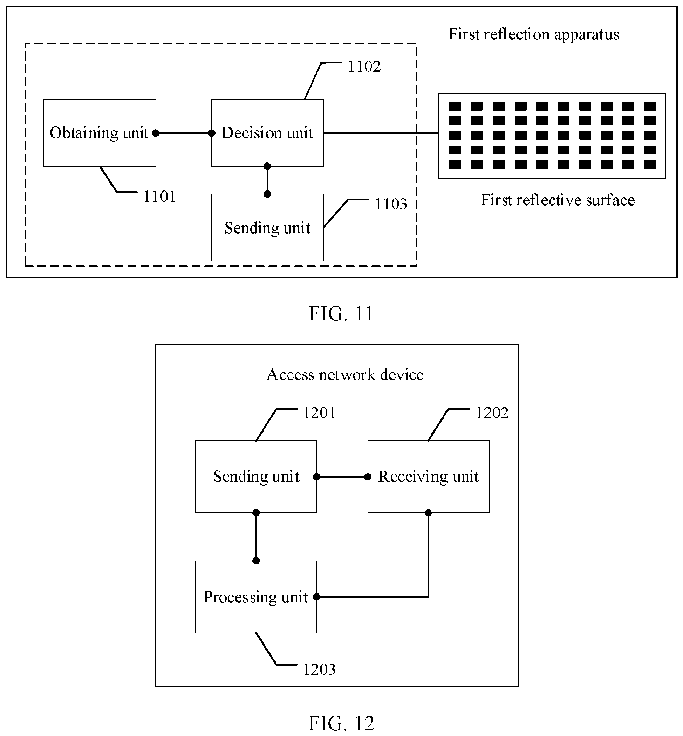

The following describes a first reflection apparatus provided in embodiments of this application. FIG. 11 is a schematic diagram of a structure of a first reflection apparatus according to an embodiment of this application. The first reflection apparatus may be configured to perform the steps performed by the first reflection apparatus in the embodiments shown in FIG. 3A, FIG. 3B, FIG. 3D, FIG. 3F, FIG. 3G, FIG. 4A and FIG. 4B, FIG. 5A, FIG. 6, FIG. 7, FIG. 8, FIG. 9, and FIG. 10B. Refer to related descriptions in the foregoing method embodiments.

The first reflection apparatus includes an obtaining unit 1101 and a decision unit 1102. Optionally, the first reflection apparatus further includes a sending unit 1103.

The obtaining unit 1101 is configured to obtain first location gravity center information, where the first location gravity center information includes a weighted location of a terminal device within a coverage area of a reflected signal of the first reflective surface.

The decision unit 1102 is configured to determine a first input parameter based on the first location gravity center information, input the first input parameter to a first neural network model to obtain a first reflective surface adjustment parameter, and adjust the first reflective surface based on the first reflective surface adjustment parameter.

In a possible implementation, the obtaining unit 1101 is specifically configured to:
obtain the first location gravity center information from an access network device, or determine the first location gravity center information based on a location of the terminal device within the coverage area of the reflected signal of the first reflective surface, where
the location of the terminal device within the coverage area of the reflected signal of the first reflective surface is fed back by the terminal device, fed back by a location detector, or obtained from a photo of the coverage area of the reflected signal of the first reflective surface.

In another possible implementation, the location of the terminal device within the coverage area of the reflected signal of the first reflective surface includes: a sequence number of a sub-grid corresponding to each terminal device within the coverage area of the reflected signal of the first reflective surface, where each sub-grid corresponds to one coordinate location range; or a coordinate location corresponding to each terminal device.

In another possible implementation, the first reflection apparatus further includes a sending unit 1103, and the sending unit 1103 is configured to:
send a reconstruction weight of the first reflective surface to the access network device.

In another possible implementation, the first reflective surface includes a reflection unit, the first reflective surface adjustment parameter includes an adjustment parameter for adjusting the reflection unit, and the decision unit 1102 is specifically configured to:
adjust the reflection unit based on the adjustment parameter for adjusting the reflection unit.

In another possible implementation, the decision unit 1102 is specifically configured to:
adjust any one or more of the following items of the reflection unit based on the adjustment parameter for adjusting the reflection unit: a voltage of the reflection unit, or a resistance of the reflection unit.

In another possible implementation, the first reflective surface adjustment parameter further includes an adjustment parameter for adjusting a mounting location of the first reflective surface, and the decision unit 1102 is specifically configured to:
adjust the mounting location of the first reflective surface based on the adjustment parameter for adjusting the mounting location of the first reflective surface.

In another possible implementation, the mounting location of the first reflective surface includes any one or more of the following: a height, a latitude and a longitude, a downtilt angle, an azimuth angle, or a pitch angle of the first reflective surface.

In another possible implementation, the first reflective surface includes a plurality of reflection units, the first reflective surface adjustment parameter includes an adjustment parameter of a first reflection unit set, and the first reflection unit set includes some of the plurality of reflection units;
the decision unit 1102 is further configured to determine a second input parameter based on the first location gravity center information and the first reflective surface adjustment parameter, and input the second input parameter to the first neural network model to obtain a second reflective surface adjustment parameter, where
the second reflective surface adjustment parameter includes an adjustment parameter for adjusting a second reflection unit set, and the second reflection unit set includes some or all of reflection units of the first reflective surface other than the some reflection units included in the first reflection unit set; and
the decision unit 1102 is further configured to adjust the reflection units in the second reflection unit set of the first reflective surface based on the second reflective surface adjustment parameter.

In another possible implementation, the obtaining unit 1101 is further configured to:
receive weighted performance indicator feedback information from the access network device, where the weighted performance indicator feedback information includes a performance indicator of a terminal device within a coverage area of a reflected signal of the first reflective surface after the first reflective surface is adjusted based on the first reflective surface adjustment parameter.

In another possible implementation, the weighted performance indicator feedback information includes at least one of the following: a weighted average transmission rate, a weighted packet error rate, a weighted signal to interference plus noise ratio, weighted RSRP, or weighted RSRQ.

In another possible implementation, the sending unit 1103 is further configured to:
send an adjustment time point of the first reflective surface to the access network device; and
the decision unit 1102 is specifically configured to:

   determine, based on the adjustment time point, to perform the step of adjusting the first reflective surface based on the first reflective surface adjustment parameter.

In another possible implementation, the obtaining unit 1101 is further configured to:
receive, from the access network device, information for indicating the first reflection apparatus to adjust the first reflective surface; and
the decision unit 1102 is specifically configured to:

determine, based on the information for indicating the first reflection apparatus to adjust the first reflective surface, to perform the step of adjusting the first reflective surface based on the first reflective surface adjustment parameter.

In another possible implementation, the coverage area of the reflected signal of the first reflective surface includes a part or all of a signal coverage area of each of a plurality of access network devices; and
the obtaining unit 1101 is specifically configured to:
receive location gravity center information sent by each access network device; and
determine the first location gravity center information based on the location gravity center information sent by each access network device.

In another possible implementation, the obtaining unit 1101 is further configured to:
obtain historical location gravity center information, a historical reflective surface adjustment parameter, and historical weighted performance indicator feedback information, where the historical location gravity center information includes N pieces of location gravity center information, the historical reflective surface adjustment parameter includes N reflective surface adjustment parameters, the historical weighted performance indicator feedback information includes N pieces of weighted performance indicator feedback information, and N is an integer greater than or equal to 1; the N pieces of location gravity center information, the N historical reflective surface adjustment parameters, and the N pieces of weighted performance indicator feedback information are in a one-to-one correspondence; the N pieces of location gravity center information include weighted locations, reported by the access network device at different time, of the terminal device within the coverage area of the reflected signal of the first reflective surface; each of the N reflective surface adjustment parameters includes an adjustment parameter that is used to adjust the first reflective surface and that is obtained by the first reflection apparatus through decision-making based on location gravity center information corresponding to the reflective surface adjustment parameter; and each of the N pieces of weighted performance indicator feedback information includes a performance indicator of a terminal device within a coverage area of a reflected signal of the first reflective surface after the first reflective surface is adjusted based on a reflective surface adjustment parameter corresponding to each piece of weighted performance indicator feedback information; and
the decision unit 1102 is further configured to update a second neural network model based on the historical location gravity center information, the historical reflective surface adjustment parameter, and the historical weighted performance indicator feedback information, to obtain the first neural network model.

In another possible implementation, the decision unit 1102 is specifically configured to:
estimate a weighted performance indicator expectation based on a third neural network model, an i^{th} piece of location gravity center information of the historical location gravity center information, and an i^{th} reflective surface adjustment parameter of the historical reflective surface adjustment parameter; and
update the second neural network model based on the weighted performance indicator expectation, the i^{th} piece of location gravity center information, and the i^{th} reflective surface adjustment parameter, to obtain the first neural network model, where i is an integer greater than or equal to 1 and less than or equal to N.

In another possible implementation, the decision unit 1102 is further configured to:
update the third neural network model based on the historical location gravity center information, the historical reflective surface adjustment parameter, and the historical weighted performance indicator feedback information.

In another possible implementation, each of the N reflective surface adjustment parameters further includes an adjustment parameter for adjusting the mounting location of the first reflective surface.

In another possible implementation, the obtaining unit 1101 is further configured to:
obtain second location gravity center information and a third reflective surface adjustment parameter, where the second location gravity center information includes a weighted location of a terminal device within a coverage area of a reflected signal of a second reflective surface included in a second reflection apparatus, the third reflective surface adjustment parameter is a reflective surface adjustment parameter that is used to adjust the second reflective surface and that is determined by the second reflection apparatus based on the second location gravity center information, and there is an intersection between the coverage area of the reflected signal of the second reflective surface and the coverage area of the reflected signal of the first reflective surface; and
the decision unit 1102 is specifically configured to:
   update the second neural network model based on the historical location gravity center information, the historical reflective surface adjustment parameter, the historical weighted performance indicator feedback information, the second location gravity center information, and the third reflective surface adjustment parameter, to obtain the first neural network model.

In another possible implementation, the obtaining unit 1101 is further configured to:
obtain second location gravity center information and a third reflective surface adjustment parameter, where the second location gravity center information includes a weighted location of a terminal device within a coverage area of a reflected signal of a second reflective surface included in a second reflection apparatus, the third reflective surface adjustment parameter is a reflective surface adjustment parameter that is used to adjust the second reflective surface and that is determined by the second reflection apparatus based on the second location gravity center information, and there is an intersection between the coverage area of the reflected signal of the second reflective surface and the coverage area of the reflected signal of the first reflective surface; and
the decision unit 1102 is specifically configured to:
   update the third neural network model based on the historical location gravity center information, the historical reflective surface adjustment parameter, the historical weighted performance indicator feedback information, the second location gravity center information, and the third reflective surface adjustment parameter.

In a possible implementation, the obtaining unit 1101 is specifically configured to:
receive the second location gravity center information and the third reflective surface adjustment parameter that are sent by the second reflection apparatus or the access network device.

In another possible implementation, the sending unit 1103 is further configured to:
send configuration information of the first reflection apparatus to the access network device, where the configuration information includes at least one of the following:
an adjustment cycle of the first reflective surface, whether adjustment of the first reflective surface is controlled by the access network device, precision of location gravity center information, a performance indicator feedback type definition, a reconstruction weight of the first reflective surface, an identifier of a reflective surface adjustment parameter used by the first reflection apparatus in an adjustment parameter set, and a type of the first reflective surface, where the adjustment cycle is used to indicate an adjustment cycle of adjusting the first reflective surface by the first reflection apparatus, the precision of location gravity center information is used to indicate a degree of sensitivity of the first reflection apparatus to a location change of the terminal device within the coverage area of the reflected signal of the first reflective surface, and the performance indicator feedback type definition is used to indicate a type of a performance indicator that the first reflection apparatus requires to be fed back.

In another possible implementation, the obtaining unit 1101 is further configured to:
receive information that is used to indicate the first reflection apparatus to adjust the first reflective surface that is sent by the access network device; and
the sending unit 1103 is further configured to:
   send third location gravity center information and a fourth reflective surface adjustment parameter to the second reflection apparatus or the access network device, where the third location gravity center information includes a weighted location, stored in the first reflection apparatus, of the terminal device within the coverage area of the reflected signal of the first reflective surface at a first sending moment, the first sending moment is a sending moment at which the first reflection apparatus sends the third location gravity center information and the fourth reflective surface adjustment parameter, and the fourth reflective surface adjustment parameter is a reflective surface adjustment parameter that is used to adjust the first reflective surface and that is determined by the first reflection apparatus based on the third location gravity center information.

In another possible implementation, the sending unit 1103 is further configured to:
send, to the access network device, information for indicating that the first reflection apparatus ends adjustment of the first reflective surface.

In this embodiment of this application, the obtaining unit 1101 obtains the first location gravity center information, where the first location gravity center information includes the weighted location of the terminal device within the coverage area of the reflected signal of the first reflective surface. Then the decision unit 1102 determines the first input parameter based on the first location gravity center information, and inputs the first input parameter to the first neural network model to obtain the first reflective surface adjustment parameter. The decision unit 1102 adjusts the first reflective surface based on the first reflective surface adjustment parameter. Therefore, it can be learned that, in this embodiment of this application, the first location gravity center information is used to represent a radio environment within the coverage area of the reflected signal of the first reflective surface. The decision unit 1102 determines the first input parameter of the first neural network model based on the first location gravity center information, inputs the first input parameter to the first neural network model to obtain the first reflective surface adjustment parameter, and adjusts the first reflective surface based on the first reflective surface adjustment parameter. In the technical solution of this embodiment of this application, the solution for adjusting the first reflective surface is simple. The first reflective surface is adjusted to reconstruct the radio environment within the coverage area of the reflected signal of the first reflective surface, so as to increase a network throughput and improve channel transmission quality. In addition, compared with a conventional solution, in this embodiment of this application, channel estimation does not need to be performed to obtain channel information. From a perspective of hardware, hardware complexity of the first reflection apparatus is low.

The following describes an access network device provided in embodiments of this application. FIG. 12 is a schematic diagram of a structure of an access network device according to an embodiment of this application. The access network device may be configured to perform the steps performed by the access network device in the embodiments shown in FIG. FIG. 3B, FIG. 3F, FIG. 3G, FIG. 6, FIG. 7, FIG. 8, FIG. 9, and FIG. 10B. Refer to related descriptions in the foregoing method embodiments.

The access network device includes a sending unit 1201. Optionally, the access network device further includes a receiving unit 1202 and a processor 1203.

The sending unit 1201 is configured to send first location gravity center information to a first reflection apparatus, where the first location gravity center information includes a weighted location of a terminal device within a coverage area of a reflected signal of a first reflective surface of the first reflection apparatus; and send weighted performance indicator feedback information to the first reflection apparatus, where the weighted performance indicator feedback information is used to indicate a performance indicator of a terminal device within a coverage area of a reflected signal of the first reflective surface after the first reflection apparatus adjusts the first reflective surface based on a first reflective surface adjustment parameter, and the first reflective surface adjustment parameter is determined by the first reflection apparatus based on the first location gravity center information.

In a possible implementation, the access network device further includes a receiving unit 1202 and a processing unit 1203.

The receiving unit 1202 is configured to receive a reconstruction weight sent by the first reflection apparatus.

The processing unit 1203 is configured to determine the first location gravity center information based on the reconstruction weight and a location of the terminal device within the coverage area of the reflected signal of the first reflective surface.

In another possible implementation, the location of the terminal device within the coverage area of the reflected signal of the first reflective surface includes: a sequence number of a sub-grid corresponding to each of terminal devices within the coverage area of the reflected signal of the first reflective surface, where each sub-grid corresponds to one coordinate location range; or a coordinate location corresponding to each terminal device.

In another possible implementation, the receiving unit 1202 is further configured to:
receive an adjustment time point, sent by the first reflection apparatus, of the first reflective surface; and
the sending unit 1201 is specifically configured to:
   send the weighted performance indicator feedback information to the first reflection apparatus based on the adjustment time point.

In another possible implementation, the sending unit 1201 is further configured to:
send, to the first reflection apparatus, information for indicating the first reflection apparatus to adjust the first reflective surface;
the processing unit 1203 is configured to:
   determine, based on a second sending moment, an adjustment time point at which the first reflection apparatus is to adjust the first reflective surface, where the second sending moment is a sending moment at which the access network device sends, to the first reflection apparatus, the information for indicating the first reflection apparatus to adjust the first reflective surface; and
   the sending unit 1201 is specifically configured to:
      send the weighted performance indicator feedback information to the first reflection apparatus based on the adjustment time point.

In another possible implementation, the sending unit 1201 is further configured to:
send, to the first reflection apparatus at a third sending moment, information for indicating the first reflection apparatus to adjust the first reflective surface, and send, to a second reflection apparatus at a fourth sending moment, information for indicating the second reflection apparatus to adjust a second reflective surface of the second reflection apparatus;
the receiving unit 1202 is further configured to:
   receive second location gravity center information and a third reflective surface adjustment parameter that are sent by the second reflection apparatus, where the second location gravity center information is a weighted location, stored in the second reflection apparatus, of a terminal device within a coverage area of a reflected signal of the second reflective surface at a fifth sending moment, the fifth sending moment is a sending moment at which the second reflection apparatus sends the second location gravity center information, and the third reflective surface adjustment parameter is a reflective surface adjustment parameter that is used to adjust the second reflective surface and that is determined by the second reflection apparatus based on the second location gravity center information;
   the sending unit 1201 is further configured to:
      send the second location gravity center information and the third reflective surface adjustment parameter to the first reflection apparatus; and
      the receiving unit 1202 is further configured to:
         receive third location gravity center information and a fourth reflective surface adjustment parameter that are sent by the first reflection apparatus, where the third location gravity center information includes a weighted location, stored in the first reflection apparatus, of the terminal device within the coverage area of the reflected signal of the first reflective surface at a first sending moment, the first sending moment is a sending moment at which the first reflection apparatus sends the third location gravity center information and the fourth reflective surface adjustment parameter, and the fourth reflective surface adjustment parameter is a reflective surface adjustment parameter that is used to adjust the first reflective surface and that is determined by the first reflection apparatus based on the third location gravity center information.

In another possible implementation, the receiving unit 1202 is further configured to:
receive, at a first receiving moment, information that is sent by the first reflection apparatus and that is used to indicate that the first reflection apparatus ends adjustment of the first reflective surface, and receive, at a second receiving moment, information that is sent by the second reflection apparatus and that is used to indicate that the second reflection apparatus ends adjustment of the second reflective surface, where there is an intersection between a first time period and a second time period, the first time period is a time period between the third sending moment and the first receiving moment, and the second time period is a time period between the fourth sending moment and the second receiving moment.

In another possible implementation, the sending unit 1201 is further configured to:
send, to the first reflection apparatus, information for indicating the first reflection apparatus to adjust the first reflective surface; and
when a preset condition is met, send, to the second reflection apparatus, information for indicating the second reflection apparatus to adjust the second reflective surface of the second reflection apparatus, where
the preset condition includes any one of the following:
   the access network device sends, to the first reflection apparatus, information for indicating the first reflection apparatus to end adjustment of the first reflective surface; or
   the access network device receives information that is sent by the first reflection apparatus and that is used to indicate that the first reflection apparatus ends adjustment of the first reflective surface.

In another possible implementation, the receiving unit 1202 is further configured to:
receive configuration information of the first reflection apparatus that is sent by the first reflection apparatus, where the configuration information includes at least one of the following: an adjustment cycle of the first reflective surface, whether adjustment of the first reflective surface is controlled by the access network device, precision of location gravity center information, a performance indicator feedback type definition, a reconstruction weight of the first reflective surface, an identifier of a reflective surface adjustment parameter used by the first reflection apparatus in an adjustment parameter set, and a type of the first reflective surface, the adjustment cycle is used to indicate an adjustment cycle of adjusting the first reflective surface by the first reflection apparatus, the precision of location gravity center information is used to indicate a degree of sensitivity of the first reflection apparatus to a location change of the terminal device within the coverage area of the reflected signal of the first reflective surface, and the performance indicator feedback type definition is used to indicate a type of a performance indicator that the first reflection apparatus requires to be fed back.

In this embodiment of this application, the sending unit 1201 reports the first location gravity center information to the first reflection apparatus, where the first location gravity center information can reflect a radio environment within the coverage area of the reflected signal of the first reflective surface. In this case, the first reflection apparatus determines a first input parameter of a first neural network model based on the first location gravity center information, inputs the first input parameter to the first neural network model to obtain the first reflective surface adjustment parameter, and adjusts the first reflective surface based on the first reflective surface adjustment parameter. The sending unit 1201 reports the weighted performance indicator feedback information to the first reflection apparatus, so that the first reflection apparatus determines the performance indicator of the terminal device within the coverage area of the reflected signal of the first reflective surface after the first reflective surface is adjusted based on the first reflective surface adjustment parameter. In the technical solution of this embodiment of this application, the solution for adjusting the first reflective surface is simple. The first reflective surface is adjusted to reconstruct the radio environment within the coverage area of the reflected signal of the first reflective surface, so as to increase a network throughput and improve channel transmission quality. In addition, compared with a conventional solution, in this embodiment of this application, channel estimation does not need to be performed to obtain channel information. From a perspective of hardware, hardware complexity of the first reflection apparatus is low.

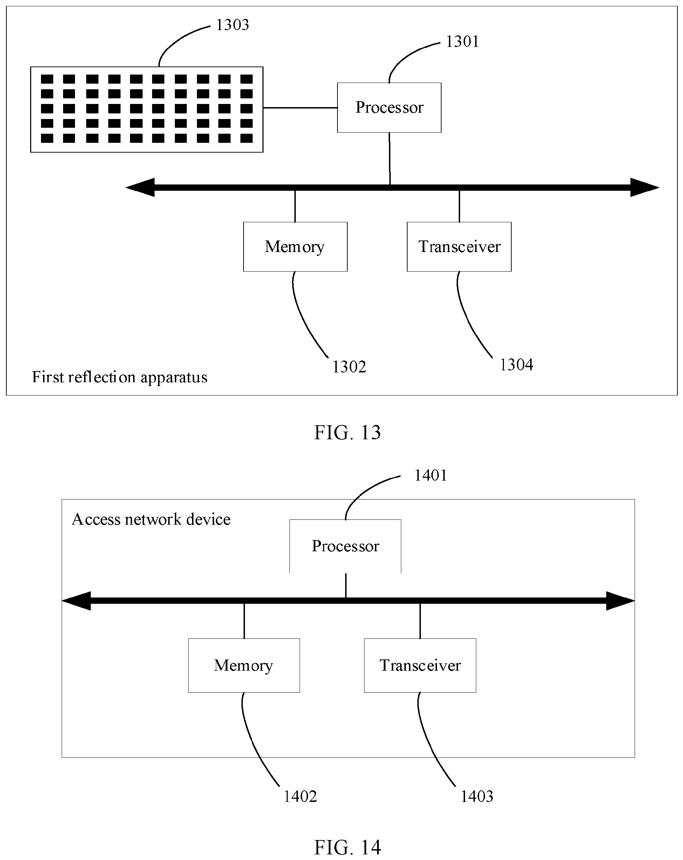

This application further provides a first reflection apparatus. FIG. 13 is a schematic diagram of another structure of a first reflection apparatus according to an embodiment of this application. The first reflection apparatus may be configured to perform the steps performed by the first communication apparatus in the embodiments shown in FIG. 3A, FIG. 3B, FIG. 3D, FIG. 3F, FIG. 3G, FIG. 4A and FIG. 4B, FIG. 5A, FIG. 6, FIG. 7, FIG. 8, FIG. 9, and FIG. 10B. Refer to related descriptions in the foregoing method embodiments.

The first reflection apparatus includes a processor 1301, a memory 1302, and a first reflective surface 1303. Optionally, the first communication apparatus further includes a transceiver 1304. The processor 1301 is connected to the first reflective surface 1303.

Optionally, the processor 1301 is coupled to the memory 1302 through an interface, or the processor 1301 is integrated with the memory 1302. This is not specifically limited in this application.

In a possible implementation, the processor 1301, the memory 1302, and the transceiver 1304 are connected to each other through a bus, and the memory stores computer instructions.

The decision unit 1102 in the foregoing embodiment may be specifically the processor 1301 in this embodiment. Therefore, a specific implementation of the processor 1301 is not described again. The obtaining unit 1101 and the sending unit 1103 in the foregoing embodiment may be specifically the transceiver 1304 in this embodiment. Therefore, a specific implementation of the transceiver 1304 is not described again.

This application further provides an access network device. FIG. 14 is a schematic diagram of another structure of an access network device according to an embodiment of this application. The access network device may be configured to perform the steps performed by the access network device in the embodiments shown in FIG. 3B, FIG. 3F, FIG. 3G, FIG. 6, FIG. 7, FIG. 8, FIG. 9, and FIG. 10B. Refer to related descriptions in the foregoing method embodiments.

The access network device includes a processor 1401 and a memory 1402. Optionally, the access network device further includes a transceiver 1403.

Optionally, the processor 1401 is coupled to the memory 1402 through an interface, or the processor 1401 is integrated with the memory 1402. This is not specifically limited in this application.

In a possible implementation, the processor 1401, the memory 1402, and the transceiver 1403 are connected to each other through a bus, and the memory stores computer instructions.

The processing unit 1203 in the foregoing embodiment may be specifically the processor 1401 in this embodiment. Therefore, a specific implementation of the processor 1401 is not described again. The sending unit 1202 and the receiving unit 1202 in the foregoing embodiment may be specifically the transceiver 1403 in this embodiment. Therefore, a specific implementation of the transceiver 1403 is not described again.

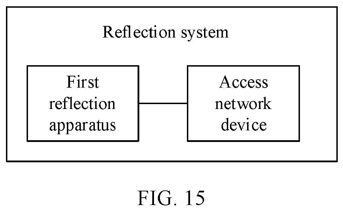

As shown in FIG. 15, an embodiment of this application further provides a reflection system. The reflection system includes the first reflection apparatus shown in FIG. 11 and the access network device shown in FIG. 12. The first reflection apparatus shown in FIG. 11 is configured to perform all or some of the steps performed by the first reflection apparatus in the embodiments shown in FIG. 3A, FIG. 3B, FIG. 3D, FIG. 3F, FIG. 3G, FIG. 4A and FIG. 4B, FIG. 5A, FIG. 6, FIG. 7, FIG. 8, FIG. 9, and FIG. 10B. The access network device shown in FIG. 12 is configured to perform all or some of the steps performed by the access network device in the embodiments shown in FIG. 3B, FIG. 3F, FIG. 3G, FIG. 6, FIG. 7, FIG. 8, FIG. 9, and FIG. 10B.

An embodiment of this application further provides a computer program product including computer instructions. When the computer program product runs on a computer, the computer is enabled to perform the reflective surface adjustment methods in the embodiments shown in FIG. 3A, FIG. 3B, FIG. 3D, FIG. 3F, FIG. 3G, FIG. 4A and FIG. 4B, FIG. 5A, FIG. 6, FIG. 7, FIG. 8, FIG. 9, and FIG. 10B.

An embodiment of this application further provides a computer-readable storage medium, including computer instructions. When the computer instructions run on a computer, the computer is enabled to perform the reflective surface adjustment methods in the embodiments shown in FIG. 3A, FIG. 3B, FIG. 3D, FIG. 3F, FIG. 3G, FIG. 4A and FIG. 4B, FIG. 5A, FIG. 6, FIG. 7, FIG. 8, FIG. 9, and FIG. 10B.

An embodiment of this application further provides a chip apparatus, including a processor, connected to a memory and configured to invoke a program stored in the memory, so that the processor performs the reflective surface adjustment methods in the embodiments shown in FIG. 3A, FIG. 3B, FIG. 3D, FIG. 3F, FIG. 3G, FIG. 4A and FIG. 4B, FIG. 5A, FIG. 6, FIG. 7, FIG. 8, FIG. 9, and FIG. 10B.

Any aforementioned processor may be a general-purpose central processing unit, a microprocessor, an application-specific integrated circuit (application-specific integrated circuit, ASIC), or one or more integrated circuits for controlling execution of a program for the reflective surface adjustment methods in the embodiments shown in FIG. 3A, FIG. 3B, FIG. 3D, FIG. 3F, FIG. 3G, FIG. 4A and FIG. 4B, FIG. 5A, FIG. 6, FIG. 7, FIG. 8, FIG. 9, and FIG. 10B. Any aforementioned memory may be a read-only memory (read-only memory, ROM), another type of static storage device capable of storing static information and instructions, a random access memory (random access memory, RAM), or the like.

It can be clearly understood by persons skilled in the art that, for ease and brevity of description, for a detailed operating process of the foregoing system, apparatus, and unit, reference may be made to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts shown as units may or may not be physical units, may be located in one place, or may be distributed on a plurality of network units. Some or all of the units may be selected according to actual requirements to achieve objectives of solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory, a random access memory, a magnetic disk, or an optical disc.

## Claims

1. A reflective surface adjustment method, wherein the method is applied to a first reflection apparatus (200), the first reflection apparatus (200) comprises a first reflective surface (203), and the method comprises:
obtaining, by the first reflection apparatus (200), first location gravity center information, wherein the first location gravity center information comprises a weighted location of a terminal device within a coverage area of a reflected signal of the first reflective surface (203), wherein the weighted location is an average value of weighted locations of terminal devices within the coverage area of the reflected signal of the first reflective surface (203) expressed as $ωp = \frac{1}{Q} {\sum }_{n = 1}^{Q} \left({ω}_{n}{p}_{n}\right)$
wherein Q is a quantity of terminal devices within the coverage area of the reflected signal of the first reflective surface (203) and is an integer greater than 1,
n is an integer greater than or equal to 1 and less than or equal to Q,
ωₙ indicates a reconstruction weight calculated by an n^{th} terminal device within the coverage area of the reflected signal of the first reflective surface (203), and ωₙ is greater than 0 and less than or equal to 1, and
pₙ is a location of the n^{th} terminal device within the coverage area of the reflected signal of the first reflective surface (203);
determining, by the first reflection apparatus (200), a first input parameter based on the first location gravity center information;
inputting, by the first reflection apparatus (200), the first input parameter to a first neural network model to obtain a first reflective surface (203) adjustment parameter; and
adjusting, by the first reflection apparatus (200), the first reflective surface (203) based on the first reflective surface (203) adjustment parameter.

2. The method according to claim 1, wherein the obtaining, by the first reflection apparatus (200), first location gravity center information comprises:
obtaining, by the first reflection apparatus (200), the first location gravity center information from an access network device; or
determining, by the first reflection apparatus (200), the first location gravity center information based on a location of the terminal device within the coverage area of the reflected signal of the first reflective surface (203), wherein
the location of the terminal device within the coverage area of the reflected signal of the first reflective surface (203) is fed back by the terminal device, fed back by a location detector, or obtained from a photo of the coverage area of the reflected signal of the first reflective surface (203).

3. The method according to claim 2, wherein the method further comprises:
sending, by the first reflection apparatus (200), the reconstruction weights ωₙ calculated by an n^{th} terminal device within the coverage area of the first reflective surface (203) to the access network device.

4. The method according to any one of claims 1 to 3, wherein the first reflective surface (203) comprises a reflection unit, and the adjusting, by the first reflection apparatus (200), the first reflective surface (203) based on the first reflective surface (203) adjustment parameter comprises:
adjusting, by the first reflection apparatus (200), any one or more of the following items of the first reflective surface (203) based on the first reflective surface (203) adjustment parameter: a voltage of the reflection unit, a resistance of the reflection unit, or a mounting location of the first reflective surface (203).

5. The method according to any one of claims 1 to 4, wherein the first reflective surface (203) comprises a plurality of reflection units, the first reflective surface (203) adjustment parameter comprises an adjustment parameter of a first reflection unit set, the first reflection unit set comprises some of the plurality of reflection units, and the method further comprises:
determining, by the first reflection apparatus (200), a second input parameter based on the first location gravity center information and the first reflective surface (203) adjustment parameter;
inputting, by the first reflection apparatus (200), the second input parameter to the first neural network model to obtain a second reflective surface adjustment parameter, wherein
the second reflective surface adjustment parameter comprises an adjustment parameter for adjusting a second reflection unit set, and the second reflection unit set comprises some or all of reflection units of the first reflective surface (203) other than the some reflection units comprised in the first reflection unit set; and
adjusting, by the first reflection apparatus (200), the reflection units in the second reflection unit set of the first reflective surface (203) based on the second reflective surface adjustment parameter.

6. The method according to any one of claims 1 to 5, wherein the method further comprises:
receiving, by the first reflection apparatus (200), weighted performance indicator feedback information from the access network device, wherein the weighted performance indicator feedback information comprises a performance indicator of a terminal device within a coverage area of a reflected signal of the first reflective surface (203) after the first reflective surface (203) is adjusted based on the first reflective surface (203) adjustment parameter.

7. The method according to claim 6, wherein the weighted performance indicator feedback information comprises at least one of the following: a weighted average transmission rate, a weighted packet error rate, a weighted signal to interference plus noise ratio, weighted reference signal received power RSRP, or weighted reference signal received quality RSRQ.

8. The method according to any one of claims 1 to 7, wherein the method further comprises:
sending, by the first reflection apparatus (200), an adjustment time point of the first reflective surface (203) to the access network device; and
determining, by the first reflection apparatus (200) based on the adjustment time point, to perform the step of adjusting the first reflective surface (203) based on the first reflective surface (203) adjustment parameter.

9. The method according to any one of claims 1 to 7, wherein the method further comprises:
receiving, by the first reflection apparatus (200) from the access network device, information for indicating the first reflection apparatus (200) to adjust the first reflective surface (203); and
determining, by the first reflection apparatus (200) based on the information for indicating the first reflection apparatus (200) to adjust the first reflective surface (203), to perform the step of adjusting the first reflective surface (203) based on the first reflective surface (203) adjustment parameter.

10. The method according to any one of claims 1 to 9, wherein the method further comprises:
obtaining, by the first reflection apparatus (200), historical location gravity center information, a historical reflective surface adjustment parameter, and historical weighted performance indicator feedback information, wherein
the historical location gravity center information comprises N pieces of location gravity center information, the historical reflective surface adjustment parameter comprises N reflective surface adjustment parameters, the historical weighted performance indicator feedback information comprises N pieces of weighted performance indicator feedback information, and N is an integer greater than or equal to 1;
the N pieces of location gravity center information, the N historical reflective surface adjustment parameters, and the N pieces of weighted performance indicator feedback information are in a one-to-one correspondence;
the N pieces of location gravity center information comprise weighted locations, reported by the access network device at different time, of the terminal device within the coverage area of the reflected signal of the first reflective surface (203);
each of the N reflective surface adjustment parameters comprises an adjustment parameter that is used to adjust the first reflective surface (203) and that is obtained by the first reflection apparatus (200) through decision-making based on location gravity center information corresponding to the reflective surface adjustment parameter; and
each of the N pieces of weighted performance indicator feedback information comprises a performance indicator of a terminal device within a coverage area of a reflected signal of the first reflective surface (203) after the first reflective surface (203) is adjusted based on a reflective surface adjustment parameter corresponding to each piece of weighted performance indicator feedback information; and
updating, by the first reflection apparatus (200), a second neural network model based on the historical location gravity center information, the historical reflective surface adjustment parameter, and the historical weighted performance indicator feedback information, to obtain the first neural network model.

11. The method according to claim 10, wherein the updating, by the first reflection apparatus (200), a second neural network model based on the historical location gravity center information, the historical reflective surface adjustment parameter, and the historical weighted performance indicator feedback information, to obtain the first neural network model comprises:
estimating, by the first reflection apparatus (200), a weighted performance indicator expectation based on a third neural network model, an i^{th} piece of location gravity center information of the historical location gravity center information, and an i^{th} reflective surface adjustment parameter of the historical reflective surface adjustment parameter; and
updating, by the first reflection apparatus (200), the second neural network model based on the weighted performance indicator expectation, the i^{th} piece of location gravity center information, and the i^{th} reflective surface adjustment parameter, to obtain the first neural network model, wherein i is an integer greater than or equal to 1 and less than or equal to N.

12. The method according to any one of claims 1 to 11, wherein the method further comprises:
sending, by the first reflection apparatus (200), configuration information of the first reflection apparatus (200) to the access network device, wherein
the configuration information comprises at least one of the following:
an adjustment cycle of the first reflective surface (203), whether adjustment of the first reflective surface (203) is controlled by the access network device, precision of location gravity center information, a performance indicator feedback type definition, a reconstruction weight of the first reflective surface (203), an identifier of a reflective surface adjustment parameter used by the first reflection apparatus (200) in an adjustment parameter set, and a type of the first reflective surface (203);
the adjustment cycle is used to indicate an adjustment cycle of adjusting the first reflective surface (203) by the first reflection apparatus (200);
the precision of location gravity center information is used to indicate a degree of sensitivity of the first reflection apparatus (200) to a location change of the terminal device within the coverage area of the reflected signal of the first reflective surface (203); and
the performance indicator feedback type definition is used to indicate a type of a performance indicator that the first reflection apparatus (200) requires to be fed back.

13. A reflective surface adjustment method, wherein the method comprises:
sending, by an access network device, first location gravity center information to a first reflection apparatus (200), wherein the first location gravity center information comprises a weighted location of a terminal device within a coverage area of a reflected signal of a first reflective surface (203) of the first reflection apparatus (200), wherein the weighted location is an average value of weighted locations of terminal devices within the coverage area of the reflected signal of the first reflective surface (203) expressed as $ωp = \frac{1}{Q} {\sum }_{n = 1}^{Q} \left({ω}_{n}{p}_{n}\right)$
wherein Q is a quantity of terminal devices within the coverage area of the reflected signal of the first reflective surface (203) and is an integer greater than 1,
n is an integer greater than or equal to 1 and less than or equal to Q,
ωₙ indicates a reconstruction weight calculated by an n^{th} terminal device within the coverage area of the reflected signal of the first reflective surface (203), and ωₙ is greater than 0 and less than or equal to 1, and
pₙ is a location of the n^{th} terminal device within the coverage area of the reflected signal of the first reflective surface (203); and
sending, by the access network device, weighted performance indicator feedback information to the first reflection apparatus (200), wherein the weighted performance indicator feedback information is used to indicate a performance indicator of a terminal device within a coverage area of a reflected signal of the first reflective surface (203) after the first reflection apparatus (200) adjusts the first reflective surface (203) based on a first reflective surface (203) adjustment parameter, and the first reflective surface (203) adjustment parameter is determined by the first reflection apparatus (200) based on the first location gravity center information.

14. A first reflection apparatus (200), wherein the first reflection apparatus (200) is configurated to perform the method of any one of claims 1 to 12.

15. An access network device, wherein the access network device is configurated to perform the method of claim 13.

## Patentansprüche

1. Verfahren zur Einstellung einer reflektierenden Oberfläche, wobei das Verfahren auf eine erste Reflexionsvorrichtung (200) angewendet wird, die erste Reflexionsvorrichtung (200) eine erste reflektierende Oberfläche (203) umfasst und das Verfahren Folgendes umfasst:
Erlangen, durch die erste Reflexionsvorrichtung (200), von ersten Informationen über einen Standortschwerpunkt, wobei die ersten Informationen über den Standortschwerpunkt einen gewichteten Standort einer Endgerätevorrichtung innerhalb eines Erfassungsbereichs des reflektierten Signals der ersten reflektierenden Oberfläche (203) umfassen, wobei der gewichtete Standort ein Durchschnittswert von gewichteten Standorten von Endgerätevorrichtungen innerhalb des Erfassungsbereichs des reflektierten Signals der ersten reflektierenden Oberfläche (203) ist, ausgedrückt als $ωp = \frac{1}{Q} {\sum }_{n = 1}^{Q} \left({ω}_{n}{p}_{n}\right)$
wobei Q eine Anzahl von Endgerätevorrichtungen innerhalb des Erfassungsbereichs des reflektierten Signals der ersten reflektierenden Oberfläche (203) ist und eine ganze Zahl größer als 1 ist,
n eine ganze Zahl größer als oder gleich 1 und kleiner als oder gleich Q ist,
ωₙ eine Rekonstruktionsgewichtung anzeigt, die durch eine n-te Endgerätevorrichtung innerhalb des Erfassungsbereichs des reflektierten Signals der ersten reflektierenden Oberfläche (203) berechnet wird, und ωₙ größer als 0 und kleiner als oder gleich 1 ist und
pₙ ein Standort der n-ten Endgerätevorrichtung innerhalb des Erfassungsbereichs des reflektierten Signals der ersten reflektierenden Oberfläche (203) ist;
Bestimmen, durch die erste Reflexionsvorrichtung (200), eines ersten Eingabeparameters auf der Grundlage der ersten Informationen über den Standortschwerpunkt;
Eingeben, durch die erste Reflexionsvorrichtung (200), des ersten Eingabeparameters in ein erstes neuronales Netzmodell, um einen Parameter zur Einstellung der ersten reflektierenden Oberfläche (203) zu erlangen; und
Einstellen, durch die erste Reflexionsvorrichtung (200), der ersten reflektierenden Oberfläche (203) auf der Grundlage des Parameters zur Einstellung der ersten reflektierenden Oberfläche (203).

2. Verfahren nach Anspruch 1, wobei das Erlangen, durch die erste Reflexionsvorrichtung (200), von ersten Informationen über den Standortschwerpunkt Folgendes umfasst:
Erlangen, durch die erste Reflexionsvorrichtung (200), der ersten Informationen über den Standortschwerpunkt von einer Zugangsnetzvorrichtung; oder
Bestimmen, durch die erste Reflexionsvorrichtung (200), der ersten Informationen über den Standortschwerpunkt auf der Grundlage eines Standorts der Endgerätevorrichtung innerhalb des Erfassungsbereichs des reflektierten Signals der ersten reflektierenden Oberfläche (203), wobei
der Standort der Endgerätevorrichtung innerhalb des Erfassungsbereichs des reflektierten Signals der ersten reflektierenden Oberfläche (203) durch die Endgerätevorrichtung zurückgemeldet wird, von einem Standortdetektor zurückgemeldet wird oder aus einem Foto des Erfassungsbereichs des reflektierten Signals der ersten reflektierenden Oberfläche (203) erlangt wird.

3. Verfahren nach Anspruch 2, wobei das Verfahren ferner Folgendes umfasst:
Senden, durch die erste Reflexionsvorrichtung (200), der Rekonstruktionsgewichtungen ωₙ, die durch eine n-te Endgerätevorrichtung innerhalb des Erfassungsbereichs der ersten reflektierenden Oberfläche (203) berechnet werden, an die Zugangsnetzvorrichtung.

4. Verfahren nach einem der Ansprüche 1 bis 3, wobei die erste reflektierende Oberfläche (203) eine Reflexionseinheit umfasst und das Einstellen, durch die erste Reflexionsvorrichtung (200), der ersten reflektierenden Oberfläche (203) auf der Grundlage des Parameters zur Einstellung der ersten reflektierenden Oberfläche (203) Folgendes umfasst:
Einstellen, durch die erste Reflexionsvorrichtung (200), von einem oder mehreren der folgenden Elemente der ersten reflektierenden Oberfläche (203) auf der Grundlage des Parameters zur Einstellung der ersten reflektierenden Oberfläche (203): einer Spannung der Reflexionseinheit, eines Widerstands der Reflexionseinheit oder eines Montageorts der ersten reflektierenden Oberfläche (203).

5. Verfahren nach einem der Ansprüche 1 bis 4, wobei die erste reflektierende Oberfläche (203) eine Vielzahl von Reflexionseinheiten umfasst, der Parameter zur Einstellung der ersten reflektierenden Oberfläche (203) einen Einstellungsparameter eines ersten Satzes von Reflexionseinheiten umfasst, der erste Satz von Reflexionseinheiten einige der Vielzahl von Reflexionseinheiten umfasst und das Verfahren ferner Folgendes umfasst:
Bestimmen, durch die erste Reflexionsvorrichtung (200), eines zweiten Eingabeparameters auf der Grundlage der ersten Informationen über den Standortschwerpunkt und des Parameters zur Einstellung der ersten reflektierenden Oberfläche (203);
Eingeben, durch die erste Reflexionsvorrichtung (200), des zweiten Eingabeparameters in das erste neuronale Netzmodell, um einen Parameter zur Einstellung einer zweiten reflektierenden Oberfläche zu erlangen, wobei
der Parameter zur Einstellung der zweiten reflektierenden Oberfläche einen Einstellungsparameter zum Einstellen eines zweiten Satzes von Reflexionseinheiten umfasst, und der zweite Satz von Reflexionseinheiten einige oder sämtliche von Reflexionseinheiten der ersten reflektierenden Oberfläche (203) umfasst, mit Ausnahme der einigen Reflexionseinheiten, die in dem ersten Satz von Reflexionseinheiten umfasst sind; und Einstellen, durch die erste Reflexionsvorrichtung (200), der Reflexionseinheiten in dem zweiten Satz von Reflexionseinheiten der ersten reflektierenden Oberfläche (203) auf der Grundlage des Parameters zur Einstellung der zweiten reflektierenden Oberfläche.

6. Verfahren nach einem der Ansprüche 1 bis 5, wobei das Verfahren ferner Folgendes umfasst:
Empfangen, durch die erste Reflexionsvorrichtung (200), von gewichteten Leistungsindikator-Rückmeldeinformationen von der Zugangsnetzvorrichtung, wobei die gewichteten Leistungsindikator-Rückmeldeinformationen einen Leistungsindikator einer Endgerätevorrichtung innerhalb eines Erfassungsbereichs eines reflektierten Signals der ersten reflektierenden Oberfläche (203) umfassen, nachdem die erste reflektierende Oberfläche (203) auf der Grundlage des Parameters zur Einstellung der ersten reflektierenden Oberfläche (203) eingestellt worden ist.

7. Verfahren nach Anspruch 6, wobei die gewichteten Leistungsindikator-Rückmeldeinformationen mindestens eines der Folgenden umfassen: eine gewichtete durchschnittliche Übertragungsrate, eine gewichtete Paketfehlerrate, ein gewichtetes Signal-zu-Interferenz-plus-Rausch-Verhältnis, eine gewichtete Empfangsleistung des Referenzsignals, RSRP, oder eine gewichtete Empfangsqualität des Referenzsignals, RSRQ.

8. Verfahren nach einem der Ansprüche 1 bis 7, wobei das Verfahren ferner Folgendes umfasst:
Senden, durch die erste Reflexionsvorrichtung (200), eines Einstellungszeitpunkts der ersten reflektierenden Oberfläche (203) an die Zugangsnetzvorrichtung; und
Bestimmen, durch die erste Reflexionsvorrichtung (200) auf der Grundlage des Einstellungszeitpunkts, um den Schritt des Einstellens der ersten reflektierenden Oberfläche (203) auf der Grundlage des Parameters zur Einstellung der ersten reflektierenden Oberfläche (203) durchzuführen.

9. Verfahren nach einem der Ansprüche 1 bis 7, wobei das Verfahren ferner Folgendes umfasst:
Empfangen, durch die erste Reflexionsvorrichtung (200) von der Zugangsnetzvorrichtung, von Informationen, um der ersten Reflexionsvorrichtung (200) anzuzeigen, dass die erste reflektierende Oberfläche (203) einzustellen ist; und
Bestimmen, durch die erste Reflexionsvorrichtung (200) auf der Grundlage der Informationen, um der ersten Reflexionsvorrichtung (200) anzuzeigen, dass die erste reflektierende Oberfläche (203) einzustellen ist, um den Schritt des Einstellens der ersten reflektierenden Oberfläche (203) auf der Grundlage des Parameters zur Einstellung der ersten reflektierenden Oberfläche (203) durchzuführen.

10. Verfahren nach einem der Ansprüche 1 bis 9, wobei das Verfahren ferner Folgendes umfasst:
Erlangen, durch die erste Reflexionsvorrichtung (200), historischer Informationen über den Standortschwerpunkt, eines historischen Parameters zur Einstellung einer reflektierenden Oberfläche und historischer gewichteter Leistungsindikator-Rückmeldeinformationen, wobei
die historischen Informationen über den Standortschwerpunkt N Elemente von Informationen über den Standortschwerpunkt umfassen, der historische Parameter zur Einstellung der reflektierenden Oberfläche N Parameter zur Einstellung einer reflektierenden Oberfläche umfasst, die historischen gewichteten Leistungsindikator-Rückmeldeinformationen N Elemente von gewichteten Leistungsindikator-Rückmeldeinformationen umfassen und N eine ganze Zahl größer als oder gleich 1 ist;
die N Elemente von Informationen über den Standortschwerpunkt, die N historischen Parameter zur Einstellung der reflektierenden Oberfläche und die N Elemente von gewichteten Leistungsindikator-Rückmeldeinformationen in einer Eins-zu-Eins-Entsprechung stehen;
die N Elemente von Informationen über den Standortschwerpunkt durch die Zugangsnetzvorrichtung zu verschiedenen Zeitpunkten gemeldete gewichtete Standorte der Endgerätevorrichtung innerhalb des Erfassungsbereichs des reflektierten Signals der ersten reflektierenden Oberfläche (203) umfassen;
jeder der N Parameter zur Einstellung der reflektierenden Oberfläche einen Einstellungsparameter umfasst, der zur Einstellung der ersten reflektierenden Oberfläche (203) verwendet wird und der durch die erste Reflexionsvorrichtung (200) mittels Entscheidungsfindung auf der Grundlage von Informationen über den Standortschwerpunkt, die dem Parameter zur Einstellung der reflektierenden Oberfläche entsprechen, erlangt wird; und
jedes der N Elemente von gewichteten Leistungsindikator-Rückmeldeinformationen einen Leistungsindikator einer Endgerätevorrichtung innerhalb eines Erfassungsbereichs eines reflektierten Signals der ersten reflektierenden Oberfläche (203) umfasst, nachdem die erste reflektierende Oberfläche (203) auf der Grundlage eines Parameters zur Einstellung der reflektierenden Oberfläche, der jedem Element von gewichteten Leistungsindikator-Rückmeldeinformationen entspricht, eingestellt worden ist; und
Aktualisieren, durch die erste Reflexionsvorrichtung (200), eines zweiten neuronalen Netzmodells auf der Grundlage der historischen Informationen über den Standortschwerpunkt, des historischen Parameters zur Einstellung der reflektierenden Oberfläche und der historischen gewichteten Leistungsindikator-Rückmeldeinformationen, um das erste neuronale Netzmodell zu erlangen.

11. Verfahren nach Anspruch 10, wobei das Aktualisieren, durch die erste Reflexionsvorrichtung (200), eines zweiten neuronalen Netzmodells auf der Grundlage der historischen Informationen über den Standortschwerpunkt, des historischen Parameters zur Einstellung der reflektierenden Oberfläche und der historischen gewichteten Leistungsindikator-Rückmeldeinformationen, um das erste neuronale Netzmodell zu erlangen, Folgendes umfasst:
Schätzen, durch die erste Reflexionsvorrichtung (200), einer gewichteten Leistungsindikatorerwartung auf der Grundlage eines dritten neuronalen Netzmodells, eines i-ten Elements von Informationen über den Standortschwerpunkt aus den historischen Informationen über den Standortschwerpunkt und eines i-ten Parameters zur Einstellung der reflektierenden Oberfläche aus dem historischen Parameter zur Einstellung der reflektierenden Oberfläche; und
Aktualisieren, durch die erste Reflexionsvorrichtung (200), des zweiten neuronalen Netzmodells auf der Grundlage der gewichteten Leistungsindikatorerwartung, des i-ten Elements von Informationen über den Standortschwerpunkt und des i-ten Parameters zur Einstellung der reflektierenden Oberfläche, um das erste neuronale Netzmodell zu erlangen, wobei i eine ganze Zahl größer als oder gleich 1 und kleiner als oder gleich N ist.

12. Verfahren nach einem der Ansprüche 1 bis 11, wobei das Verfahren ferner Folgendes umfasst:
Senden, durch die erste Reflexionsvorrichtung (200), von Konfigurationsinformationen der ersten Reflexionsvorrichtung (200) an die Zugangsnetzvorrichtung, wobei
die Konfigurationsinformationen mindestens eines der Folgenden umfassen:
einen Einstellungszyklus der ersten reflektierenden Oberfläche (203), ob die Einstellung der ersten reflektierenden Oberfläche (203) durch die Zugangsnetzvorrichtung gesteuert wird, Genauigkeit von Informationen über den Standortschwerpunkt, eine Definition eines Leistungsindikator-Rückmeldetyps, eine Rekonstruktionsgewichtung der ersten reflektierenden Oberfläche (203), eine Kennung eines Parameters zur Einstellung der reflektierenden Oberfläche, der durch die erste Reflexionsvorrichtung (200) in einem Einstellungsparametersatz verwendet wird, und einen Typ der ersten reflektierenden Oberfläche (203);
der Einstellungszyklus verwendet wird, um einen Einstellungszyklus zum Einstellen der ersten reflektierenden Oberfläche (203) durch die erste Reflexionsvorrichtung (200) anzuzeigen;
die Genauigkeit von Informationen über den Standortschwerpunkt verwendet wird, um einen Grad der Empfindlichkeit der ersten Reflexionsvorrichtung (200) gegenüber einer Standortänderung der Endgerätevorrichtung innerhalb des Erfassungsbereichs des reflektierten Signals der ersten reflektierenden Oberfläche (203) anzuzeigen; und
die Definition des Leistungsindikator-Rückmeldetyps verwendet wird, um einen Typ eines Leistungsindikators anzuzeigen, den die erste Reflexionsvorrichtung (200) rückzumelden hat.

13. Verfahren zur Einstellung einer reflektierenden Oberfläche, wobei das Verfahren Folgendes umfasst:
Senden, durch eine Zugangsnetzvorrichtung, von ersten Informationen über einen Standortschwerpunkt an eine erste Reflexionsvorrichtung (200), wobei die ersten Informationen über den Standortschwerpunkt einen gewichteten Standort einer Endgerätevorrichtung innerhalb eines Erfassungsbereichs eines reflektierten Signals einer ersten reflektierenden Oberfläche (203) der ersten Reflexionsvorrichtung (200) umfassen, wobei der gewichtete Standort ein Durchschnittswert von gewichteten Standorten von Endgerätevorrichtungen innerhalb des Erfassungsbereichs des reflektierten Signals der ersten reflektierenden Oberfläche (203) ist, ausgedrückt als $ωp = \frac{1}{Q} {\sum }_{n = 1}^{Q} \left({ω}_{n}{p}_{n}\right)$
wobei Q eine Anzahl von Endgerätevorrichtungen innerhalb des Erfassungsbereichs des reflektierten Signals der ersten reflektierenden Oberfläche (203) ist und eine ganze Zahl größer als 1 ist,
n eine ganze Zahl größer als oder gleich 1 und kleiner als oder gleich Q ist,
ωₙ eine Rekonstruktionsgewichtung anzeigt, die durch eine n-te Endgerätevorrichtung innerhalb des Erfassungsbereichs des reflektierten Signals der ersten reflektierenden Oberfläche (203) berechnet wird, und ωₙ größer als 0 und kleiner als oder gleich 1 ist und
pₙ ein Standort der n-ten Endgerätevorrichtung innerhalb des Erfassungsbereichs des reflektierten Signals der ersten reflektierenden Oberfläche (203) ist; und
Senden, durch die Zugangsnetzvorrichtung, von gewichteten Leistungsindikator-Rückmeldeinformationen an die erste Reflexionsvorrichtung (200), wobei die gewichteten Leistungsindikator-Rückmeldeinformationen dazu verwendet werden, einen Leistungsindikator einer Endgerätevorrichtung innerhalb eines Erfassungsbereichs eines reflektierten Signals der ersten reflektierenden Oberfläche (203) anzuzeigen, nachdem die erste Reflexionsvorrichtung (200) die erste reflektierende Oberfläche (203) auf der Grundlage eines Parameters zur Einstellung der ersten reflektierenden Oberfläche (203) eingestellt hat und der Parameter zur Einstellung der ersten reflektierenden Oberfläche (203) durch die erste Reflexionsvorrichtung (200) auf der Grundlage der ersten Informationen über den Standortschwerpunkt bestimmt worden ist.

14. Erste Reflexionsvorrichtung (200), wobei die erste Reflexionsvorrichtung (200) dazu konfiguriert ist, das Verfahren nach einem der Ansprüche 1 bis 12 durchzuführen.

15. Zugangsnetzvorrichtung, wobei die Zugangsnetzvorrichtung dazu konfiguriert ist, das Verfahren nach Anspruch 13 durchzuführen.

## Revendications

1. Procédé de réglage de surface réfléchissante, dans lequel le procédé est appliqué à un premier appareil de réflexion (200), le premier appareil de réflexion (200) comprend une première surface réfléchissante (203), et le procédé comprend :
l'obtention, par le premier appareil de réflexion (200), de premières informations sur le centre de gravité d'emplacement, dans lequel les premières informations sur le centre de gravité d'emplacement comprennent un emplacement pondéré d'un dispositif terminal au sein d'une zone de couverture d'un signal réfléchi de la première surface réfléchissante (203), dans lequel l'emplacement pondéré est une valeur moyenne des emplacements pondérés de dispositifs terminaux au sein de la zone de couverture du signal réfléchi de la première surface réfléchissante (203), exprimé comme tel $ωp = \frac{1}{Q} {\sum }_{n = 1}^{Q} \left({ω}_{n}{p}_{n}\right)$
dans lequel Q est une quantité de dispositifs terminaux au sein de la zone de couverture du signal réfléchi de la première surface réfléchissante (203) et est un entier supérieur à 1, n est un entier supérieur ou égal à 1 et inférieur ou égal à Q, ωₙ indique un poids de reconstruction calculé par un n^{ième} dispositif terminal au sein de la zone de couverture du signal réfléchi de la première surface réfléchissante (203), et ωₙ est supérieur à 0 et inférieur ou égal à 1, et
pₙ est un emplacement du n^{ième} dispositif terminal au sein de la zone de couverture du signal réfléchi de la première surface réfléchissante (203) ;
la détermination, par le premier appareil de réflexion (200), d'un premier paramètre d'entrée sur la base des premières informations sur le centre de gravité d'emplacement ;
la saisie, par le premier appareil de réflexion (200), du premier paramètre d'entrée d'un premier modèle de réseau neuronal pour obtenir un premier paramètre de réglage de surface réfléchissante (203) ; et
le réglage, par le premier appareil de réflexion (200), de la première surface réfléchissante (203) sur la base du paramètre de réglage de la première surface réfléchissante (203).

2. Procédé selon la revendication 1, dans lequel l'obtention, par le premier appareil de réflexion (200), de premières informations sur le centre de gravité d'emplacement comprend :
l'obtention, par le premier appareil de réflexion (200), des premières informations sur le centre de gravité d'emplacement à partir d'un dispositif de réseau d'accès ; ou
la détermination, par le premier appareil de réflexion (200), des premières informations sur le centre de gravité d'emplacement sur la base d'un emplacement du dispositif terminal au sein de la zone de couverture du signal réfléchi de la première surface réfléchissante (203), dans lequel
l'emplacement du dispositif terminal au sein de la zone de couverture du signal réfléchi de la première surface réfléchissante (203) est renvoyé par le dispositif terminal, renvoyé par un détecteur d'emplacement ou obtenu à partir d'une photo de la zone de couverture du signal réfléchi de la première surface réfléchissante (203).

3. Procédé selon la revendication 2, dans lequel le procédé comprend également :
l'envoi, par le premier appareil de réflexion (200), des poids de reconstruction ωₙ calculés par un n^{ième} dispositif terminal au sein de la zone de couverture de la première surface réfléchissante (203) au dispositif de réseau d'accès.

4. Procédé selon l'une quelconque des revendications 1 à 3, dans lequel la première surface réfléchissante (203) comprend une unité de réflexion, et le réglage, par le premier appareil de réflexion (200), de la première surface réfléchissante (203) sur la base du paramètre de réglage de la première surface réfléchissante (203) comprend :
le réglage, par le premier appareil de réflexion (200), d'un quelconque ou de plusieurs des éléments suivants de la première surface réfléchissante (203) sur la base du paramètre de réglage de la première surface réfléchissante (203) : une tension de l'unité de réflexion, une résistance de l'unité de réflexion ou un emplacement de montage de la première surface réfléchissante (203).

5. Procédé selon l'une quelconque des revendications 1 à 4, dans lequel la première surface réfléchissante (203) comprend une pluralité d'unités de réflexion, le paramètre de réglage de la première surface réfléchissante (203) comprend un paramètre de réglage d'un premier ensemble d'unités de réflexion, le premier ensemble d'unités de réflexion comprend certaines de la pluralité d'unités de réflexion, et le procédé comprend également :
la détermination, par le premier appareil de réflexion (200), d'un second paramètre d'entrée sur la base des premières informations sur le centre de gravité d'emplacement et du paramètre de réglage de la première surface réfléchissante (203) ;
la saisie, par le premier appareil de réflexion (200), du second paramètre d'entrée au premier modèle de réseau neuronal afin d'obtenir un second paramètre de réglage de la surface réfléchissante, dans lequel
le second paramètre de réglage de la surface réfléchissante comprend un paramètre de réglage permettant de régler un second ensemble d'unités de réflexion, et le second ensemble d'unités de réflexion comprend tout ou partie des unités de réflexion de la première surface réfléchissante (203) autres que certaines unités de réflexion comprises dans le premier ensemble d'unités de réflexion ; et
le réglage, par le premier appareil de réflexion (200), des unités de réflexion dans le second ensemble d'unités de réflexion de la première surface réfléchissante (203) sur la base du second paramètre de réglage de la surface réfléchissante.

6. Procédé selon l'une quelconque des revendications 1 à 5, dans lequel le procédé comprend également :
la réception, par le premier appareil de réflexion (200), d'informations de retour d'indicateur de performance pondéré provenant du dispositif de réseau d'accès, dans lequel les informations de retour d'indicateur de performance pondéré comprennent un indicateur de performance d'un dispositif terminal au sein d'une zone de couverture d'un signal réfléchi de la première surface réfléchissante (203) après que la première surface réfléchissante (203) soit réglée sur la base du paramètre de réglage de la première surface réfléchissante (203).

7. Procédé selon la revendication 6, dans lequel les informations de retour d'indicateur de performance pondéré comprennent au moins l'un des éléments suivants : un débit de transmission moyen pondéré, un taux d'erreur de paquet pondéré, un rapport signal sur interférence plus bruit pondéré, une puissance de signal de référence reçu pondérée RSRP ou une qualité de signal de référence reçu pondérée RSRQ.

8. Procédé selon l'une quelconque des revendications 1 à 7, dans lequel le procédé comprend également :
l'envoi, par le premier appareil de réflexion (200), d'un point temporel de réglage de la première surface réfléchissante (203) au dispositif de réseau d'accès ; et
la détermination, par le premier appareil de réflexion (200) sur la base du point temporel de réglage, d'effectuer l'étape de réglage de la première surface réfléchissante (203) sur la base du paramètre de réglage de la première surface réfléchissante (203).

9. Procédé selon l'une quelconque des revendications 1 à 7, dans lequel le procédé comprend également :
la réception, par le premier appareil de réflexion (200) du dispositif de réseau d'accès, d'informations indiquant au premier appareil de réflexion (200) de régler la première surface réfléchissante (203) ; et
la détermination, par le premier appareil de réflexion (200) sur la base des informations indiquant au premier appareil de réflexion (200) de régler la première surface réfléchissante (203), d'effectuer l'étape de réglage de la première surface réfléchissante (203) sur la base du paramètre de réglage de la première surface réfléchissante (203).

10. Procédé selon l'une quelconque des revendications 1 à 9, dans lequel le procédé comprend également :
l'obtention, par le premier appareil de réflexion (200), d'informations historiques sur le centre de gravité d'emplacement, d'un paramètre historique de réglage de la surface réfléchissante et d'informations historiques sur le retour d'indicateur de performance pondéré, dans lequel
les informations historiques sur le centre de gravité d'emplacement comprennent N éléments d'informations sur le centre de gravité d'emplacement, le paramètre historique de réglage de la surface réfléchissante comprend N paramètres de réglage de la surface réfléchissante, les informations historiques sur le retour d'indicateur de performance pondéré comprennent N éléments d'informations sur le retour d'indicateur de performance pondéré, et N est un entier supérieur ou égal à 1 ;
les N éléments d'information sur le centre de gravité d'emplacement, les N paramètres historiques de réglage de la surface réfléchissante et les N éléments d'information de retour d'indicateur de performance pondérés sont en correspondance un à un ;
les N éléments d'information sur le centre de gravité d'emplacement comprennent des emplacements pondérés, signalés par le dispositif de réseau d'accès à différents moments, du dispositif terminal au sein de la zone de couverture du signal réfléchi de la première surface réfléchissante (203) ;
chacun des N paramètres de réglage de la surface réfléchissante comprend un paramètre de réglage utilisé pour régler la première surface réfléchissante (203) qui est obtenu par le premier appareil de réflexion (200) par le biais d'une prise de décision sur la base d'informations sur le centre de gravité d'emplacement correspondant au paramètre de réglage de la surface réfléchissante ; et
chacun des N éléments d'information de retour d'indicateur de performance pondéré comprend un indicateur de performance d'un dispositif terminal au sein d'une zone de couverture d'un signal réfléchi de la première surface réfléchissante (203) après que la première surface réfléchissante (203) soit réglée sur la base d'un paramètre de réglage de la surface réfléchissante correspondant à chaque élément d'information de retour d'indicateur de performance pondéré ; et
la mise à jour, par le premier appareil de réflexion (200), d'un deuxième modèle de réseau neuronal sur la base des informations historiques sur le centre de gravité d'emplacement, du paramètre historique de réglage de la surface réfléchissante et des informations historiques de retour d'indicateur de performance pondéré, pour obtenir le premier modèle de réseau neuronal.

11. Procédé selon la revendication 10, dans lequel la mise à jour, par le premier appareil de réflexion (200), d'un deuxième modèle de réseau neuronal sur la base des informations historiques sur le centre de gravité d'emplacement, du paramètre historique de réglage de la surface réfléchissante et des informations historiques sur le retour d'indicateur de performance pondéré, pour obtenir le premier modèle de réseau neuronal comprend :
l'estimation, par le premier appareil de réflexion (200), d'une attente d'indicateur de performance pondéré sur la base d'un troisième modèle de réseau neuronal, un i^{ème} élément d'informations sur le centre de gravité d'emplacement des informations historiques sur le centre de gravité d'emplacement, et un i^{ème} paramètre de réglage de la surface réfléchissante du paramètre de réglage historique de la surface réfléchissante ; et
la mise à jour, par le premier appareil de réflexion (200), du deuxième modèle de réseau neuronal sur la base de l'attente d'indicateur de performance pondéré, le i^{ème} élément d'informations sur le centre de gravité d'emplacement et le i^{ème} paramètre de réglage de la surface réfléchissante, pour obtenir le premier modèle de réseau neuronal, dans lequel i est un entier supérieur ou égal à 1 et inférieur ou égal à N.

12. Procédé selon l'une quelconque des revendications 1 à 11, dans lequel le procédé comprend également :
l'envoi, par le premier appareil de réflexion (200), d'informations de configuration du premier appareil de réflexion (200) au dispositif de réseau d'accès, dans lequel
les informations de configuration comprennent au moins l'un des éléments suivants :
un cycle de réglage de la première surface réfléchissante (203), si le réglage de la première surface réfléchissante (203) est commandé par le dispositif de réseau d'accès, la précision des informations sur le centre de gravité d'emplacement, une définition du type de retour d'indicateur de performance, un poids de reconstruction de la première surface réfléchissante (203), un identifiant d'un paramètre de réglage de la surface réfléchissante utilisé par le premier appareil de réflexion (200) dans un ensemble de paramètres de réglage, et un type de la première surface réfléchissante (203) ;
le cycle de réglage est utilisé pour indiquer un cycle de réglage de la première surface réfléchissante (203) par le premier appareil de réflexion (200) ;
la précision des informations sur le centre de gravité d'emplacement est utilisée pour indiquer un degré de sensibilité du premier appareil de réflexion (200) à un changement d'emplacement du dispositif terminal au sein de la zone de couverture du signal réfléchi de la première surface réfléchissante (203) ; et
la définition du type de retour d'indicateur de performance est utilisée pour indiquer un type d'un indicateur de performance que le premier appareil de réflexion (200) exige de renvoyer.

13. Procédé de réglage de la surface réfléchissante, dans lequel le procédé comprend :
l'envoi, par un dispositif de réseau d'accès, de premières informations sur le centre de gravité d'emplacement à un premier appareil de réflexion (200), dans lequel les premières informations sur le centre de gravité d'emplacement comprennent un emplacement pondéré d'un dispositif terminal au sein d'une zone de couverture d'un signal réfléchi d'une première surface réfléchissante (203) du premier appareil de réflexion (200), dans lequel l'emplacement pondéré est une valeur moyenne des emplacements pondérés de dispositifs terminaux au sein de la zone de couverture du signal réfléchi de la première surface réfléchissante (203), exprimé comme tel $ωp = \frac{1}{Q} {\sum }_{n = 1}^{Q} \left({ω}_{n}{p}_{n}\right)$
dans lequel Q est une quantité de dispositifs terminaux au sein de la zone de couverture du signal réfléchi de la première surface réfléchissante (203) et est un entier supérieur à 1, n est un entier supérieur ou égal à 1 et inférieur ou égal à Q, ωₙ indique un poids de reconstruction calculé par un n^{ième} dispositif terminal au sein de la zone de couverture du signal réfléchi de la première surface réfléchissante (203), et ωₙ est supérieur à 0 et inférieur ou égal à 1, et
pₙ est un emplacement du n^{ième} dispositif terminal au sein de la zone de couverture du signal réfléchi de la première surface réfléchissante (203) ; et
l'envoi, par le dispositif du réseau d'accès, d'informations de retour d'indicateur de performance pondéré au premier appareil de réflexion (200), dans lequel les informations de retour d'indicateur de performance pondéré sont utilisées pour indiquer un indicateur de performance d'un dispositif terminal au sein d'une zone de couverture d'un signal réfléchi de la première surface réfléchissante (203) après que le premier appareil de réflexion (200) ait réglé la première surface réfléchissante (203) sur la base d'un paramètre de réglage de la première surface réfléchissante (203), et le paramètre de réglage de la première surface réfléchissante (203) est déterminé par le premier appareil de réflexion (200) sur la base des premières informations sur le centre de gravité d'emplacement.

14. Premier appareil de réflexion (200), dans lequel le premier appareil de réflexion (200) est configuré pour exécuter le procédé de l'une quelconque des revendications 1 à 12.

15. Dispositif de réseau d'accès, dans lequel le dispositif de réseau d'accès est configuré pour exécuter le procédé selon la revendication 13.
